(19) **Europäisches Patentamt / European Patent Office / Office européen des brevets**

(11) **EP 3 973 161 B1**

(12) # EUROPEAN PATENT SPECIFICATION

(45) Date of publication and mention
of the grant of the patent:
**26.11.2025 Bulletin 2025/48**

(21) Application number: **20731331.3**

(22) Date of filing: **20.05.2020**

(51) International Patent Classification (IPC):
**F02G 1/055** (2006.01)   **F02G 1/043** (2006.01)
**F02G 1/057** (2006.01)   **F01K 23/10** (2006.01)
**F02G 1/044** (2006.01)   **F25B 27/02** (2006.01)

(52) Cooperative Patent Classification (CPC):
**F02G 1/055; B33Y 80/00; F02G 1/0435;
F02G 1/044; F02G 1/045; F02G 1/047; F02G 1/057;
F23K 5/20; F23L 15/02; F23L 15/04; F23R 3/005;**
F02G 2244/00; F02G 2244/08; F02G 2254/10;
F02G 2255/10;                              (Cont.)

(86) International application number:
**PCT/US2020/033680**

(87) International publication number:
**WO 2020/236857 (26.11.2020 Gazette 2020/48)**

(54) **APPARATUS AND SYSTEM FOR ENERGY CONVERSION**

VORRICHTUNG UND SYSTEM ZUR ENERGIEUMWANDLUNG

APPAREIL ET SYSTÈME DE CONVERSION D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2019   US 201962850599 P
21.05.2019   US 201962850623 P
21.05.2019   US 201962850678 P
21.05.2019   US 201962850692 P
21.05.2019   US 201962850701 P**

(43) Date of publication of application:
**30.03.2022 Bulletin 2022/13**

(73) Proprietor: **Hyliion Holdings Corp.
Cedar Park, TX 78613 (US)**

(72) Inventors:
• **NOTARNICOLA, Michael Robert
Cincinnati, Ohio 45215 (US)**
• **MOOK, Joshua Tyler
Cincinnati, Ohio 45215 (US)**

• **VANDEVOORDE, Kevin Michael
Cincinnati, Ohio 45215 (US)**
• **AKWARA, Aigbedion
Cincinnati, Ohio 45215 (US)**
• **SENNOUN, Mohammed El Hacin
Cincinnati, Ohio 45215 (US)**
• **THOMPSON, Mary Kathryn
Cincinnati, Ohio 45215 (US)**
• **WAUN, Scott Douglas
Cincinnati, Ohio 45215 (US)**
• **GANSLER, Michael Thomas
Cincinnati, Ohio 45215 (US)**

(74) Representative: **Hafner & Kohl PartmbB
Schleiermacherstraße 25
90491 Nürnberg (DE)**

(56) References cited:
**JP-A- 2009 115 065      JP-A- 2015 034 544
JP-A- H07 145 755      US-A1- 2013 269 334**

(52) Cooperative Patent Classification (CPC): (Cont.)
F02G 2255/20; F02G 2256/02; F02G 2257/00;
F02G 2275/20; F02G 2275/40; Y02E 20/34;
Y02T 10/12

**Description**

FIELD

The present subject matter relates generally to energy conversion systems, power generation systems, and energy distribution systems. The present subject matter additionally relates to heat exchangers and heat exchanger systems. The present subject matter further relates to piston engine assemblies, such as closed-cycle engine systems. The present subject matter still further relates to systems and methods for control or operation of one or more systems of the present subject matter herein.

BACKGROUND

Power generation and distribution systems are challenged to provide improved power generation efficiency and/or lowered emissions. Furthermore, power generation and distribution systems are challenged to provide improved power output with lower transmission losses. Certain power generation and distribution systems are further challenged to improve sizing, portability, or power density generally while improving power generation efficiency, power output, and emissions.

Certain engine system arrangements, such as closed cycle engines, may offer some improved efficiency over other engine system arrangements. However, closed cycle engine arrangements, such as Stirling engines, are challenged to provide relatively larger power output or power density, or improved efficiency, relative to other engine arrangements. Closed cycle engines may suffer due to inefficient combustion, inefficient heat exchangers, inefficient mass transfer, heat losses to the environment, non-ideal behavior of the working fluid(s), imperfect seals, friction, pumping losses, and/or other inefficiencies and imperfections. As such, there is a need for improved closed cycle engines and system arrangements that may provide improved power output, improved power density, or further improved efficiency. Additionally, there is a need for an improved closed cycle engine that may be provided to improve power generation and power distribution systems.

Additionally, or alternatively, there is a general need for improved heat transfer devices, such as for heat engines, or as may be applied to power generation systems, distribution systems, propulsion systems, vehicle systems, or industrial or residential facilities.

Furthermore, there is a need for improved control system and methods for operating power generation systems as may include subsystems that collectively may provide improved power generation efficiency or reduced emissions.

JP 2015 034544 A discloses an energy system using an external combustion engine.

JP H07 145755 A discloses a high pressure atomized combustion equipment.

US 2013/269334 A1 discloses a power plant which includes a heated fluid, a closed loop, super-critical carbon dioxide-based Brayton cycle, and a closed loop, steam-based Rankine cycle.

JP 2009/115065 A discloses an energy conversion system.

BRIEF DESCRIPTION

The invention is defined by the appended claims, wherein the description and drawings shall be used to interpret the claims.

Aspects and advantages of the invention will be set forth in part in the following description, or may be obvious from the description, or may be learned through practice of the invention.

In one aspect, a system is provided in accordance with claim 1.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

BRIEF DESCRIPTION OF THE DRAWINGS

A full and enabling disclosure including the best mode, directed to one of ordinary skill in the art, is set forth in the specification, which makes reference to the appended figures, in which:

FIG. 1.1.1 is a graph depicting power demand as a function of time of day;
FIG. 1.1.2 is a graph depicting power demand versus energy supply from various power generation and distribution systems and a forecasted gap in supply and demand brought to power generation and distribution by an increase in electric load demand;

FIG. 1.1.3 is a graph depicting Carnot efficiency versus temperature ratio;

FIG. 1.1.4 is a graph depicting thermal efficiency versus power output;

FIG. 1.1.5 is a chart depicting nominal heat balances of prime-movers as a percentage of fuel input;

FIG. 1.2.1 is a schematic block diagram depicting a system for energy conversion according to an aspect of the present disclosure;

FIG. 1.3.1 is a cross sectional view of an exemplary embodiment of a closed cycle engine and load device according to an aspect of the present disclosure;

FIG. 1.3.2 is a perspective cutaway view of an exemplary portion of an exemplary embodiment of an engine according to an aspect of the present disclosure;

FIG. 1.4.1 is a perspective cutaway view of an exemplary portion of an engine according to an aspect of the present disclosure;

FIG. 1.4.2 is a perspective cutaway view of another exemplary portion of an engine according to an aspect of the present disclosure;

FIG. 1.4.3 is a cutaway view of a portion of an exemplary embodiment of an engine according to an aspect of the present disclosure;

FIG. 1.4.4 is a perspective view of a portion of an exemplary embodiment of an engine according to an aspect of the present disclosure;

FIG. 1.4.5 is a top-down view of fluid flowpaths within a portion of an exemplary embodiment of an engine such as provided in regard to FIG. 1.4.4;

FIG. 1.4.6 is a bottom-up view of fluid flowpaths within a portion of an exemplary embodiment of an engine such as provided in regard to FIG. 1.4.4;

FIG. 1.4.7 is a perspective cutaway view of a portion of an exemplary embodiment of an engine such as provided in regard to FIG. 1.4.4;

FIG. 1.4.8 is a perspective view with a partial cutaway view of a portion of an exemplary embodiment of an engine according to an aspect of the present disclosure;

FIG. 1.5.1 is a perspective view of a portion of an exemplary embodiment of an engine such as provided according to an aspect of the present disclosure;

FIG. 1.7.1 is a side view of an exemplary embodiment of a portion of an engine according to an aspect of the present disclosure;

FIG. 1.7.2 is a perspective view of an exemplary embodiment of a portion of an engine such as provided in regard to FIG. 1.7.1;

FIG. 1.7.3 is another perspective view of an exemplary embodiment of a portion of an engine such as provided in regard to FIGS. 1.7.1 through FIG. 1.7.2;

FIG. 1.7.4 is an end view of an exemplary embodiment of a portion of an engine such as provided in regard to FIGS. 1.7.1 through FIG. 1.7.2;

FIG. 1.7.5 is a schematic view of an embodiment of an arrangement of a portion of a system including an engine and a load device according to an aspect of the present disclosure;

FIG. 1.7.6 is a schematic view of another embodiment of an arrangement of a portion of a system including an engine and a load device according to an aspect of the present disclosure;

FIG. 1.7.7 is a schematic view of yet another embodiment of an arrangement of a portion of a system including an engine and a load device according to an aspect of the present disclosure;

FIG. 1.7.8 is a schematic view of still another embodiment of an arrangement of a portion of a system including an engine and a load device according to an aspect of the present disclosure;

FIG. 2.1.1 provides a schematic view of a power generation system according to an example embodiment of the present disclosure;

FIG. 2.1.2 provides a schematic view of a power generation system according to an example embodiment of the present disclosure;

FIG. 2.1.3 provides a schematic view of a power generation system according to an example embodiment of the present disclosure;

FIG. 2.1.4 provides a schematic view of yet another power generation system according to an example embodiment of the present disclosure;

FIG. 2.1.5 provides a schematic view of another power generation system according to an example embodiment of the present disclosure;

FIG. 2.1.6 provides a schematic view of a further power generation system according to an example embodiment of the present disclosure;

FIG. 2.1.7 provides a schematic view of a power generation system according to an example embodiment of the present disclosure;

FIG. 2.1.8 provides a schematic view of a power generation system according to an example embodiment of the present disclosure;

FIG. 2.1.9 provides a schematic view of a power generation system according to an example embodiment of the present disclosure;

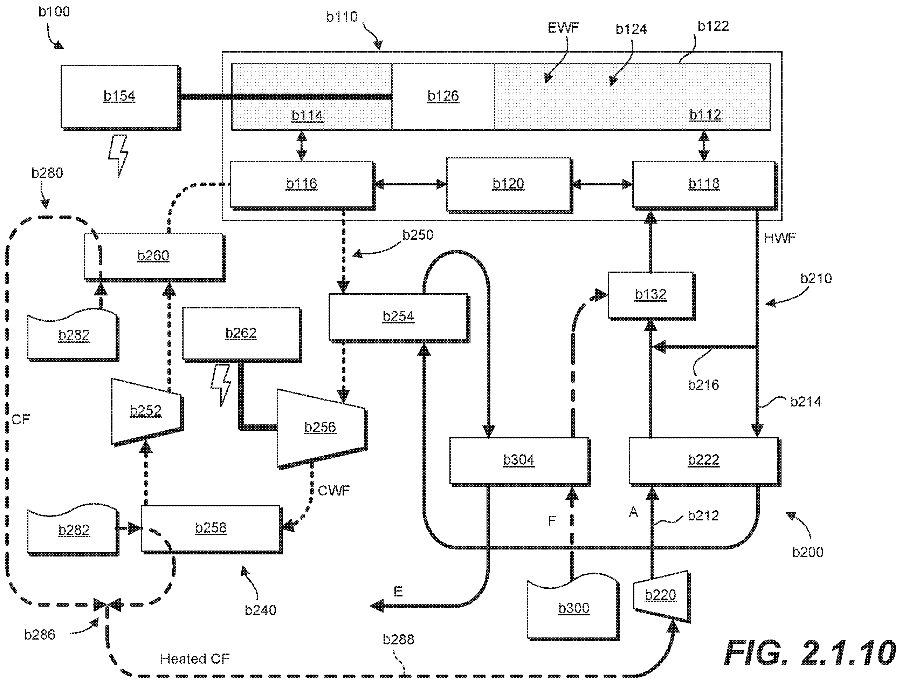

FIG. 2.1.10 provides a schematic view of a power generation system according to an example embodiment of the present disclosure;

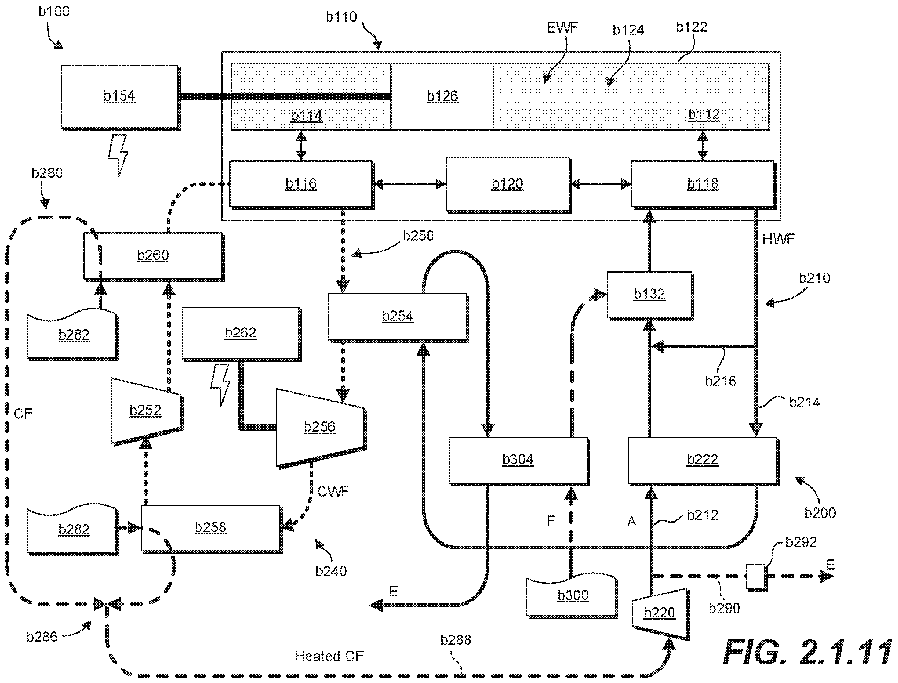

FIG. 2.1.11 provides a schematic view of a power generation system according to an example embodiment of the present disclosure;

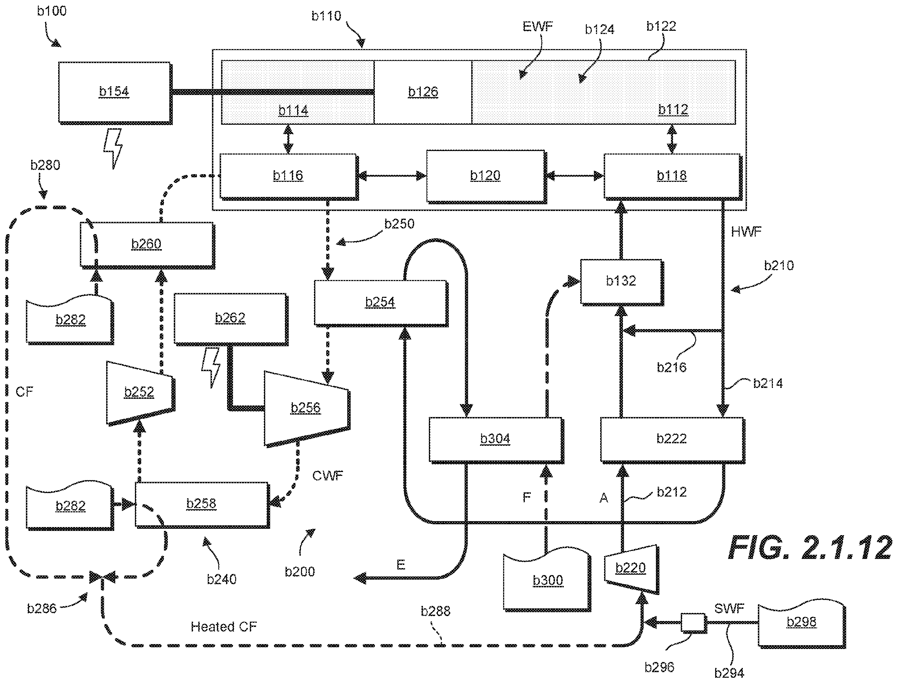

FIG. 2.1.12 provides a schematic view of a power generation system according to an example embodiment of the present disclosure;

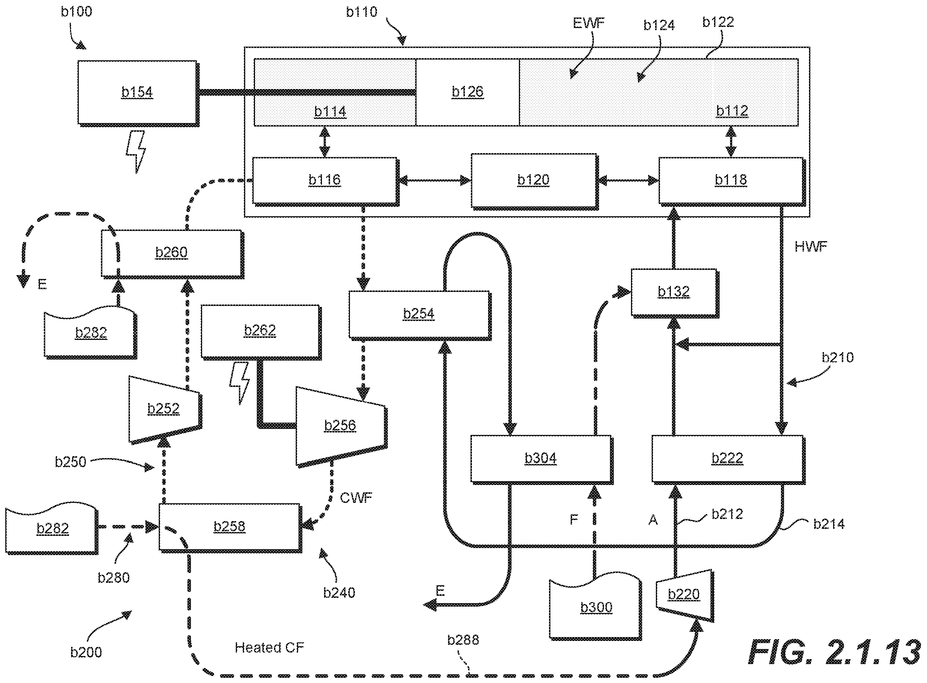

FIG. 2.1.13 provides a schematic view of a power generation system according to an example embodiment of the present disclosure;

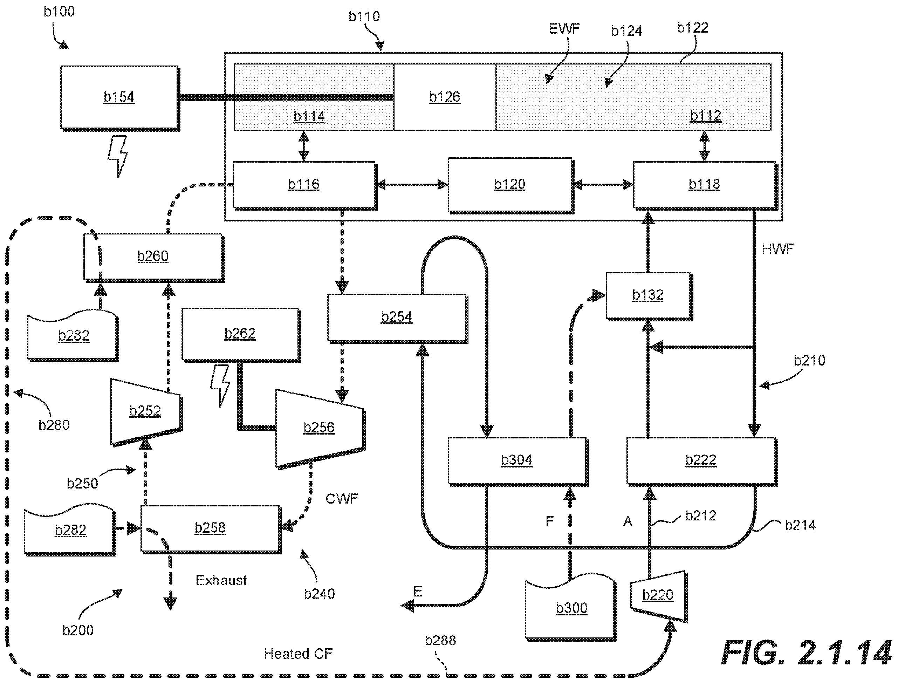

FIG. 2.1.14 provides a schematic view of a power generation system according to an example embodiment of the present disclosure;

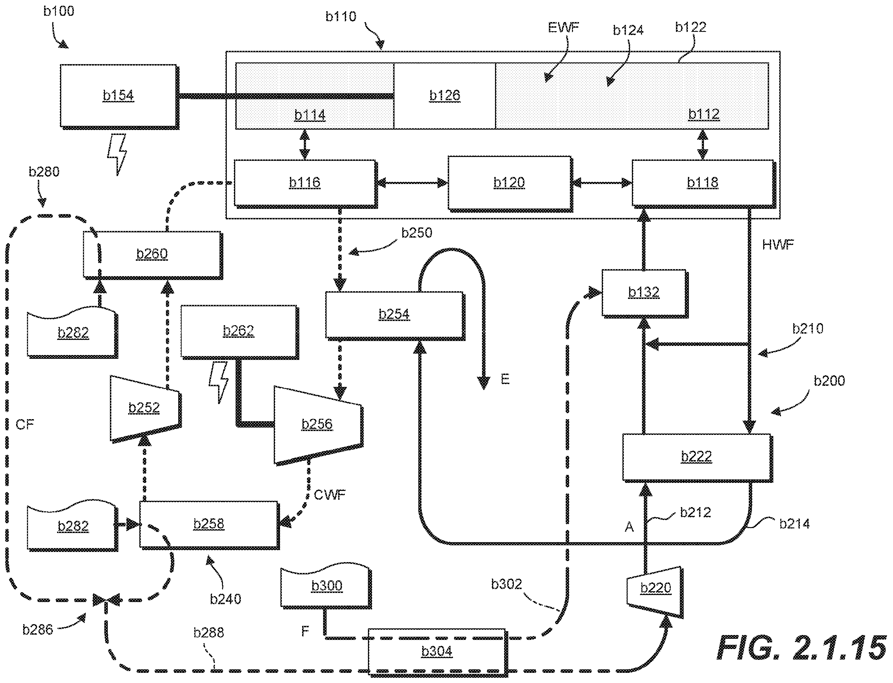

FIG. 2.1.15 provides a schematic view of a power generation system according to an example embodiment of the present disclosure;

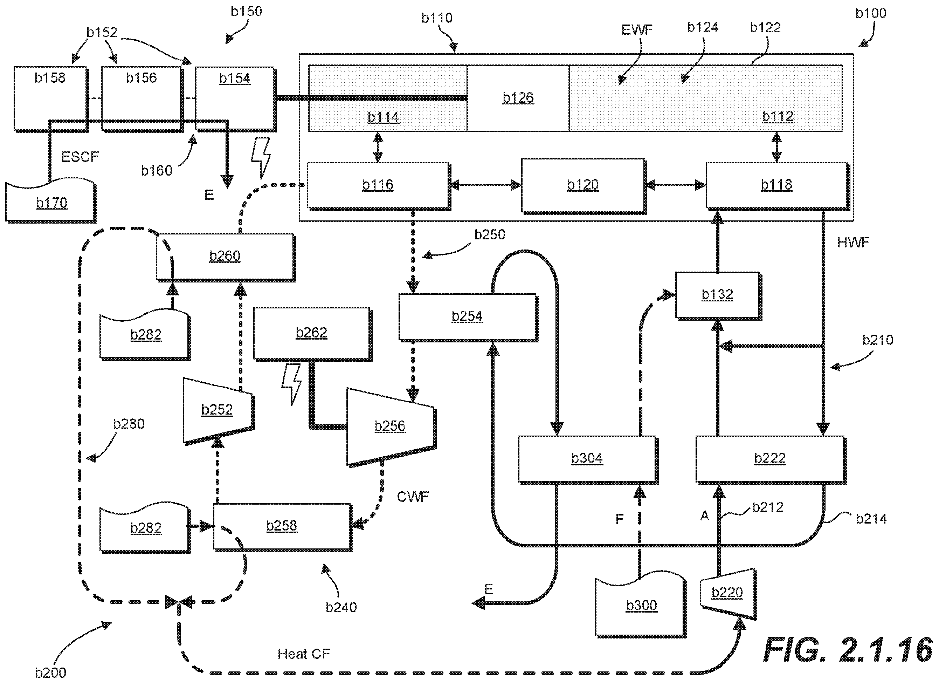

FIG. 2.1.16 provides a schematic view of a power generation system according to an example embodiment of the present disclosure;

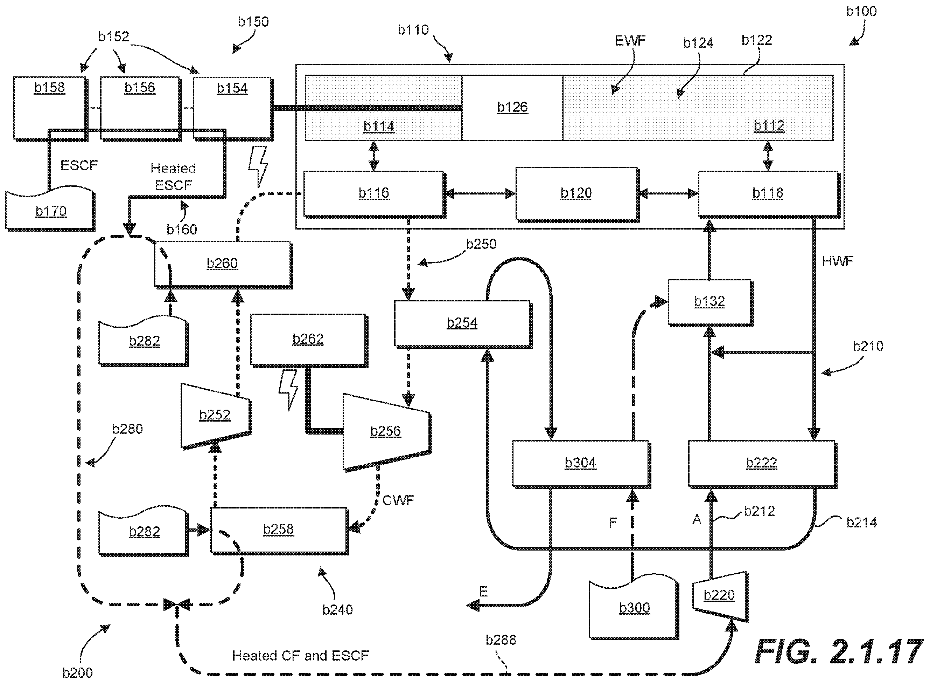

FIG. 2.1.17 provides a schematic view of a power generation system according to an example embodiment of the present disclosure;

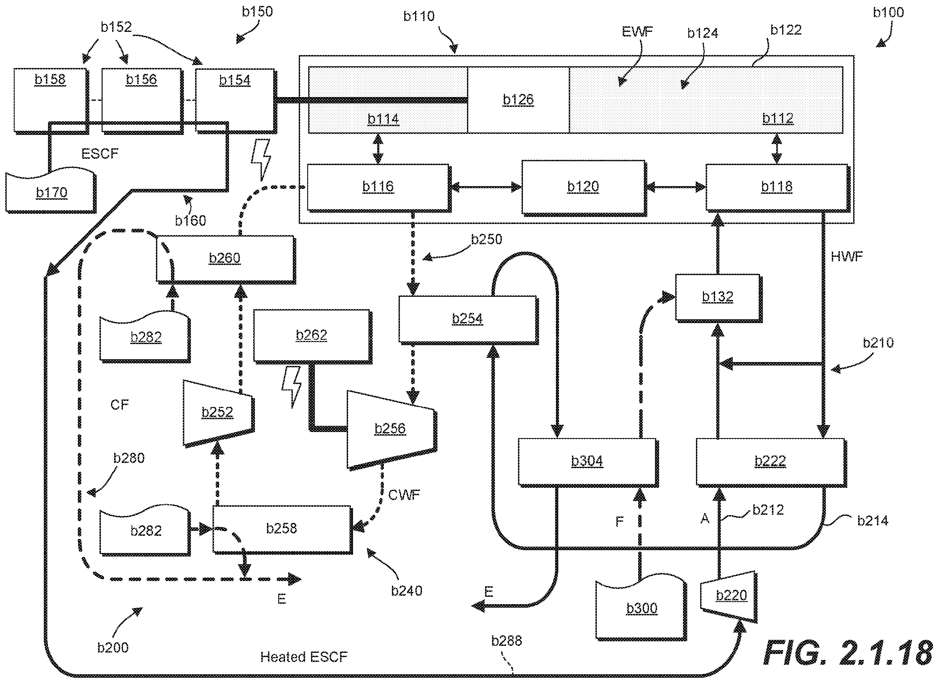

FIG. 2.1.18 provides a schematic view of a power generation system according to an example embodiment of the present disclosure;

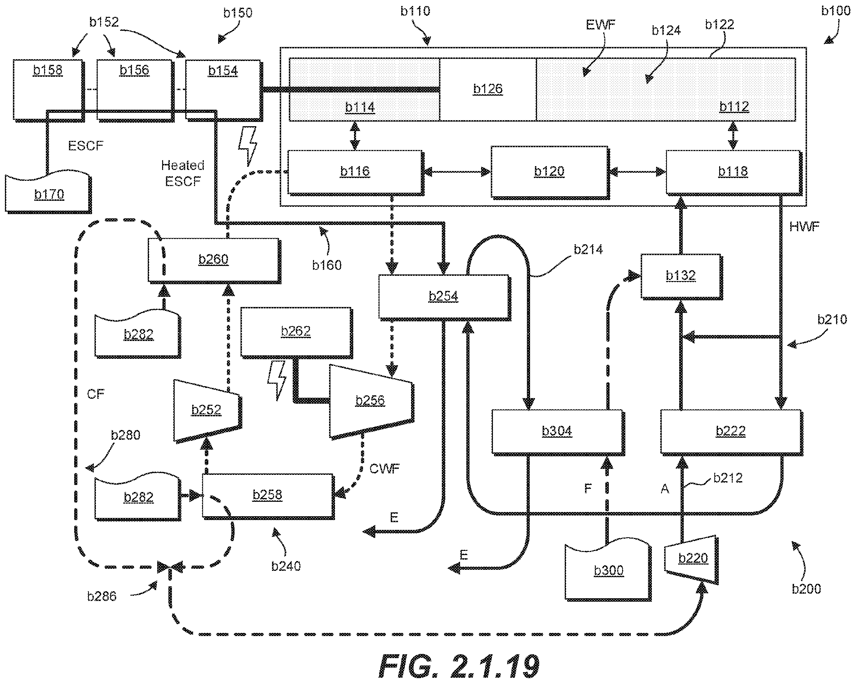

FIG. 2.1.19 provides a schematic view of a power generation system according to an example embodiment of the present disclosure;

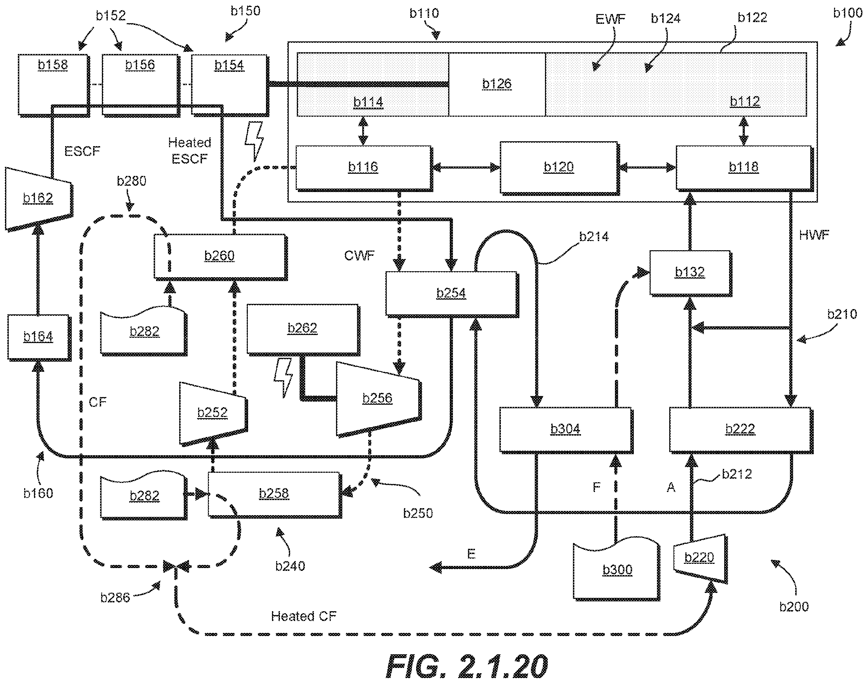

FIG. 2.1.20 provides a schematic view of a power generation system according to an example embodiment of the present disclosure;

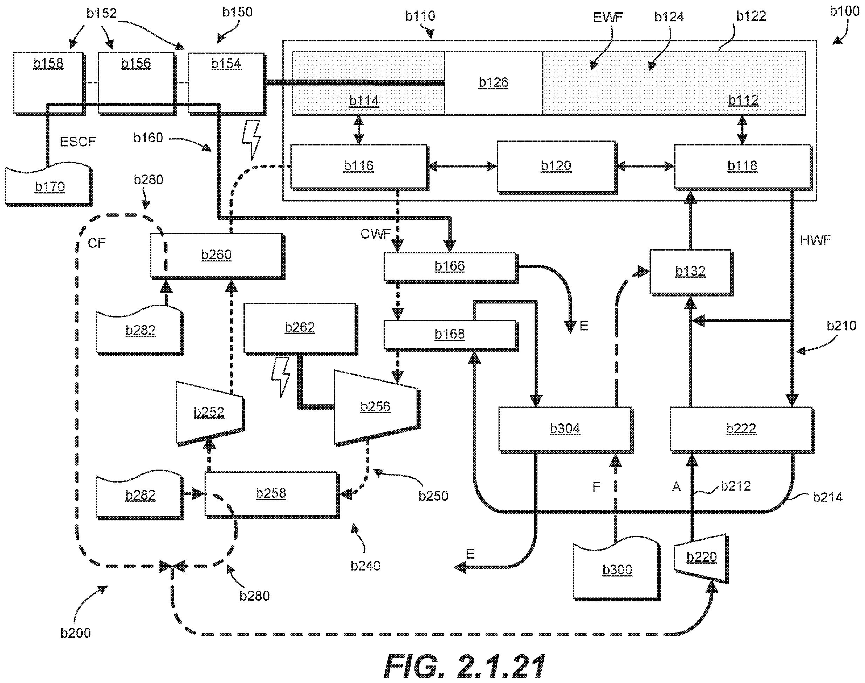

FIG. 2.1.21 provides a schematic view of a power generation system according to an example embodiment of the present disclosure;

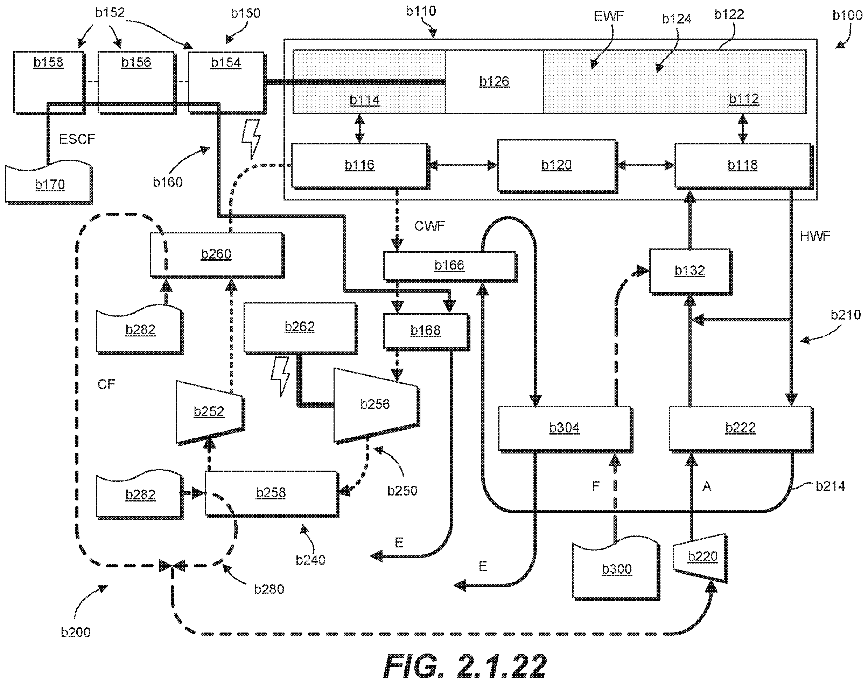

FIG. 2.1.22 provides a schematic view of a power generation system according to an example embodiment of the present disclosure;

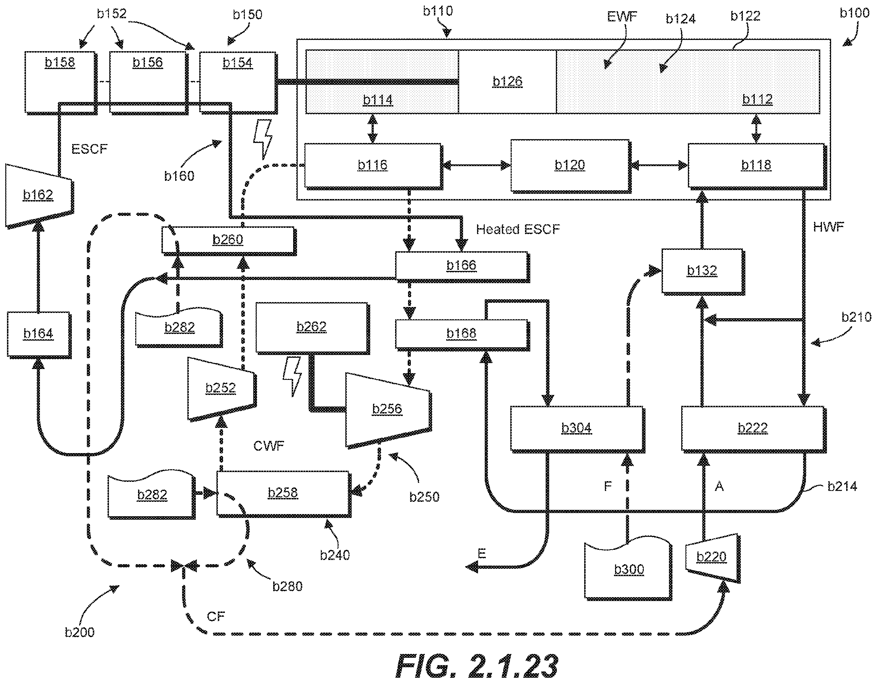

FIG. 2.1.23 provides a schematic view of a power generation system according to an example embodiment of the present disclosure;

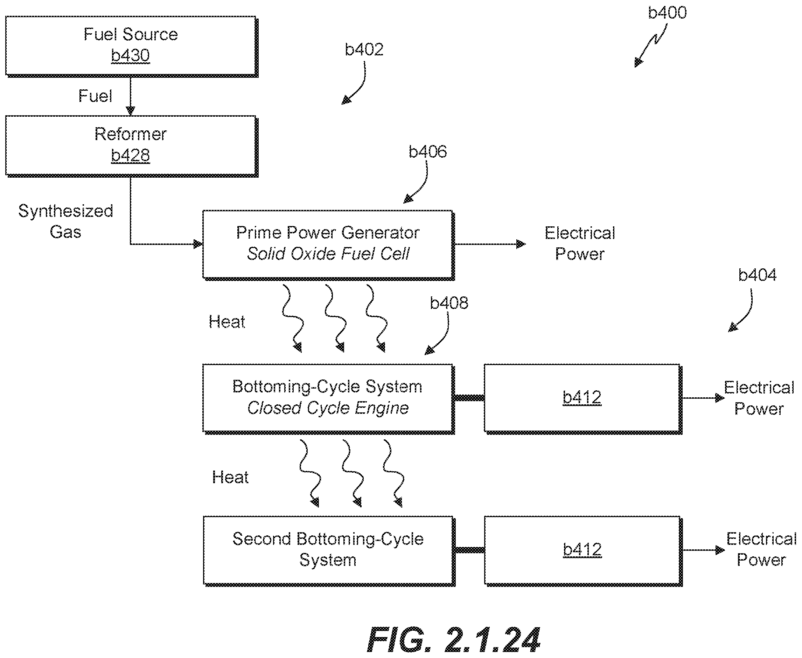

FIG. 2.1.24 provides a schematic block diagram of a power generation system according to an example embodiment of the present disclosure;

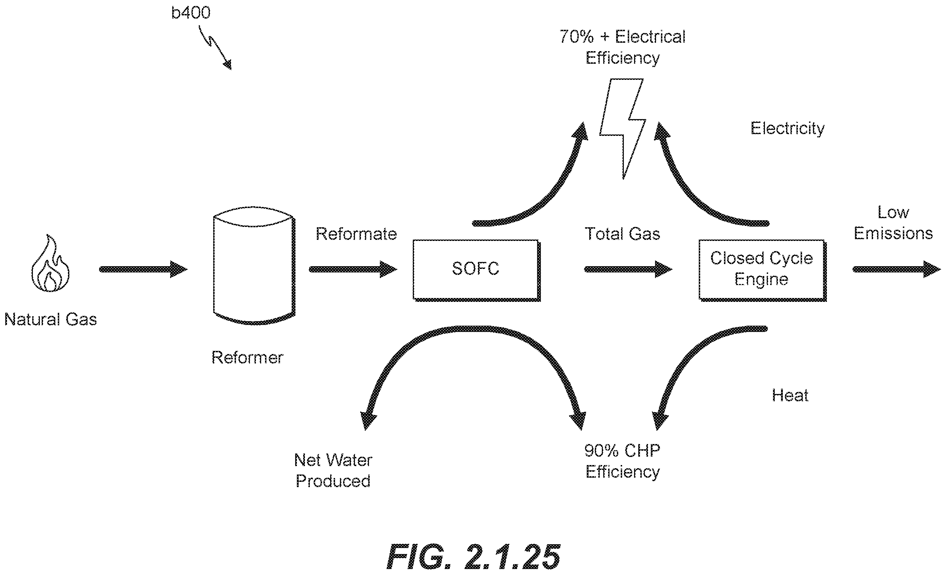

FIG. 2.1.25 provides a schematic block diagram depicting various advantages of the heat recovery system of FIG. 2.1.24 according to an aspect of the present disclosure;

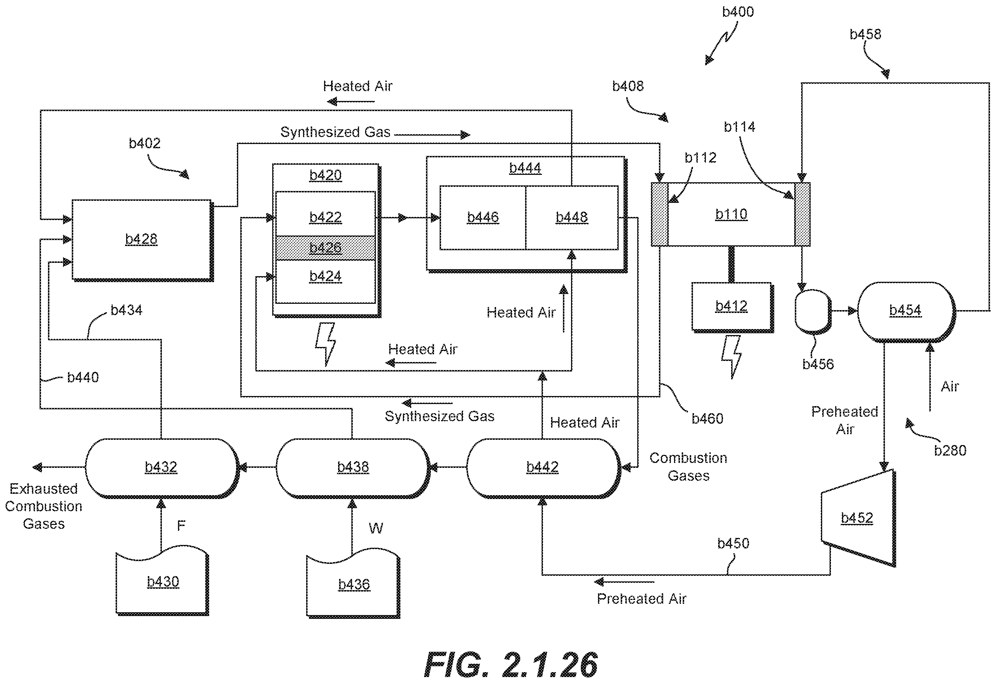

FIG. 2.1.26 provides a schematic view of a power generation system having a prime power generation system and a heat recovery or bottoming-cycle system according to an example embodiment of the present disclosure;

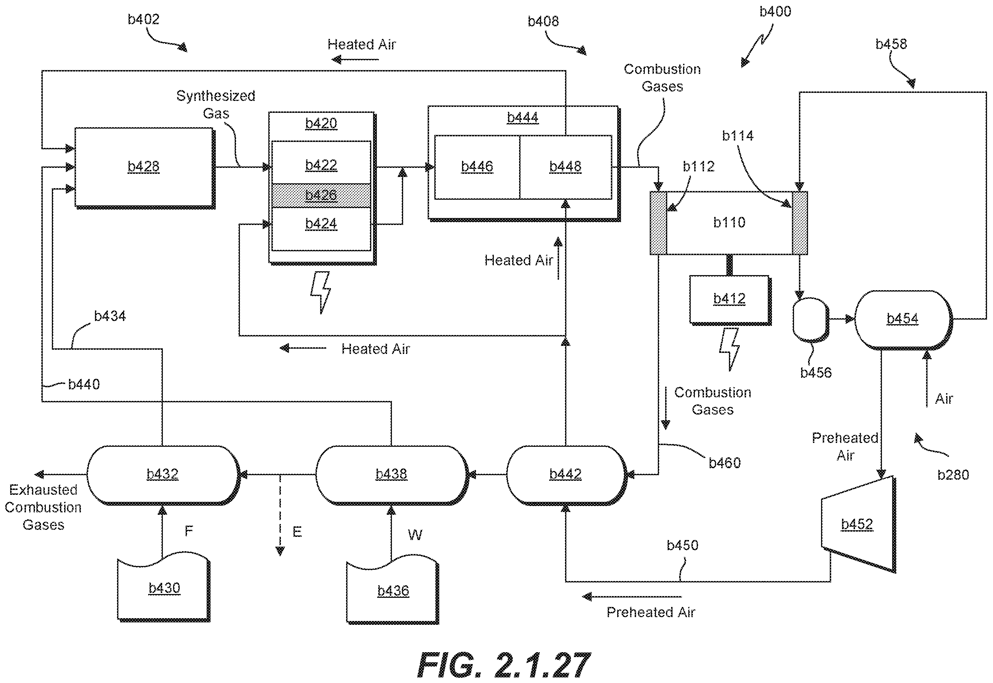

FIG. 2.1.27 provides a schematic view of another power generation system having a prime power generation system and a heat recovery or bottoming-cycle system according to an example embodiment of the present disclosure; and

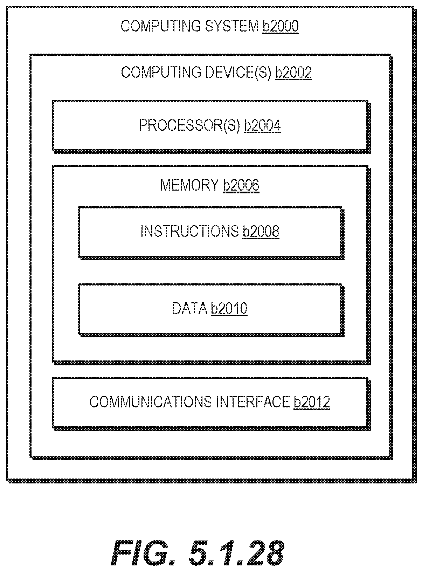

FIG. 5.1.28 provides an exemplary computing system according to aspects of the present disclosure.

Repeat use of reference characters in the present specification and drawings is intended to represent the same or analogous features or elements of the present disclosure.

DETAILED DESCRIPTION

Reference now will be made in detail to embodiments of the disclosure, one or more examples of which are illustrated in the drawings. Each example is provided by way of explanation of the disclosure and not limitation. In fact, it will be apparent to those skilled in the art that various modifications and variations can be made in the present disclosure without departing from the scope of the disclosure. For instance, features illustrated or described as part of one embodiment can be used with another embodiment to yield a still further embodiment. In another instance, ranges, ratios, or limits associated herein may be altered to provide further embodiments, and all such embodiments are within the scope of the present disclosure. Unless otherwise specified, in various embodiments in which a unit is provided relative to a ratio, range, or limit, units may be altered, and/or subsequently, ranges, ratios, or limits associated thereto are within the scope of the present disclosure. Thus, it is intended that the present disclosure covers such modifications and variations as come within the scope of the appended claims and their equivalents.

As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows. The term "loop" can be any suitable fluid pathway along which fluid can flow and can be either open or closed, unless stated otherwise.

**Power Generation, Engine and Energy Conversion Systems, and Energy Distribution Systems**

Power generation and distribution systems are generally challenged to reduce production inefficiencies, transmission losses, and emissions (e.g., oxides of nitrogen, sulfur, or carbon) during and post energy production. For example, the U.S. Energy Information Administration (EIA) estimates that electricity transmission and distribution (T&D) losses average about 5% annually in the United States, with other estimates of line losses of 8% or higher. With average power plant efficiencies in the United States of about 30% to 40%, overall electrical efficiency at the end user (e.g., residences, businesses, etc.) is approximately 25% to 35%. Local, distributed, or on-demand power generation may not require access to T&D networks or grids, such as to result in an at least 5% improvement in efficiency, in addition to reducing emission and adverse environmental impacts.

In the United States, power generation may account for approximately one-third of national greenhouse gas emissions. Transportation may further account for another approximately one-third of national greenhouse gas emissions, about 85% of which may be from ground transportation vehicles (e.g., cars, trucks, buses, etc.). Known systems for reducing emissions include chemical or catalytic reduction after-treatment. However, such systems may be expensive to acquire and maintain, complex, or heavy, thereby reducing overall system efficiency. Additionally, such systems may be difficult to regulate, such that emissions reduction benefits may be lost after initial acquisition. Furthermore, although known systems have resulted in reducing emissions of high reactive gases such as unburned hydrocarbons, volatile organic compounds, or oxides of sulfur or nitrogen, emissions of greenhouse gases such as carbon dioxide may generally correspond or increase with power generation and consumption.

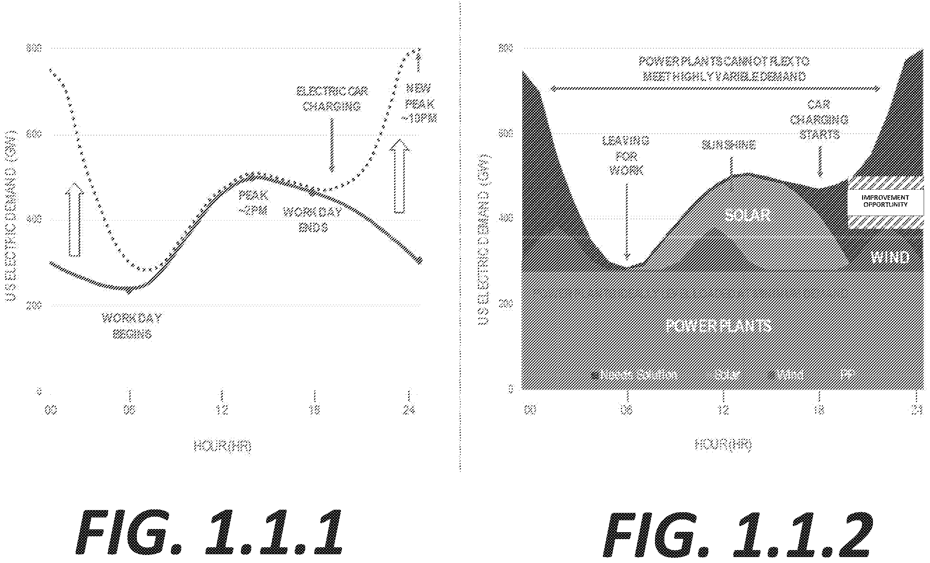

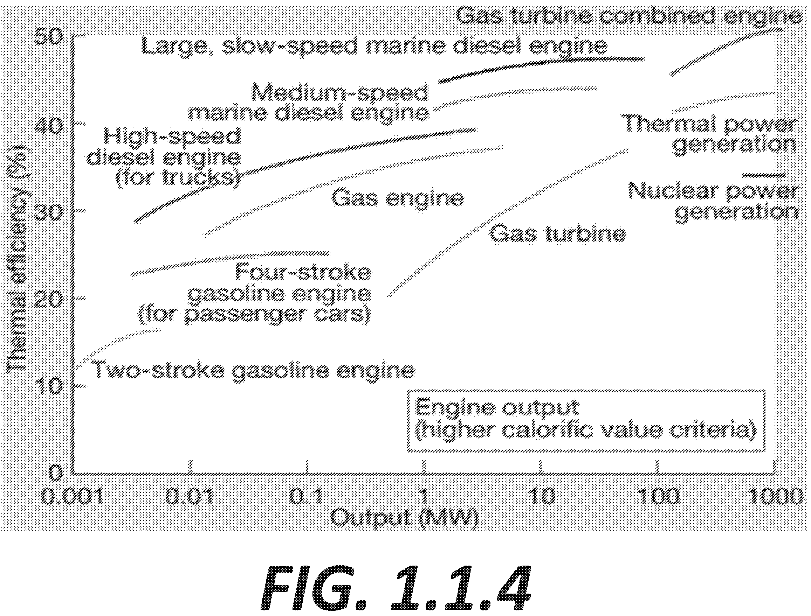

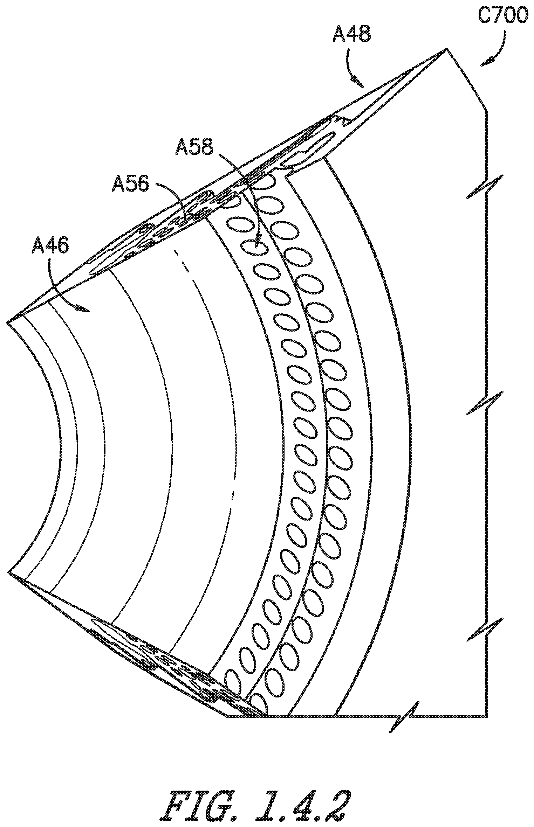

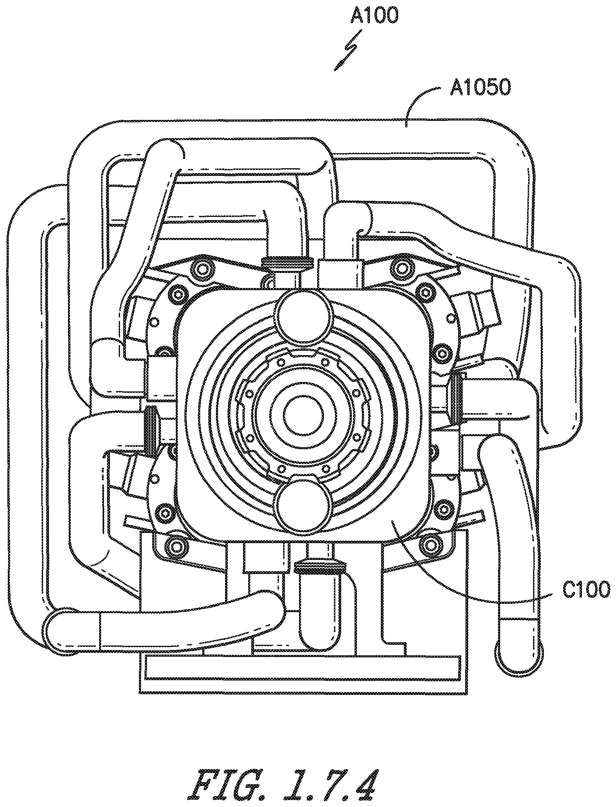

Power generation and distribution systems may turn to renewable energy sources such as solar, wind, or tidal energy to reduce emissions. However, renewable energy sources are often periodic or unpredictable, such as depicted in FIG. 1.1.1 and FIG. 1.1.2. For example, referring to FIGS. 1.1.1 - FIG. 1.1.2, available sunlight for solar power generation is dependent on the time of day and weather. As another example, wind power generation is dependent on weather patterns and may be both unpredictable and irregular. As still another example, tidal power generation is dependent on currents and lunar phases. Additionally, renewable energy sources are difficult to incorporate to transportation systems due to size, scale, and desired power output and density.

Historically, peak power demand occurs in the mid-afternoon, such as due to high industrial usage. In contrast, power usage is historically lower during the overnight hours when residential and industrial usage is both relatively low. However, overnight power demand is expected to increase with increased electrification, such as with increased usage of electric vehicles. Additionally, daytime power demand may further increase, further increasing peak power demands. For example, full charging of electric vehicles may take 4 to 8 hours and may generally occur overnight when power usage is historically low. Additionally, or alternatively, electric vehicle charging may occur during the workday, such as after a morning commute and during business hours, which may further increase industrial power usage. Generally, current power generation and distribution systems are inflexible (e.g., due to cost and operational needs and restrictions) relative to changes in usage and demand throughout a day, such as depicted in regard to FIG. 1.1.1 - FIG. 1.1.2. Additionally, such inflexibility may be exasperated by periodic, irregular, or unpredictable power generation from renewable energy sources.

In addition, or alternatively, power generation and distribution infrastructure is costly and renders large geographic areas vulnerable to power outages based on adverse weather, natural or man-made disasters, equipment malfunctions and failures, or maintenance activities. Initial and on-going costs, such as maintenance and repair, result in barriers to further development of access to electricity in developing countries and rural areas. Expanding access to electricity may be hindered by relatively high costs to establish generation and distribution infrastructure, relatively high operational costs, and an ability for governments, corporations, or consumers to pay or invest in power generation and distribution. Such costs may also pose barriers to further maintenance and development in developed countries, as older infrastructure and natural or man-made disasters may cause maintenance or improvement to be cost-prohibitive. For example, in the United States, power lines and transformers are approximately 30 years old on average. Replacement costs for such equipment have been estimated at over $1 trillion dollars.

Such issues and barriers from power generation and distribution systems may further pose barriers to developing or expanding access to clean water, water desalination, and food security. Additionally, or alternatively, smaller scale or portable power generation systems that may overcome distribution obstacles may nonetheless be challenged to provide a necessary power density and output. Such limitations in power density and output may generally result in an inability to apply smaller scale or portable power generation systems to rural areas or developing nations. Furthermore, as clean water treatment and desalination are generally energy intensive, smaller scale or portable power generation system may generally provide inadequate power density and output for providing water to rural or less population-dense areas.

As such, there is a need for power generation systems that provide improved efficiency and reduced emissions over known power generation systems that may further be sized or scaled to provide improved power distribution without adversely affecting efficiency and emissions. The need for improved power generation systems is further, or alternatively, such that issues regarding power distribution, power generation versus changing peak power demands, emissions, barriers to infrastructure development, and challenges and limitations posed by vehicle electrification may each be addressed, improved upon, or alleviated.

Small-scale or portable power generation systems are desirable for applications including space vehicles and systems, automotive drivetrain and aerospace propulsion electrification, direct cooling sources, and portable or distributed power generation such as to address issues regarding power generation efficiency, density, and output. However, there is a need for improved thermal efficiency, electrical conversion efficiency, or both, for such systems.

Heat engines and other devices for converting thermal energy into useful work are generally inefficient relative to their maximum theoretical efficiency. Carnot's theorem states that the maximum theoretical efficiency ($\eta_{Carnot}$) for an ideal, reversible heat engine is given by:

$$\eta_{Carnot} = 1 - (\frac{T_{Hot,engine}}{T_{Cold,ambient}})$$

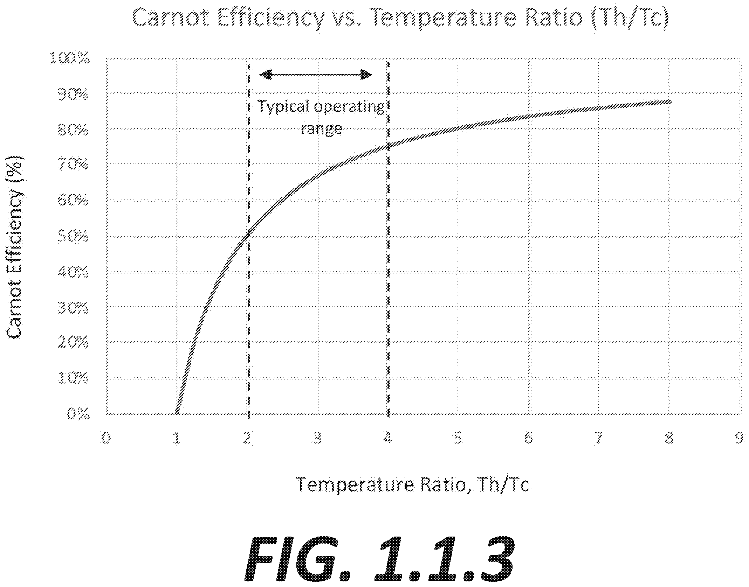

where $T_{hot,engine}$ is the absolute temperature (e.g. in Rankine or Kelvin ) at which heat enters the engine and $T_{cold,ambient}$ is the absolute temperature of the environment into which the engine exhausts its waste heat. Carnot efficiencies for terrestrial applications over 90% and Carnot efficiencies for space applications of over 99% are theoretically possible based at least on known fuel sources. However, in practice, $T_{Hot,engine}$ is limited by the maximum operating temperature of the materials in the engine and $T_{Cold,ambient}$ is limited by an available heat sink available (e.g., the atmosphere at ambient temperature, the temperature of a body of water, etc.). Thus, heat engines may generally operate with a temperature ratio ($T_{Hot,engine}/T_{Cold,ambient}$) between 2 and 4 and have actual Carnot efficiencies between 50% and 70% (Figure 1.1.3). In contrast, open cycle internal combustion engines, such as those that use the Otto cycle, are generally limited to a maximum theoretical efficiency between 60% and 70% based at least on a fuel type or compression ratio at the open cycle engine.

Closed cycle heat engines operate through an exchange of thermal energy to and from relatively hot and cold volumes of an engine. Closed cycle heat engines, such as Stirling arrangements, or variations thereof, such as Franchot or Vuilleimier arrangements, generally have a maximum theoretical efficiency that is the Carnot efficiency. As such, closed cycle engines such as Stirling arrangements are considered to have a greater potential as high efficiency engines based at least on the difference in maximum theoretical efficiency and actual efficiency.

Achieving maximum theoretical efficiency of a system is challenged or limited based at least on inefficient combustion, inefficient heat exchange, heat losses to a surrounding environment, non-ideal behavior of one or more working fluids, friction losses, pumping losses, or other inefficiencies and imperfections, or energy required to operate the system. Actual or real thermal efficiency $\eta_{th,system}$ of a system including a heat engine, heat generation sources, heat removal systems, or other heat exchangers, is given by:

$$\eta_{th,system} \equiv \frac{W_{out}}{Q_{in} + E_{in} + W_{in}} = \frac{(Q_{in} + E_{in} + W_{in}E_{in} + Q_{in} - \Sigma Q_{out})}{Q_{in} + E_{in} + W_{in}Q_{in}}$$

Actual or real thermal efficiency $\eta_{th}$ of a heat engine is given by:

$$\eta_{th} = \frac{W_{out}}{Q_{in}} = \frac{Q_{in} - Q_{out}}{Q_{in}} = 1 - \frac{Q_{out}}{Q_{in}}$$

where $W_{out}$ is the net useful work done by the engine, $Q_{in}$ is the thermal energy received by the engine, and $Q_{out}$ is the thermal energy lost or rejected to the environment. $E_{in}$ is the electrical energy used by the system for operation of the system (e.g., fuel and/or oxidizer pumps, cooling sources, etc.). $W_{in}$ is work input into the system. Achievable thermal efficiency tends to increase with power output. For example, motor vehicle applications are generally 20% to 35% thermally efficient, while large marine and stationary diesel systems can exceed 50% thermal efficiency (Figure 1.1.3). Stirling engines have demonstrated thermal efficiencies up to 38%.

The useful work generated by a heat engine can further be converted into electrical energy. The electrical efficiency ($\eta_{El}$) can be calculated in the same manner as the thermal efficiency:

$$\eta_{El} = \frac{E_{out}}{Q_{in}}$$

where $E_{out}$ is the net electrical energy output from an electric machine that is operatively coupled to the engine and $Q_{in}$ is the thermal energy received by the engine. $E_{out}$ may be calculated by subtracting any electricity required to operate the power generation system from the gross power generated by the system. If combustion is the source of heating working fluid for the engine, the electrical efficiency may be calculated using a lower heating value (LHV) of the fuel. Gas turbine power plants have demonstrated greater than 41% LHV electrical efficiency. Stirling engines have demonstrated LHV electrical efficiencies between 10% and 30%.

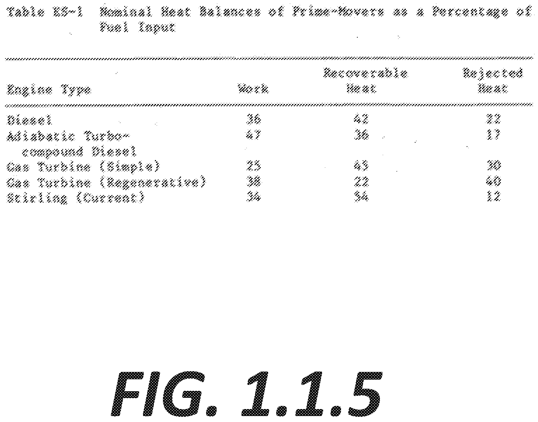

Waste heat, or an amount of heat from a heat engine that is not converted into useful work, may be recoverable to provide additional benefit before being exhausted. The amount and quality of the recoverable heat varies based on the cycle, the engine (Figure 1.1.5), and the operating conditions. High grade or otherwise high quality waste heat may be used in one or more additional heat engines or power generation cycles before being exhausted, such as in one or more bottoming cycles of a combined cycle power generation system. For example, the waste heat from a gas turbine power generation system may be used to boil water for a bottoming steam power generation cycle. The electrical efficiency $\eta_{CC}$ of a combined cycle power generation system is given by:

$$\eta_{CC} = \frac{\sum (E_{out,1} + E_{out,2} + \cdots E_{out,n})}{\sum Q_{in}}$$

where $E_{out,1}$ is the net electricity produced by a first power generation cycle, $E_{out,2}$ is the net electricity produced by a second power generation cycle, $E_{out,n}$ is the net electricity produced by an $n^{th}$ (final) power generation cycle, and $\sum Q_{in}$ is the net thermal energy received by the system. Generally, the net thermal energy received by the system may be nominally $Q_{in}$ of the topping cycle, or additionally or alternatively inclusive of any supplementary thermal input (e.g. supplementary firings, if applicable). Stated another way, $\eta_{CC}$ is the total net electricity generated by the entire combined cycle power generation system divided by the total energy input into the combined cycle system. Some combined cycle power generation systems may include an efficiency (i.e., LHV electrical efficiency) of up to approximately 62% for a gas turbine bottomed by a steam cycle.

Waste heat may also be used to produce hot water, process steam, or other useful products that would otherwise require additional energy input to produce in a combined heat and power (CHP) system or cogeneration system, after a combined cycle, or in lieu thereof. The overall electrical efficiency $\eta_{CHP}$ of a combined heat and power system is given by:

$$\eta_{CHP} = \frac{E_{out} + \sum Q_{th}}{Q_{in}}$$

where $E_{out}$ is the net useful power output of the system, $\sum Q_{th}$ is the sum of the net useful thermal outputs from the system, and $Q_{in}$ is the thermal energy received by the system. CHP systems may have demonstrated total efficiencies between 55% and 85%. CHP systems with Stirling engines may have total efficiencies of 88% and higher. However, higher CHP system efficiencies can come at the cost of lower thermal efficiency, lower electrical efficiency, or both. For example, $\eta_{CHP}$ can maximized by maximizing $\sum Q_{th}$, which may be achieved at the cost of electricity generation.

Known closed cycle engines, such as Stirling arrangements, are challenged to produce increasing levels of power output and power density. Such larger sizes or scales can negate other desirable qualities of the engine, such as relatively small-scale or portability. Stirling engines tend to have low power output, with power generation of 1 - 5 kW for domestic use, up to 25 kW for commercial use, or up to 75 kW for military use. At least one 75 kW engine Stirling engine is a four shaft kinematic Stirling engine for use in submarines. It is nominally 1.1m in diameter, 1.75 m long, including the generator and control system but not including the fuel or oxidizer sources, with an energy density of 175 kWh/ton.

Stirling engines may generally include two types: kinematic or free piston. Kinematic Stirling engines use mechanically-connected piston assemblies to transmit and convert linear motion of the pistons to a rotary motion for an output shaft. Although such systems may address issues regarding power transmission and stability of the engine, mechanically-connected piston assemblies introduce relatively large power losses via the mechanical members. Additionally, or alternatively, the relatively fixed relationship of mechanically-connected piston assemblies limits the mechanical stroke of the piston assembly. As such, the efficiency of mechanically-connected multi- piston assemblies in a closed cycle engine is decreased in addition to mechanical losses (e.g., friction, leakage, inertia, etc.).

Single-piston free piston closed cycle engine arrangements generally exchange improved thermal efficiency for lower total power generation and density. As such, single-piston free piston closed cycle engine arrangements are not generally suited for higher power output applications.

Multi-piston free piston closed cycle engine arrangements may provide thermal efficiencies of single-piston free piston arrangements and further increase total power generation. However, multi-piston free piston arrangements generally differ from single-piston arrangements and mechanically-connected multi-piston arrangements in that the cycle or motion of a multi-piston free piston arrangement is generally determined by thermo-mechanical interactions of the entire system including the free pistons, the thermal source(s), and a power extraction apparatus. The thermo-mechanical interactions may further include mechanical losses and their effect on balance of the entire system.

For example, multi-piston free-piston closed cycle engines are challenged to respond to time lags. As another example, if one piston assembly drifts from an intended position a subsequent oscillation can become unbalanced. An unbalanced arrangement may lead to undesired vibrations, crashing of the pistons to end walls, or other mechanical losses that may further reduce power output, induce wear and deterioration, or otherwise reduce efficient, stable, or effective use of a multi-piston free piston engine.

As such, there is a need for improved closed cycle engines such as Stirling engines that provide improved power generation efficiency and output. Additionally, there is a need for such improved closed cycle engines that may further retain or improve power density, such as to provide relatively small-scale or portability such as to provide improved application to power generation and distribution systems.

**System for Energy Conversion**

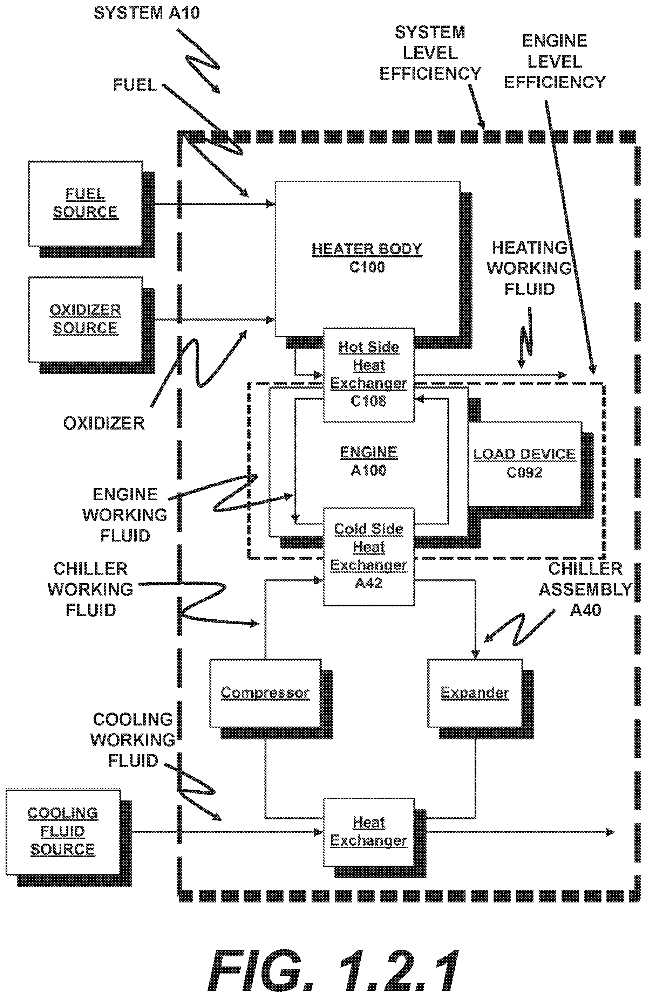

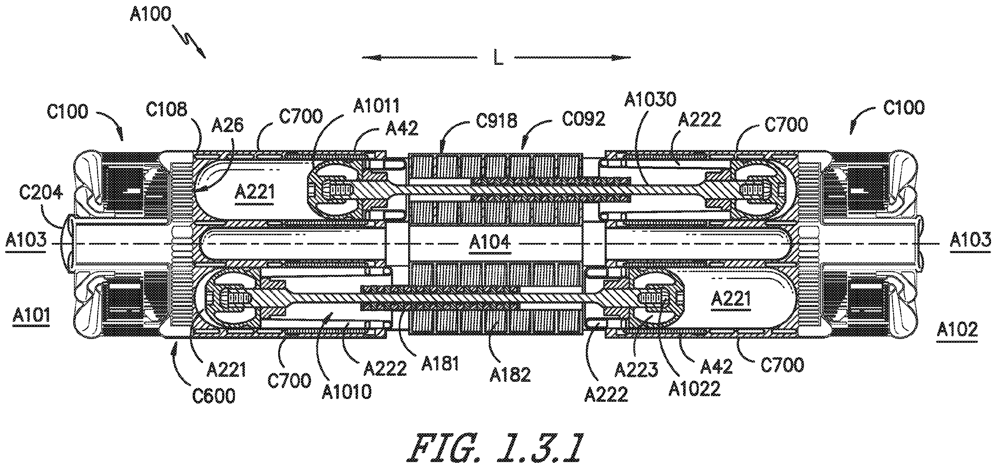

Referring now to FIG. 1.2.1, an exemplary schematic block diagram depicting a system for energy conversion (hereinafter, "system A10") is provided. Various embodiments of the system A10 provided herein include systems for power generation, a heat recovery system, a heat pump or cryogenic cooler, a system including and/or acting as a bottoming cycle and/or a topping cycle, or other system for producing useful work or energy, or combinations thereof. Referring additionally for FIG. 1.3.1, various embodiments of the system A10 include a closed cycle engine apparatus (hereinafter, "engine A100", apparatus "A100", or "engine assembly C900", or otherwise denoted herein) operably coupled to a load device c092. The engine A100 contains a substantially fixed mass of an engine working fluid to which and from which thermal energy is exchanged at a respective cold side heat exchanger A42 and a hot side heat exchanger C108. In one embodiment, the engine working fluid is helium. In other embodiments, the engine working fluid may include air, nitrogen, hydrogen, helium, or any appropriate compressible fluid, or combinations thereof. In still various embodiments, any suitable engine working fluid may be utilized in accordance with the present disclosure. In exemplary embodiments, the engine working fluid may include a gas, such as an inert gas. For example, a noble gas, such as helium may be utilized as the engine working fluid. Exemplary working fluids preferably are inert, such that they generally do not participate in chemical reactions such as oxidation within the environment of the engine. Exemplary noble gasses include monoatomic gases such as helium, neon, argon, krypton, or xenon, as well as combinations of these. In some embodiments, the engine working fluid may include air, oxygen, nitrogen, or carbon dioxide, as well as combinations of these. In still various embodiments, the engine working fluid may be liquid fluids of one or more elements described herein, or combinations thereof. It should further be appreciated that various embodiments of the engine working fluid may include particles or other substances as appropriate for the engine working fluid.

In various embodiments, the load device C092 is a mechanical work device or an electric machine. In one embodiment, the load device C092 is a pump, compressor, or other work device. In another embodiment, the load device C092 as an electric machine is configured as a generator producing electric energy from movement of a piston assembly A1010 at the engine. In still another embodiment, the electric machine is configured as a motor providing motive force to move or actuate the piston assembly A1010, such as to provide initial movement (e.g., a starter motor). In still various embodiments, the electric machine defines a motor and generator or other electric machine apparatus such as described further herein.

A heater body C100 is thermally coupled to the engine A100. The heater body C100 may generally define any apparatus for producing or otherwise providing a heating working fluid such as to provide thermal energy to the engine working fluid. Various embodiments of the heater body C100 are further provided herein. Exemplary heater bodies C100 may include, but are not limited to, a combustion or detonation assembly, an electric heater, a nuclear energy source, a renewable energy source such as solar power, a fuel cell, a heat recovery system, or as a bottoming cycle to another system. Exemplary heater bodies C100 at which a heat recovery system may be defined include, but are not limited to, industrial waste heat generally, gas or steam turbine waste heat, nuclear waste heat, geothermal energy, decomposition of agricultural or animal waste, molten earth or metal or steel mill gases, industrial drying systems generally or kilns, or fuel cells. The exemplary heater body C100 providing thermal energy to the engine working fluid may include all or part of a combined heat and power cycle, or cogeneration system, or power generation system generally.

In still various embodiments, the heater body C100 is configured to provide thermal energy to the engine working fluid via a heating working fluid. The heating working fluid may be based, at least in part, on heat and liquid, gaseous, or other fluid provided by one or more fuel sources and oxidizer sources providing a fuel and oxidizer. In various embodiments, the fuel includes, but is not limited to, hydrocarbons and hydrocarbon mixtures generally, "wet" gases including a portion of liquid (e.g., humid gas saturated with liquid vapor, multiphase flow with approximately 10% liquid and approximately 90% gas, natural gas mixed with oil, or other liquid and gas combinations, etc.), petroleum or oil (e.g., Arabian Extra Light Crude Oil, Arabian Super Light, Light Crude Oil, Medium Crude Oil, Heavy Crude Oil, Heavy Fuel Oil, etc.), natural gas (e.g., including sour gas), biodiesel condensate or natural gas liquids (e.g., including liquid natural gas (LNG)), dimethyl ether (DME), distillate oil #2 (DO2), ethane ($C_2$), methane, high $H_2$ fuels, fuels including hydrogen blends (e.g., propane, butane, liquefied petroleum gas, naphtha, etc.), diesel, kerosene (e.g., jet fuel, such as, but not limited to, Jet A, Jet A-1, JP1, etc.), alcohols (e.g., methanol, ethanol, etc.), synthesis gas, coke over gas, landfill gases, etc., or combinations thereof.

In various embodiments, the system A10 includes a working fluid body C108, such as further described herein. In one embodiment, the working fluid body C108 defines a hot side heat exchanger A160, such as further described herein, from which thermal energy is output to the engine working fluid at an expansion chamber A221 of the engine. The working fluid body C108 is positioned at the expansion chamber A221 of the engine in thermal communication with the heater body C100. In other embodiments, the working fluid body C108 may be separate from the heater body C100, such that the heating working fluid is provided in thermal communication, or additionally, in fluid communication with the working fluid body C108. In particular embodiments, the working fluid body C108 is positioned in direct thermal communication with the heater body C100 and the expansion chamber A221 of the engine A100 such as to receive thermal energy from the heater body C100 and provide thermal energy to the engine working fluid within the engine.

In still various embodiments, the heater body C100 may include a single thermal energy output source to a single expansion chamber A221 of the engine. As such, the system A10 may include a plurality of heater assemblies each providing thermal energy to the engine working fluid at each expansion chamber A221. In other embodiments, such as depicted in regard to FIG. 1.3.1, the heater body C100 may provide thermal energy to a plurality of expansion chambers A221 of the engine. In still other embodiments, such as depicted in regard to FIG. 8, the heater body includes a single thermal energy output source to all expansion chambers A221 of the engine.

The system A10 further includes a chiller assembly, such as chiller assembly A40 further described herein. The chiller assembly A40 is configured to receive and displace thermal energy from a compression chamber A222 of the engine. The system A10 includes a cold side heat exchanger A42 thermally coupled to the compression chamber A222 of the closed cycle engine and the chiller assembly. In one embodiment, the cold side heat exchanger A42 and the piston body C700 defining the compression chamber A222 of the engine are together defined as an integral, unitary structure, such as further shown and described in regard to FIGS. 1.4.1-1.4.7. In still various embodiments, the cold side heat exchanger A42, at least a portion of the piston body C700 defining the compression chamber A222, and at least a portion of the chiller assembly together define an integral, unitary structure.

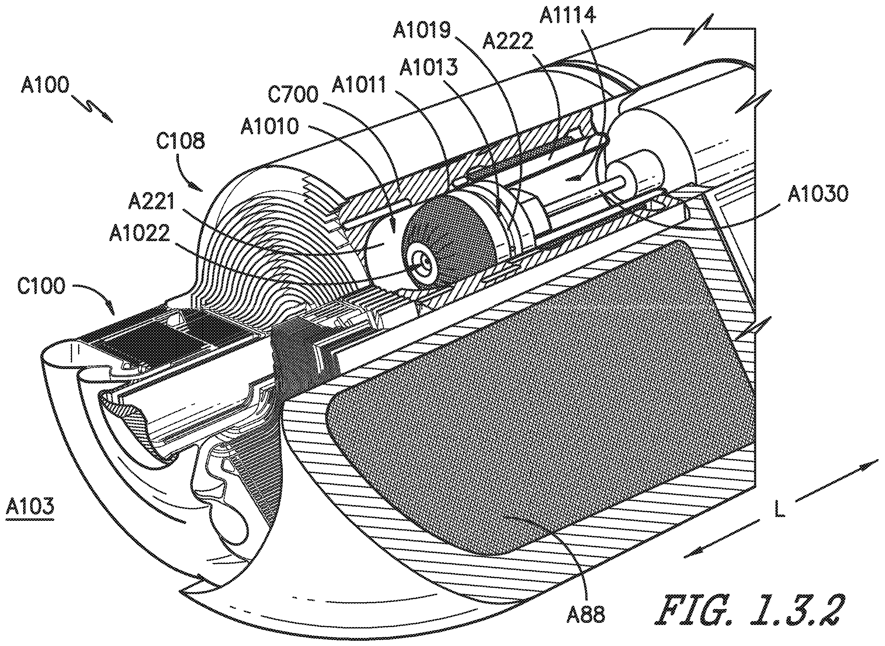

In various embodiments, the chiller assembly A40 is a bottoming cycle to the engine A100. As such, the chiller assembly A40 is configured to receive thermal energy from the engine A100. The thermal energy received at the chiller assembly A40, such as through a cold side heat exchanger A42, or cold side heat exchanger A170 further herein, from the engine A100 is added to a chiller working fluid at the chiller assembly A40. In various embodiments, the chiller assembly A40 defines a Rankine cycle system through which the chiller working fluid flows in closed loop arrangement with a compressor. In some embodiments, the chiller working fluid is further in closed loop arrangement with an expander. In still various embodiments, the system A10 includes a heat exchanger A88 (FIG. 1.3.2). In various embodiments, the heat exchanger A188 may include a condenser or radiator. The cold side heat exchanger A40 is positioned downstream of the compressor and upstream of the expander and in thermal communication with a compression chamber A222 of the closed cycle engine, such as further depicted and described in regard to FIG. 1.3.1 -FIG. 1.3.2. In various embodiments, the cold side heat exchanger A42 may generally define an evaporator receiving thermal energy from the engine A40.

Referring still to FIG. 1.2.1, in some embodiments, the heat exchanger A188 is positioned downstream of the expander and upstream of the compressor and in thermal communication with a cooling working fluid. In the schematic block diagram provided in FIG. 1.2.1, the cooling working fluid is an air source. However, in various embodiments, the cooling fluid may define any suitable fluid in thermal communication with the heat exchanger. The heat exchanger may further define a radiator configured to emit or dispense thermal energy from the chiller assembly A40. A flow of cooling working fluid from a cooling fluid source is provided in thermal communication with the heat exchanger to further aid heat transfer from the chiller working fluid within the chiller assembly A40 to the cooling working fluid.

As further described herein, in various embodiments the chiller assembly A40 may include a substantially constant density heat exchanger. The constant density heat exchanger generally includes a chamber including an inlet and an outlet each configured to contain or trap a portion of the chiller working fluid for a period of time as heat from the closed cycle engine is transferred to the cold side heat exchanger A42. In various embodiments, the chamber may define a linear or rotary chamber at which the inlet and the outlet are periodically opened and closed via valves or ports such as to trap the chiller working fluid within the chamber for the desired amount of time. In still various embodiments, the rate at which the inlet and the outlet of the chamber defining the constant density heat exchanger is a function at least of velocity of a particle of fluid trapped within the chamber between the inlet and the outlet. The chiller assembly A40 including the constant density heat exchanger may provide efficiencies, or efficiency increases, performances, power densities, etc. at the system A10 such as further described herein.

It should be appreciated that in other embodiments, the chiller assembly A40 of the system A10 may include a thermal energy sink generally. For example, the chiller assembly A40 may include a body of water, the vacuum of space, ambient air, liquid metal, inert gas, etc. In still various embodiments, the chiller working fluid at the chiller assembly A40 may include, but is not limited to, compressed air, water or water-based solutions, oil or oil-based solutions, or refrigerants, including, but not limited to, class 1, class 2, or class 3 refrigerants. Further exemplary refrigerants may include, but are not limited to, a supercritical fluid including, but not limited to, carbon dioxide, water, methane, ethane, propane, ethylene, propylene, methanol, ethanol, acetone, or nitrous oxide, or combinations thereof. Still exemplary refrigerants may include, but are not limited to, halon, perchloroolefin, perchlorocarbon, perfluoroolefin, perfluororcarbon, hydroolefin, hydrocarbon, hydrochloroolefin, hydrochlorocarbon, hydrofluoroolefin, hydrofluorocarbon, hydrochloroolefin, hydrochlorofluorocarbon, chlorofluoroolefin, or chlorofluorocarbon type refrigerants, or combinations thereof. Still further exemplary embodiments of refrigerant may include, but are not limited to, methylamine, ethylamine, hydrogen, helium, ammonia, water, neon, nitrogen, air, oxygen, argon, sulfur dioxide, carbon dioxide, nitrous oxide, or krypton, or combinations thereof.

It should be appreciated that where combustible or flammable refrigerants are included for the chiller working fluid, various embodiments of the system A10 may beneficially couple the heater body C100, and/or the fuel source, and the chiller assembly A40 in fluid communication such that the combustible or flammable working fluid to which thermal energy is provided at the chiller assembly A40 may further be utilized as the fuel source for generating heating working fluid, and the thermal energy therewith, to output from the heater body C100 to the engine working fluid at the engine A100.

Various embodiments of the system A10 include control systems and methods of controlling various sub-systems disclosed herein, such as, but not limited to, the fuel source, the oxidizer source, the cooling fluid source, the heater body C100, the chiller assembly C40, the engine A100, and the load device C092, including any flow rates, pressures, temperatures, loads, discharges, frequencies, amplitudes, or other suitable control properties associated with the system A10. In one aspect, a control system for the system A10 defining a power generation system is provided. The power generation system includes one or more closed cycle engines (such as engine A100), one or more load devices defining electric machines (such as load device C092) operatively coupled to the engine, and one or more energy storage devices in communication with the electric machines.

The control system can control the closed cycle engine and its associated balance of plant to generate a temperature differential, such as a temperature differential at the engine working fluid relative to the heating working fluid and the chiller working fluid. Thus, the engine defines a hot side, such as at the expansion chamber A221, and a cold side, such as at the compression chamber A222. The temperature differential causes free piston assemblies A1010 to move within their respective piston chambers defined at respective piston bodies C700. The movement of the pistons A1011 causes the electric machines to generate electrical power. The generated electrical power can be provided to the energy storage devices for charging thereof. The control system monitors one or more operating parameters associated with the closed cycle engine, such as piston movement (e.g., amplitude and position), as well as one or more operating parameters associated with the electric machine, such as voltage or electric current. Based on such parameters, the control system generates control commands that are provided to one or more controllable devices of the system A10. The controllable devices execute control actions in accordance with the control commands. Accordingly, the desired output of the system A10 can be achieved.

Furthermore, the control system can monitor and anticipate load changes on the electric machines and can control the engine A100 to anticipate such load changes to better maintain steady state operation despite dynamic and sometimes significant electrical load changes on the electric machines. A method of controlling the power generation system is also provided. In another aspect, a control system for a heat pump system is provided. The heat pump system includes one or more of the closed cycle engines described herein. A method of controlling the heat pump system is also provided. The power generation and heat pump systems as well as control methods therefore are provided in detail herein.

**Energy Conversion Apparatus**

Referring now to FIG. 1.3.1 - FIG. 1.3.2, exemplary embodiments of the system A10 are further provided. FIG. 1.3.1 is an exemplary cross sectional view of the system A10 including the heater body C100 and the chiller assembly A40 each in thermal communication with the engine A100, or particularly the engine working fluid within the engine A100, such as shown and described according to the schematic block diagram of FIG. 1.2.1. . FIG. 1.3.2 is an exemplary cutaway perspective view of a portion of the engine A100. The system A10 includes a closed cycle engine A100 including a piston assembly A1010 positioned within a volume or piston chamber C112 (FIGS. 1.8.1A - FIG. 1.8.1F) defined by a wall defining a piston body C700. The volume within the piston body C700 is separated into a first chamber, or hot chamber, or expansion chamber A221 and a second chamber, or cold chamber (relative to the hot chamber), or compression chamber A222 by a piston A1011 of the piston assembly A1010. The expansion chamber A221 is positioned thermally proximal to the heater body C100 relative to the compression chamber A222 thermally distal to the heater body C100. The compression chamber A222 is positioned thermally proximal to the chiller assembly A40 relative to the expansion chamber A221 thermally distal to the chiller assembly A40.

In various embodiments, the piston assembly A1010 defines a double-ended piston assembly A1010 in which a pair of pistons A1011 is each coupled to a connection member A1030. The connection member A1030 may generally define a rigid shaft or rod extended along a direction of motion of the piston assembly A1010. In other embodiments, the connection members A1030 includes one or more springs or spring assemblies, such as further provided herein, providing flexible or non-rigid movement of the connection member A1030. In still other embodiments, the connection member A1030 may further define substantially U- or V- connections between the pair of pistons A1011.

Each piston A1011 is positioned within the piston body C700 such as to define the expansion chamber A221 and the compression chamber A222 within the volume of the piston body C700. The load device c092 is operably coupled to the piston assembly A1010 such as to extract energy therefrom, provide energy thereto, or both. The load device c092 defining an electric machine is in magnetic communication with the closed cycle engine via the connection member A1030. In various embodiments, the piston assembly A1010 includes a dynamic member A181 positioned in operable communication with a stator assembly A182 of the electric machine. The stator assembly A182 may generally include a plurality of windings wrapped circumferentially relative to the piston assembly A1010 and extended along a lateral direction L. In one embodiment, such as depicted in regard to FIG. 1.3.1, the dynamic member A181 is connected to the connection member A1030. The electric machine may further be positioned between the pair of pistons A1011 of each piston assembly A1010. Dynamic motion of the piston assembly A1010 generates electricity at the electric machine. For example, linear motion of the dynamic member A181 between each pair of chambers defined by each piston A1011 of the piston assembly A1010 generates electricity via the magnetic communication with the stator assembly A182 surrounding the dynamic member A181.

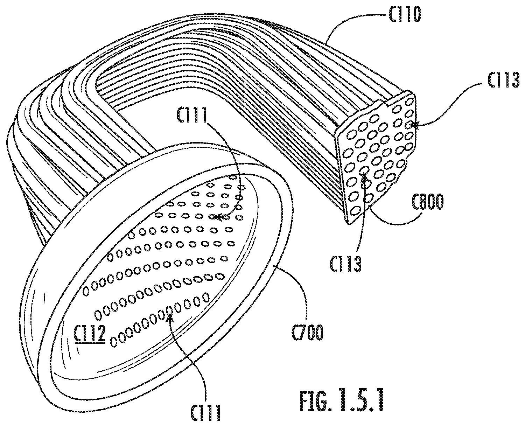

Referring to FIG. 1.3.1 - FIG. 1.3.2, in various embodiments, the working fluid body C108 may further define at least a portion of the expansion chamber A221. In one embodiment, such as further described herein, the working fluid body C108 defines a unitary or monolithic structure with at least a portion of the piston body C700, such as to define at least a portion of the expansion chamber A221. In some embodiments, the heater body C100 further defines at least a portion of the working fluid body C108, such as to define a unitary or monolithic structure with the working fluid body C108, such as further described herein. In one embodiment, such as further shown and described in regard to FIG. 1.5.1, the system A10 includes the hot side heat exchanger or working fluid body C108 positioned between the heater body C100 and the expansion chamber A221 of the piston body C700. In various embodiments, such as further shown and described in regard to FIG. 1.5.1, the working fluid body C108 includes a plurality of heater conduits or working fluid pathways C110 extended from the expansion chamber A221.

The engine A100 defines an outer end A103 and an inner end A104 each relative to a lateral direction L. The outer ends A103 define laterally distal ends of the engine A100 and the inner ends 104 define laterally inward or central positions of the engine A100. In one embodiment, such as depicted in regard to FIG. 1.3.1 - FIG. 1.3.2, the heater body C100 is positioned at outer ends A103 of the system A10. The piston body C700 includes a dome structure A26 at the expansion chamber A221. The expansion chamber dome structure A26 s provides reduced surface area heat losses across the outer end A103 of the expansion chamber A221. In various embodiments, the pistons A1011 of the piston assembly A1010 further include domed pistons A1011 corresponding to the expansion chamber A221 dome. The dome structure A26, the domed piston A1011, or both may provide higher compressions ratios at the chambers A221, A222, such as to improve power density and output.

The chiller assembly A40 is positioned in thermal communication with each compression chamber A222. Referring to FIG. 1.3.1 - FIG. 1.3.2, the chiller assembly A40 is positioned inward along the lateral direction L relative to the heater body C100. In one embodiment, the chiller assembly A40 is positioned laterally between the heater body C100 and the load device c092 along the lateral direction L. The chiller assembly A40 provides the chiller working fluid in thermal communication with the engine working fluid at the cold side heat exchanger A42 and/or compression chamber A222. In various embodiments, the piston body C700 defines the cold side heat exchanger A42 between an inner volume wall A46 and an outer volume wall A48 surrounding at least the compression chamber A222 portion of the piston body C700.

In various embodiments, such as depicted in regard to FIG. 1.3.1 - FIG. 1.3.2, the load device c092 is positioned at the inner end A104 of the system A10 between laterally opposing pistons A1011. The load device c092 may further include a machine body c918 positioned laterally between the piston bodies C700. The machine body c918 surrounds and houses the stator assembly A182 of the load device c092 defining the electric machine. The machine body c918 further surrounds the dynamic member A181 of the electric machine attached to the connection member A1030 of the piston assembly A1010. In various embodiments, such as depicted in regard to FIG. 1.3.1 - FIG. 1.3.2, the machine body c918 further provides an inner end wall A50 at the compression chamber A222 laterally distal relative to the expansion chamber A221 dome.

**Cold Side Heat Exchanger, Piston Body, and Chiller Assembly**

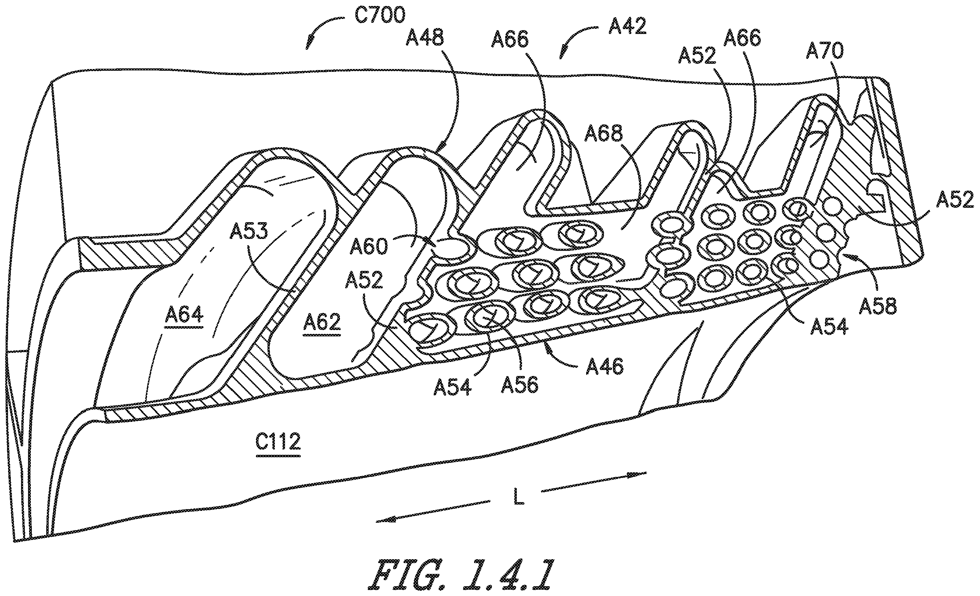

Referring now to FIG. 1.4.1 - FIG. 1.4.7, exemplary embodiments of a portion of the piston body C700, cold side heat exchanger A42, and chiller assembly A40 are provided. In various embodiments, the system A10 includes the cold side heat exchanger A42 further including a plurality of chiller conduits A54 each defining chiller passages A56 providing fluid communication of the engine working fluid through the chiller conduit A54 and the compression chamber A222. The piston body C700 includes the outer volume wall A48 and an inner volume wall A46 each separated along a radial direction R perpendicular to the lateral direction L. Each volume wall A46, A48 may be defined at least partially circumferentially relative to a piston body centerline A12 extended through each piston body C700.

In the embodiments depicted in the perspective cutaway views of FIGS. 1.4.1-1.4.2, each volume wall A46, A48 is extended along the lateral direction L. The outer volume wall A48 surrounds the plurality of chiller conduits A54. The plurality of chiller conduits A54 is positioned between the outer volume wall A48 and the inner volume wall A46. The cold side heat exchanger A42 further includes a chamber wall A52 extended between the outer volume wall A48 and the inner volume wall A46. The chamber wall A52, the outer volume wall A48, and the inner volume wall A46 together define a chiller working fluid passage A66 surrounding the plurality of chiller conduits A54. The chiller conduits A54 define walled manifolds fluidly separating the chiller passage A56 (i.e., the passage through which the engine working fluid flows) and the chiller working fluid passage A66 (i.e., the passage through which the chiller working fluid flows). As such, the chiller working fluid flowing through the chiller working fluid passage A66 is fluidly separated from the engine working fluid flowing through the chiller conduits A54. Additionally, the chiller working fluid flowing through the chiller working fluid passage A66 is in thermal communication with the engine working fluid flowing through the chiller conduits A54.

In various embodiments, the chamber wall A52 is extended between the volume walls at an acute angle relative to the lateral direction L along which the piston assembly A1010 is extended. In one embodiment, the chamber wall A52 is extended between 0 degrees and approximately 90 degrees relative to the lateral direction L. In another embodiment, the chamber wall A52 is extended between 30 degrees and approximately 60 degrees relative to the lateral direction L along which the volume walls A46, A48 are substantially extended. In yet another embodiment, the chamber wall A52 is extended approximately 45 degrees relative to the lateral direction L. The chamber wall A52 is further connected to the outer volume wall A48, the inner volume wall A46, and the chiller conduits A54 such as to provide support to one another. The chamber walls A52 extended along an acute angle may further provide advantageous placement of the chiller conduits A54 within the chiller working fluid passage A66 such as to promote thermal energy transfer from the engine working fluid to the chiller working fluid.

During operation of the engine A100, a portion of the engine working fluid is admitted from the compression chamber A222 into the plurality of chiller conduits A54 via the plurality of chiller passage openings A58. The chiller passage opening A58 is defined at a fluid interface of the chiller conduit A54 to the compression chamber A222. In various embodiments, the chiller passage opening A58 provides direct fluid communication with the compression chamber A222. In one embodiment, a distance between the compression chamber A222 of the engine and the cold side heat exchanger A42, or particularly the plurality of chiller conduits A54 in direct thermal communication with the chiller working fluid, is substantially zero. Stated differently, the distance from the compression chamber A222 to the chiller conduits A54 in direct thermal communication with the chiller working fluid (i.e., the chiller working fluid is fluidly contacting an outer wall of the chiller conduits A54 such as to provide direct thermal communication to the engine working fluid within the chiller conduit A54) is the thickness of the chamber wall A52 through which the plurality of chiller passage openings A58 is defined. A distance between the compression chamber A222 and the cold side heat exchanger A42 beyond or greater than the thickness of the chamber wall A52 is approximately zero.

Still further, during operation of engine A100, the compression stroke of the piston assembly A1010 may generally push the engine working fluid through the chiller conduits A54. The engine working fluid within chiller passages A56 in the chiller conduits A54 is in thermal communication with the chiller working fluid surrounding the chiller conduits A54 within the chiller working fluid passage A66. The expansion stroke of the piston assembly A1010 may generally pull the engine working fluid through the chiller conduits A54 such as to egress the engine working fluid from the chiller conduits A54 through the chiller passage openings A58 and into the compression chamber A222. As further described herein, the chiller working fluid passage A66 is in fluid communication with a chiller working fluid outlet opening A78 and a chiller working fluid outlet opening A80 together providing flow of the chiller working fluid such as to remove and displace thermal energy from the engine working fluid at the chiller conduits A54. As still further described herein, the chiller working fluid passage A66, the chiller working fluid outlet opening A78, and/or the chiller working fluid output may form a circuit of the chiller assembly at which thermal energy from the engine working fluid at the compression chamber A222 is released from the closed cycle engine.

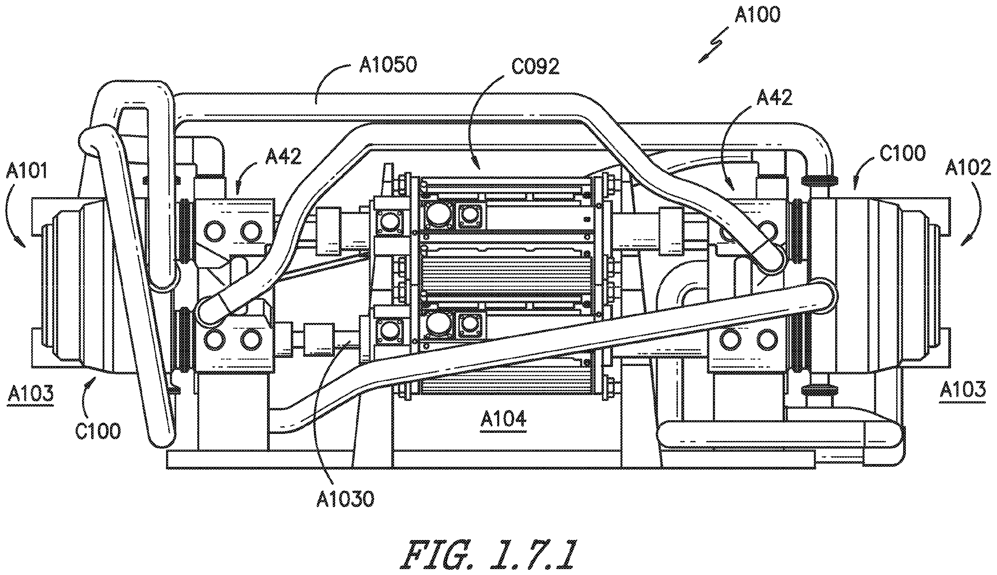

An outer chamber wall A53 and at least one chamber wall A52 may together define a chiller collection chamber A62 at which the engine working fluid may egress the plurality of chiller conduits A54 and collect into a volume. The outer chamber wall A53 defines a plurality of chiller collection chamber openings A60 each corresponding to a respective chiller conduit A54 and chiller passage opening A58. As further described herein in regard to FIGS. 1.4.5-1.4.7 and FIGS. 1.7.1 - FIG. 1.7.4, the chiller collection chamber A62 is further in fluid communication with a walled conduit A1050 such as to provide fluid communication between the compression chamber A222 of one piston assembly A1010 and the expansion chamber A221 of another piston assembly A1010.

In various embodiments, the compression chamber A222 of one piston assembly A1010 is fluidly connected to the expansion chamber A221 of another piston assembly A1010 via the walled conduit A1050 to provide a balanced pressure and/or balanced phase fluid coupling arrangement of the plurality of chambers A221, A222. An interconnected volume of chambers including the expansion chamber A221 of one piston assembly A1010 and the compression chamber A222 of another piston assembly A1010 defines a fluid interconnection of the chambers A221, A222 at different piston assemblies A1010. The fluid interconnection of chambers A221, A222 at different piston assemblies is such that if there is any fluid communication or fluid leakage path between the expansion chamber A221 and the compression chamber A222 of the same piston assembly A1010, a single fluid loop of connected chambers A221, A222 is provided that is separated from the chambers A221, A222 outside of the interconnected volume of chambers. In one embodiment, the balanced pressure arrangement, or additionally, the balance phase arrangement, of the piston assemblies A1010 is the fluid interconnection of the walled conduits A1050 and the chambers A221, A222 such that the chambers within the interconnected volume are substantially fluidly and/or pneumatically separated from those outside of the interconnected volume to provide a substantially equal and opposite force relative to one another to at least one piston assembly A1010 when the engine working fluid within the chambers A221, A222 is at a uniform temperature. Stated differently, when one piston assembly A1010 is articulated, such as along the lateral direction L, the fluid interconnection of chambers A221, A222 via the walled conduit A1050 provides a substantially net zero force at another piston assembly A1010 when the engine working fluid is at a substantially uniform temperature. As such, when one piston assembly A1010 is articulated under such conditions, adjacent or other piston assemblies A1010 remain stationary due at least to the net zero force at the piston assembly A1010. In various embodiments, the substantially uniform temperature is defined when no heat input or thermal energy is provided from the heater body C100 or working fluids body C108 to the engine working fluid.

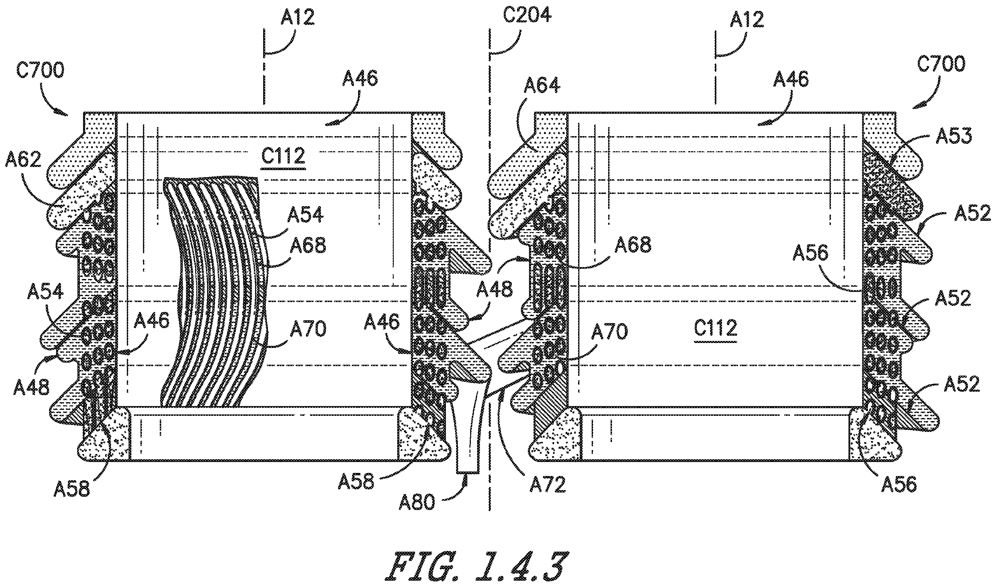

Referring now to FIG. 1.4.3, a side cutaway view of an embodiment of a pair of piston bodies C700 is provided. The embodiment depicted in regard to FIG. 1.4.3 is configured substantially similarly as shown and described in regard to FIGS. 1.4.1-1.4.2. FIG. 1.4.3 further provides a partial cutaway view within the piston body C700 exposing a portion of the plurality of chiller conduits A54 between the volume walls A46, A48. In various embodiments, the chiller conduit A54 extends along the lateral direction L between the chiller passage opening A58 and the chiller collection chamber A62. In one embodiment, the chiller conduit A54 extends at least partially along an oblique or orthogonal direction relative to the lateral direction L. In various embodiments, the chiller conduit A54 extends substantially circumferentially around the piston body C700. The chiller conduit A54 may extend at least partially along the oblique or orthogonal direction relative to the lateral direction L such as to desirably increase a surface area of the chiller passage A56 defined within the chiller conduit A54 at which the engine working fluid is in thermal communication with the chiller working fluid in the cold side heat exchanger A42. The desirable increase in surface area of the chiller passage A56 defined by the chiller conduit A54 provides the surrounding chiller working fluid in the first and second chiller working fluid passage A68, A70 to be in thermal communication so as to improve the opportunity for the transfer of thermal energy from the engine working fluid to the chiller working fluid. In one embodiment, the surface area over which the engine working fluid is desirably in thermal communication with the surrounding chiller working fluid is desirably adjusted by adjusting the lateral, circumferential, or orthogonal extension of the chiller conduits A54 such as to adjust the heat exchanging surface area of the chiller passage A56. In one embodiment, the chiller conduit A54 may extend at least partially in a curved or circumferential or spiral direction, such as a helix, between the chiller passage opening A58 and the chiller collection chamber A62. In another embodiment, the chiller conduit A54 may extend in a zig-zag or serpentine pattern between the chiller passage opening A58 and the chiller collection chamber A62. However, it should be appreciated that other geometries may be defined such as to produce the desired heat exchanging surface area of the chiller conduit A54 relative to the chiller working fluid passage A66.

It should be appreciated that in various embodiments the surface area of the chiller passage A56 defined within each chiller conduit A54 described herein corresponds to the chiller passage A56, such as an internal wall or surface of the chiller conduit A54 at which the engine working fluid is in direct contact. In one embodiment, the surface area defines a nominal surface area of the chiller passage A56, such as a cross section of the chiller conduit A54. In other embodiments, features may be added or altered to the chiller passage A56 within the chiller conduit A54, such as, but not limited to, surface roughness, protuberances, depressions, spikes, nodules, loops, hooks, bumps, burls, clots, lumps, knobs, projections, protrusions, swells, enlargements, outgrowths, accretions, blisters, juts, and the like, or other raised material, or combinations thereof, to desirably alter flow rate, pressure drop, heat transfer, flow profile or fluid dynamics of the engine working fluid.

Referring still to FIG. 1.4.3, various embodiments further include a connecting chiller conduit A54 extended between the first piston body C700 and the second piston body C700. The connecting chiller conduit A54 provides fluid communication of the chiller working fluid between two or more piston bodies C700. In various embodiments, the chiller working fluid passage A66 at each piston body C700 includes a first chiller working fluid passage A68 and a second chiller working fluid passage A70 each in thermal communication with the compression chamber A222. The second chiller working fluid passage A70 is positioned proximal to the chiller passage opening A58 at the compression chamber A222. The first chiller working fluid passage A68 is positioned distal to the chiller passage opening A58 at the compression chamber A222. Additionally, or alternatively, the first chiller working fluid passage A68 is positioned proximal to the chiller collection chamber A62 or the expansion chamber A221. The connecting chiller conduit A54 is configured to fluidly connect the first chiller working fluid passage A68 of one piston body C700 (e.g., the first piston body 82) to the second chiller working fluid passage A70 of another piston body C700 (e.g., the second piston body 84), such as further depicted in the embodiments in regard to FIGS. 1.4.4-1.4.7. As further shown and described in regard to FIGS. 1.4.4-1.4.7 and FIGS. 1.7.1 - FIG. 1.7.4, the chiller working fluid may enter the chiller assembly A40 and flow at the first chiller working fluid passage A68 of one piston body C700 and the second chiller working fluid passage A70 of another piston body C700. Stated differently, in various embodiments, the chiller working fluid may enter the chiller assembly A40 and flow in thermal communication with a generally hotter portion of one piston body C700 (i.e., proximate along the lateral direction L to the expansion chamber A221) and engine working fluid positioned proximal to the hot or expansion chamber A221. The chiller working fluid may then flow to another piston body C700 to a portion distal to the hot or expansion chamber A221 of the other piston body C700, such as may be generally cooler relative to first piston body C700.

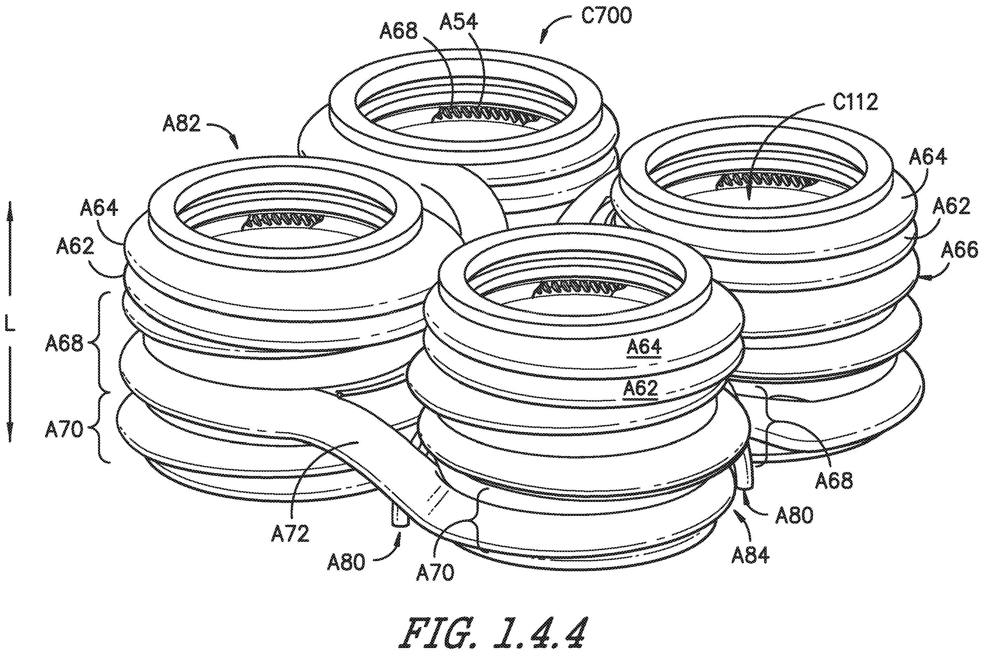

Referring now to FIG. 1.4.4, a perspective view of an exemplary embodiment of a portion of the engine A100 is provided. Referring additionally to FIGS. 1.4.5-1.4.6, further embodiments of the portion of the engine A100 are provided. FIG. 1.4.4 includes a partial cutaway view within the piston body C700 exposing chiller conduits A54 between the volume walls A46, A48. FIG. 1.4.4 depicts at least a pair of the piston bodies C700 including the connecting chiller conduit A54 such as to provide fluid communication and thermal communication from the first chiller working fluid passage A68 of the first piston body C700 to the second chiller working fluid passage A70 of the second piston body C700. Additionally, the second piston body C700 includes the connecting chiller conduit A54 providing fluid communication and thermal communication from the first chiller working fluid passage A68 of the second piston body C700 to another adjacent second chiller working fluid passage A70 of another adjacent piston body C700 different from the first piston body C700 and the second piston body C700.

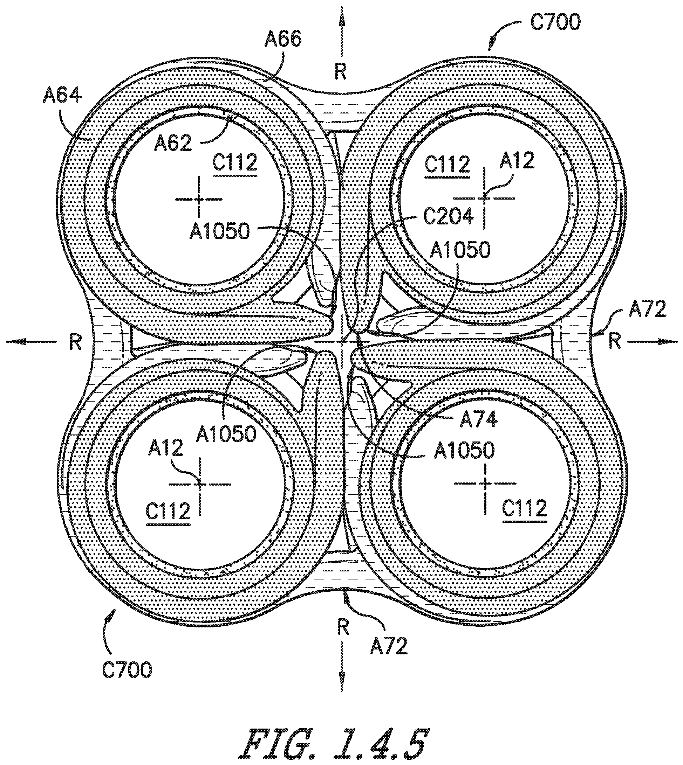

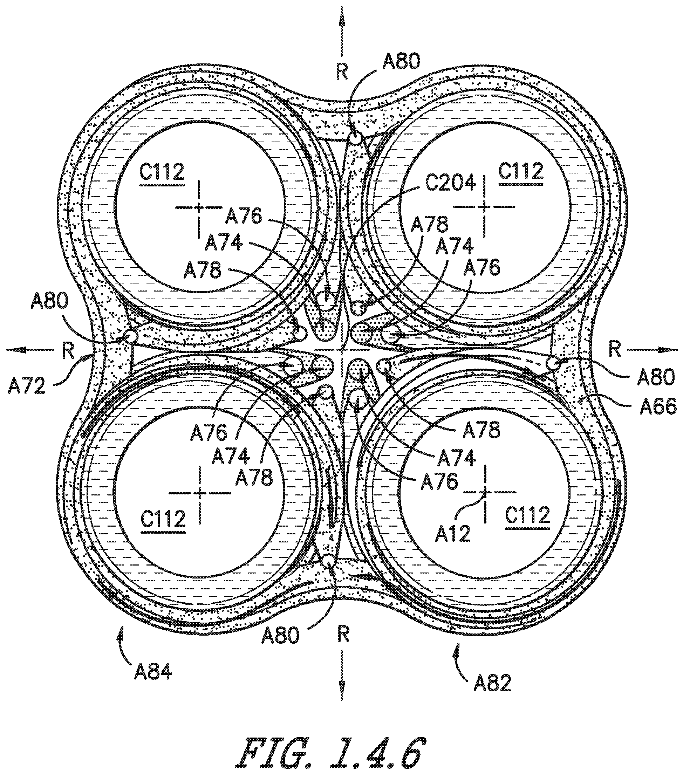

Referring to FIG. 1.4.5, a top-down view of an exemplary embodiment of the portion of the engine depicted in FIG. 1.4.4 is provided. Referring additionally to FIG. 1.4.6, a bottom-up view of an exemplary embodiment of the portion of the engine depicted in FIG. 1.4.4 is provided. Referring to FIGS. 1.4.5-1.4.6, the embodiments further depict the connecting chiller conduit A54 extended between pairs of the piston body C700. In one embodiment, such as depicted in regard to FIGS. 1.4.5-1.4.6, the engine includes a chiller working fluid inlet opening A78 through which chiller working fluid is provided to the chiller working fluid passage A66. The chiller working fluid inlet opening A78 may be positioned generally inward within the engine or proximal to the reference longitudinal axis C204. Referring to FIG. 1.4.6, in one embodiment, the chiller working fluid passage A66 may define a flowpath from the chiller working fluid inlet opening A78 and at least partially around one piston body C700. The flowpath may further extend across the connecting chiller conduit A54 to another or second piston body 84 adjacent or next to the first piston body 82. The flowpath of the chiller working fluid passage A66 further extends substantially circumferentially around the other piston body C700 (e.g., depicted at the second piston body C700). The flowpath is in fluid communication with a chiller working fluid outlet opening A80. In various embodiments, the chiller working fluid outlet opening A80 is positioned outward or distal from the reference longitudinal axis C204.

In various embodiments, the flowpath of the chiller working fluid passage A66 extends from the chiller working fluid inlet opening A78 at least partially circumferentially around one piston body C700 and further across the connecting chiller conduit A54 to extend at least partially circumferentially, or substantially circumferentially, around another or adjacent piston body C700. Similarly, the other or second piston body C700 includes the chiller working fluid opening and flowpath extended at least partially circumferentially to the connecting chiller conduit A54 to provide fluid communication and thermal communication to yet another piston body C700 and circumferentially around the yet another piston body C700 to the chiller working fluid outlet opening A80.

In still various embodiments, the chiller working fluid inlet opening A78, the chiller working fluid outlet opening A80, or both extend at least partially along the lateral direction L or orthogonal to the flowpath of the chiller working fluid passage A66 such as to ingress and egress the chiller working fluid through the chiller working fluid passage A66.

In one embodiment, the engine includes the chiller working fluid inlet opening A78 corresponding to each piston body C700. Additionally, or alternatively, the engine includes the chiller working fluid outlet opening A80 corresponding to each piston body C700. It should further be appreciated that in various embodiments, the flowpath of the chiller working fluid passage A66 extends at least partially along the lateral direction L such as shown and described in regard to FIG. 1.4.3. As further described in various embodiments herein, the flowpath arrangement shown and described in regard to FIGS. 1.4.3-1.4.7 provides thermal communication of the chiller working fluid with the engine working fluid, such as the engine working fluid within the chiller conduits A54 at each piston body C700. Furthermore, the flowpath arrangements shown and described in regard to FIGS. 1.4.3-1.4.7 further provide a desired amount of heat exchanging surface area for thermal energy transfer from the engine working fluid to the chiller working fluid. As such, embodiments of the chiller conduits A54, the chiller working fluid passage A66, or both, may provide an improved transfer of thermal energy from the engine working fluid to the chiller working fluid. Further still, embodiments of the chiller conduits A54, the chiller working fluid passage A66, or both, may desirably increase a temperature differential of the engine working fluid from the cold or compression chamber A222 relative to the hot or expansion chamber A221. Additionally, or alternatively, embodiments of the chiller conduits, A54, the chiller working fluid passage A66, or both, may desirably a stroke or cycle time or period of the engine A100.

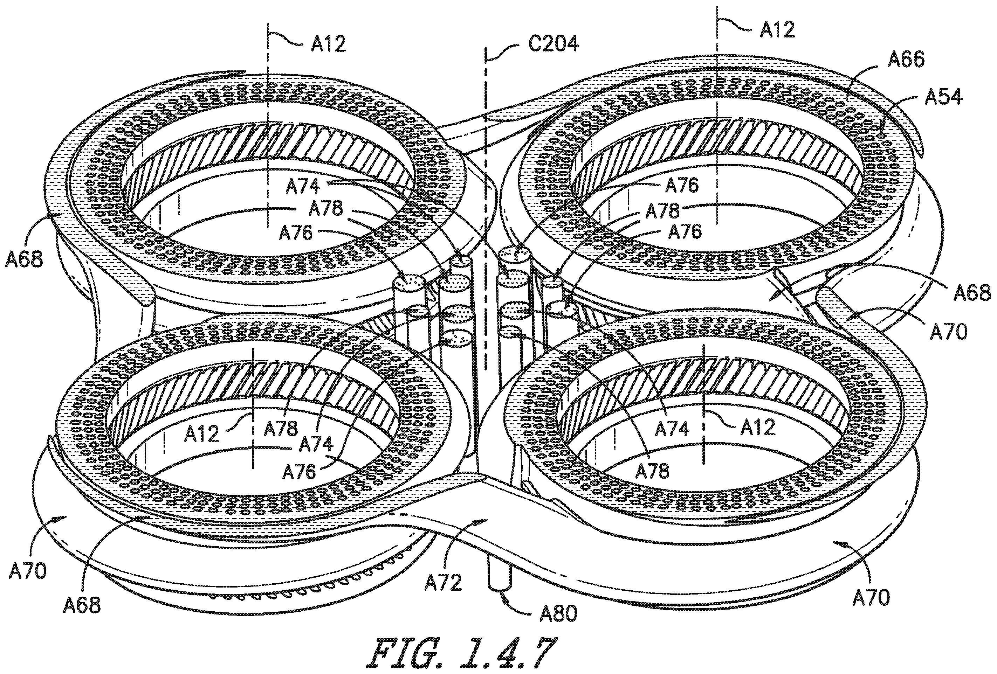

Referring now to FIG. 1.4.7, a cutaway perspective view of an exemplary embodiment of the portion of the engine A100 depicted in FIG. 1.4.4 is provided. The exemplary embodiment in regard to FIG. 1.4.7 may be configured substantially similarly as shown and described in regard to FIGS. 1.4.1-1.4.6. The cutaway view further depicts the chiller conduit A54 surrounded by the chiller working fluid passage A66. The embodiment in regard to FIG. 1.4.7, and further depicted at least in part in FIGS. 1.4.5-1.4.6, a portion of the walled conduit A1050 is extended through the engine A100 inward of the plurality of piston bodies C700 relative to the radial direction R from the longitudinal axis C204. In one embodiment, such as depicted in regard to FIG. 1.4.7, the plurality of walled conduits A1050 is extended proximal to a reference longitudinal axis C204, such as inward of the piston bodies C700 along a radial direction R relative to the longitudinal axis C204. However, in other embodiments, such as depicted in regard to FIG. 1.7.1 through FIG. 1.7.4, the walled conduits A1050 may extend outward of the piston bodies C700, such as outward along the radial direction R relative to the longitudinal axis C204.

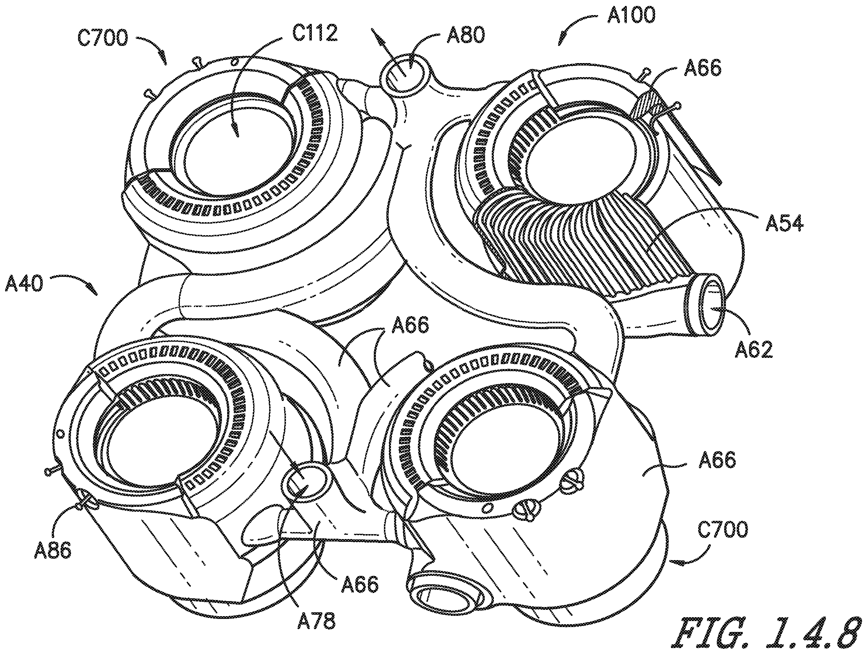

Referring now to FIG. 1.4.8, a perspective view of another exemplary embodiment of the engine A100 is provided. The perspective view in FIG. 1.4.8 further includes a partial cutaway view within the piston body C700 exposing the chiller working fluid passage A66 and chiller conduits A54. The embodiment provided in regard to FIG. 1.4.8 is configured substantially similarly as shown and described in regard to FIGS. 3-1.4.7. **In** FIG. 1.4.8, the chiller working fluid passage A66 depicts a single or common chiller working fluid inlet opening A78 from which the chiller working fluid passage A66 provides separate flowpaths to each piston body C700. The chiller working fluid passage A66 further depicts a single or common chiller working fluid outlet opening A80 at which the chiller working fluid passage A66 re-combines the separated chiller working fluid passages A66 before egressing the chiller working fluid through the single chiller working fluid outlet opening A80.

Referring to FIG. 1.4.8, the chiller working fluid passage A66 at the chiller working fluid inlet opening A78 separates into the shorter chiller working fluid flowpath provided to piston bodies C700 proximate to the chiller working fluid inlet opening A78. The chiller working fluid passage A66 at the chiller working fluid inlet opening A78 further separates into the longer chiller working fluid flowpath provided to piston bodies C700 distal to the chiller working fluid inlet opening A78.

In various embodiments, the piston bodies C700 distal to the chiller working fluid inlet opening A78 additionally are proximate to the chiller working fluid outlet opening A80. The shorter chiller working fluid flowpath provides the shorter flowpath from the piston body C700 proximate to the chiller working fluid outlet opening A80. The chiller working fluid flowpath A66 further provides the longer flowpath (relative to the first chiller working fluid flowpath) from the piston body C700 distal to the chiller working fluid outlet opening A80.

In one embodiment, the piston body C700, such as proximate to the chiller working fluid inlet opening A78, receives chiller working fluid via the shorter chiller working fluid flowpath and egresses chiller working fluid via the longer chiller working fluid flowpath. Alternatively, the piston body C700, such as proximate to the chiller working fluid outlet opening A80, receives chiller working fluid via the longer chiller working fluid flowpath and egresses chiller working fluid via the shorter chiller working fluid flowpath. Altogether, the chiller working fluid passage A66 may define a substantially equal volume flowpath at each piston body C700 between the chiller working fluid inlet opening A78 and the chiller working fluid outlet opening A80. The substantially equal volume arrangement may provide a substantially even thermal energy transfer from the engine working fluid at each piston body C700 to the chiller working fluid.

Referring still to FIG. 1.4.8, in one embodiment, the chiller working fluid passage A66 at least partially circumferentially surrounds each piston body C700. Still further, the chiller working fluid passage A66 is extended along the lateral direction L or otherwise co-directional to the piston body C700 such that the chiller working fluid surrounds the piston body C700.

In various embodiments, such as depicted in regard to FIG. 1.4.8, the chiller conduit A54 is extended from the compression chamber A222 along a first lateral direction and extends along a second lateral direction opposite of the first lateral direction. The chiller conduit A54 includes an approximately 180 degree turn between the chiller passage opening A58 and the chiller collection chamber A62. The chiller working fluid passage A66 further surrounds the chiller conduit A54 along the lateral direction L. In various embodiments, such as depicted in FIG. 1.4.8, the chiller working fluid passage A66 further surrounds the 180 degree turn portion of the chiller conduit A54. The chiller passage openings A58 may generally be positioned such as to prevent the piston A1011 of the piston assembly A1010 from covering or otherwise obscuring the chiller passage openings A58 during operation of the system A10.

During operation, chiller working fluid flowing through the chiller working fluid passage A66 may receive thermal energy from the engine working fluid within one or more of the chiller conduits A54. The rate or quantity of thermal energy transferring from the engine working fluid to the chiller working fluid within the chiller working fluid passage A66 may vary as between respective portions of the chiller working fluid passage A66, such as shown and described in regard to the first chiller working fluid passage A68 and the second chiller working fluid passage A70, and/or between respective piston bodies (e.g., the first piston body and the second piston body). For example, the rate or quantity of thermal energy transferring from the engine working fluid to the chiller working fluid passage A66 may depend at least in part on a temperature gradient between the chiller conduit A54 and the chiller working fluid passage A66, such as a temperature gradient between the engine working fluid and the chiller working fluid. In some embodiments, however, the engine working fluid within the plurality of chiller conduits A54 may exhibit a temperature that differs as between at least two piston bodies C700 (e.g., first piston body and second piston body) and/or as between at least two portions along the lateral extension of the chamber 222 (i.e., temperature gradient of the chamber 222 along the lateral direction L) within a given piston body. Additionally, or in the alternative, the engine working fluid within the plurality of piston bodies C700 may exhibit a temperature that differs as between at least two piston bodies. For example, the engine working fluid within the plurality of chiller conduits A54 corresponding to one piston body (e.g., the first piston body) may exhibit a temperature different from the plurality of chiller conduits A54 corresponding to another piston body (e.g., the second piston body) based at least on the phase difference of the piston assemblies A1010 within the respective piston bodies during operation of the engine.

In some embodiments, the temperature of the chiller working fluid may increase as the chiller working fluid flows through the chiller working fluid passage A66 and receives thermal energy from the engine working fluid within the chiller conduits A54. In one embodiment, as depicted in regard to FIGS. 1.4.3-1.4.7, the chiller working fluid passage A66 extending at least partially circumferentially around one piston body (e.g., the first piston body), and further extended at least partially circumferentially around one or more other piston bodies (e.g., the second piston body) includes the chiller working fluid increasing in temperature by receiving thermal energy at one piston body.

In some embodiments, engine working fluid flowing from a first piston body flowing to another or second piston body may exhibit a temperature that differs from the engine working fluid flowing in an opposite direction, from the other piston body to the first piston body.

In various embodiments, the chiller working fluid and the engine working fluid may exhibit a temperature gradient that depends at least in part on whether the engine working fluid is flowing towards one piston body or another piston body. For example, a first temperature gradient may correspond to the engine working fluid flowing towards one piston body and a second temperature gradient may correspond to the engine working fluid flowing towards another piston body. In some embodiments the first temperature gradient may be smaller than the second temperature gradient. In other embodiments the second temperature gradient may be greater than the first temperature gradient. For example, the first temperature gradient may be smaller than the second temperature gradient at least in part because of the temperature of the engine working fluid flowing towards one piston body is greater than the temperature of engine working fluid flowing towards the other piston body.

In some embodiments, the rate and/or quantity of thermal energy transfer from the engine working fluid to the chiller working fluid may depend on whether the engine working fluid defines the first temperature gradient or the second temperature gradient. For example, a first rate and/or quantity of thermal energy transfer from the engine working fluid to the chiller working fluid may correspond to engine working fluid flowing towards one piston body and a second rate and/or quantity of thermal energy transfer from the engine working fluid to the chiller working fluid may correspond to the engine working fluid flowing towards another piston body. In some embodiments the first rate and/or quantity of thermal energy transfer may be smaller than the second rate and/or quantity of thermal energy transfer. In other words, the second rate and/or quantity of thermal energy transfer may be greater than the first rate and/or quantity of thermal energy transfer. For example, the first rate and/or quantity of thermal energy transfer may be smaller than the second rate and/or quantity of thermal energy transfer at least in part because of the first temperature gradient corresponding to engine working fluid flowing towards one piston body being smaller than the second temperature gradient corresponding to engine working fluid flowing towards another piston body.

In some embodiments, the efficiency of thermal energy transfer from the engine working fluid to the chiller working fluid may be enhanced at least in part by the second rate and/or quantity of thermal energy transfer corresponding to the engine working fluid flowing towards the first piston body being greater than the first rate and/or quantity of thermal energy transfer corresponding to the engine working fluid flowing towards second piston body. For example, in this way, a relatively larger proportion of the thermal energy input from the chiller conduits A54 may be applied to the chiller working fluid as the chiller working fluid flows from one piston body to another piston body to which the chiller working fluid passage A66 is thermally coupled (i.e., via the connecting chiller conduit A54). The thermal energy input to the chiller working fluid during the cycle of the piston assembly in a first direction (e.g., downstroke portion of the stroke cycle) may contribute to the downstroke (e.g., directly) by further cooling and thereby further contracting the engine working fluid. During another portion of the engine cycle (e.g., the upstroke portion of the stroke cycle), a relatively smaller proportion of the thermal input by the engine working fluid in the chiller conduits A54 may be applied to the chiller working fluid, which may reduce or mitigate a potential for thermal energy output from the engine working fluid to counteract the upstroke by further heating and thereby contracting the engine working fluid, providing an additional or alternative efficiency enhancement. With a relatively smaller proportion of the thermal energy input by the chiller conduits A54 applied to the chiller working fluid during the upstroke, a smaller portion of the thermal energy input may be transferred to the chiller working fluid.

As the chiller working fluid flows through the chiller working fluid passage A66, thermal energy may preferentially transfer to the chiller working fluid within the chiller working fluid passage A66 where the temperature gradient is larger or largest, thereby preferentially providing thermal energy to the chiller working fluid at the walled conduit and/or first or second chiller working fluid passage A70 where there is a greater capacity to receive thermal energy from the engine working fluid. For example, the first chiller working fluid passage A68, positioned more proximate to the expansion chamber A221 than the second chiller working fluid passage A70, may exhibit a larger temperature gradient between the engine working fluid and the chiller working fluid. The second chiller working fluid passage A70, positioned distal to the expansion chamber A221 relative to the first chiller working fluid passage A68, may exhibit a lower temperature gradient between the engine working fluid and the chiller working fluid. Additionally, such as described herein , the chiller working fluid passage A66 at one piston body may exhibit a larger temperature gradient than another piston body to which the chiller working fluid passage A66 is thermally coupled (i.e., via the connecting chiller conduit A54), such as based on the cycle or stroke of the engine during operation. Still further, the temperature gradient at the first chiller working fluid passage A68 at one piston body may be different (e.g., greater or lesser) than the second chiller working fluid passage A70 at another piston body to which the chiller working fluid passage A66 is thermally coupled, such as due at least in part to the cycle or stroke of the engine. As such, thermal energy may preferentially transfer from the engine working fluid to the chiller working fluid based at least on the larger temperature gradient at any time during the cycle of the engine.

It should be appreciated that embodiments of the chiller assembly including the chiller working fluid passage A66 and the cold side heat exchanger A42 may function substantially similarly as shown and described by embodiments of the hot side heat exchanger C108 provided herein.


**Working Fluid Body Heater Conduits**

Now referring to FIG. 1.5.1, an exemplary embodiment of the working-fluid body c108 is provided. The presently disclosed working-fluid bodies c108 may define part of the heater body c100 the piston body C700. The working fluid body C108 includes a plurality of heater conduits or working-fluid pathways C110 through which engine working fluid flows between the expansion chamber A221 and the compression chamber A222.

The plurality of working-fluid pathways c110 may extend between respective ones of a plurality of a first opening or piston chamber apertures c111 and respective ones of a plurality of a second opening or regenerator apertures c113. The piston chamber apertures c111 provide fluid communication between the working-fluid pathways c110 and the piston chamber c112, and the regenerator apertures c113 provide fluid communication between the working-fluid pathways c110 and the regenerator conduit c1000. The piston chamber apertures c111 may define a first end of the working-fluid pathways c110 and the regenerator apertures c113 may define a second end of the working-fluid pathways c110.

Operation of the engine A100 and system A10 includes the plurality of piston assemblies A1010 moving in cyclic operation, such as in back and forth movement between the piston body c700 at the first end A101 and another piston body c700 at the second end A102 (FIG. 1.3.1). Pressure increases and decreases at respective chambers A221, A222 correspond to movement of the piston assemblies A1010, such as further described herein. In exemplary embodiments such as depicted in regard to FIG. 1.3.1. or FIG. 1.7.1 through FIG. 1.7.8., the plurality of piston bodies c700 may include the expansion chamber A221 and the compression chamber A222 defined at each end A101, A102 of each piston assembly A1010, such as to provide eight each of the expansion chamber A221 and the compression chamber A222 at four piston assemblies A1010. The plurality of piston assemblies A1010 may be disposed radially relative to the longitudinal axis C204.

The plurality of working fluid pathways C110 extend in fluid communication from a expansion chamber A221 to the walled conduit A1050. In various embodiments, such as further described herein, the working fluid pathways C110 extend in fluid communication from the expansion chamber A221 to a corresponding regenerator body C800 at the walled conduit A1050. A first plurality of heater conduits or working-fluid pathways C110 may fluidly communicate between an expansion chamber A221 defined by a first piston body C700 and a first compression chamber A222 defined by another piston body C700 different from the first piston body C700 (e.g., not the first piston body). A second plurality of working-fluid pathways C110 may fluidly communicate between a second expansion chamber A221 (i.e., different from the first expansion chamber) defined by a second piston body c700 and a compression chamber A222 defined by another piston body C700 (e.g., not the second piston body).

Fluid communication between the expansion chamber A221 of one piston body C700 and the compression chamber A222 of another piston body C700 through the heater conduits or working fluid pathways C110 provides for the engine working fluid to be in thermal communication with the heating working fluid surrounding the working fluid pathways C110. For example, the heating working fluid, such as described herein, is provided in thermal and/or fluid communication around the working fluid pathways C110. The working fluid pathways C110 fluidly separate the heating working fluid and the engine working fluid while further providing heat transfer between the heating working fluid and the engine working fluid (e.g., heat transfer from the heating working fluid to the engine working fluid).

The engine working fluid is heated at least at the working fluid pathways C110 and provides for pressure change at the respective expansion chamber A221 (e.g., pressure increase at the expansion chamber A221). Based at least on the engine cycle, such as the movement of the piston assemblies A1010, pressure changes at the engine working fluid between the fluidly connected expansion chamber A221 and the compression chamber A222 via the heater conduit or working fluid pathways C110 correspond to heat transfer to the engine working fluid from the heating working fluid. As further described herein, based at least on the engine cycle, heat transfer, or an amount of heat transferred, to the engine working fluid may be based on the engine cycle. For example, the amount of heat transferred to the engine working fluid may correspond to whether the expansion chamber A221 is increasing in pressure or decreasing in pressure, or whether a corresponding fluidly connected compression chamber A222 is decreasing in pressure or increasing in pressure.

As further described herein, the plurality of heater conduits or working fluid pathways C110 beneficially provides for heat exchange, such as heat transfer to from the heating working fluid to the engine working fluid. The plurality of working fluid pathways C110 provides a desired amount of heat transfer to the engine working fluid, such as to improve operation of the engine A100. Improved operation of the engine A100 may include improved power output, improved power density, and/or improved efficiency of the engine A100.

**Engine Chamber to Chamber Conduits Arrangements**

The cross sectional view provided in FIG. 1.3.1 is cut along the lateral direction L such as to depict two of four piston assemblies A1010 of the system A10. In various embodiments, the system A10 provided in regard to FIG. 1.3.1 further includes the walled conduits A1050 disposed inward of the piston bodies C700 proximate to the reference longitudinal axis C204, such as shown and described in regard to FIGS. 1.4.5-1.4.7. In other embodiments, the system A10 provided in regard to FIG. 1.3.1 further includes the walled conduits A1050 disposed outward of the piston bodies C700, such as shown and described in regard to FIG. 1.7.1 through FIG. 1.7.4.

Referring to FIG. 1.7.1 through FIG. 1.7.4, side, end, and perspective views of a portion of the system A10 are provided. The embodiments provided in regard to FIG. 1.7.1 through FIG. 1.7.4 are configured substantially similarly as shown and described in regard to FIG. 1.3.1 - FIG. 1.3.2. In regard to FIGS. 1.7.1 - FIG. 1.7.4, the portions of the system A10 depicted therein include four piston assemblies A1010 positioned within eight respective piston bodies C700. The piston bodies C700 may generally include the first volume wall and the second volume wall shown and described in regard to FIG. 1.3.1 - FIG. 1.3.2. The piston bodies C700 may generally define cylinders into which pistons A1011 of the piston assembly A1010 are each positioned such as to define the expansion chamber A221 and the compression chamber A222 within each piston body C700. However, it should be appreciated that other suitable geometries of the piston body C700 containing the piston A1011 may be utilized.

The engine A100 further includes a plurality of walled conduits A1050 connecting particular chambers A221, A222 of each piston body C700 (FIG. 1.3.1) such as to define a balanced pressure arrangement of the pistons A1011. In various embodiments, the engine A100 includes at least one interconnected volume of chambers A221, A222 such as described herein. In one embodiment, such as depicted in regard to FIGS. 1.7.1 - FIG. 1.7.4, the engine A100 includes two interconnected volumes in which each interconnected volume includes an expansion chamber A221 of a first piston body C700 of a first piston assembly A1010 connected in fluid communication of the engine working fluid with a compression chamber A222 of a second piston body C700 of a second piston assembly A1010 each connected by a conduit A1050. More particularly, the balanced pressure arrangement of piston assemblies A1010 depicted in regard to FIGS. 1.7.1 - FIG. 1.7.4 includes two interconnected volumes each substantially fluidly separated from one another and/or substantially pneumatically separated from one another. The fluidly separated and/or pneumatically separated arrangement of chambers A221, A222 into the interconnected volume, and those chambers A221, A222 outside of the interconnected volume or in another interconnected volume, is particularly provided via the arrangement of expansion chambers A221 connected to compression chambers A222 via the walled conduits A1050 such as further described herein.

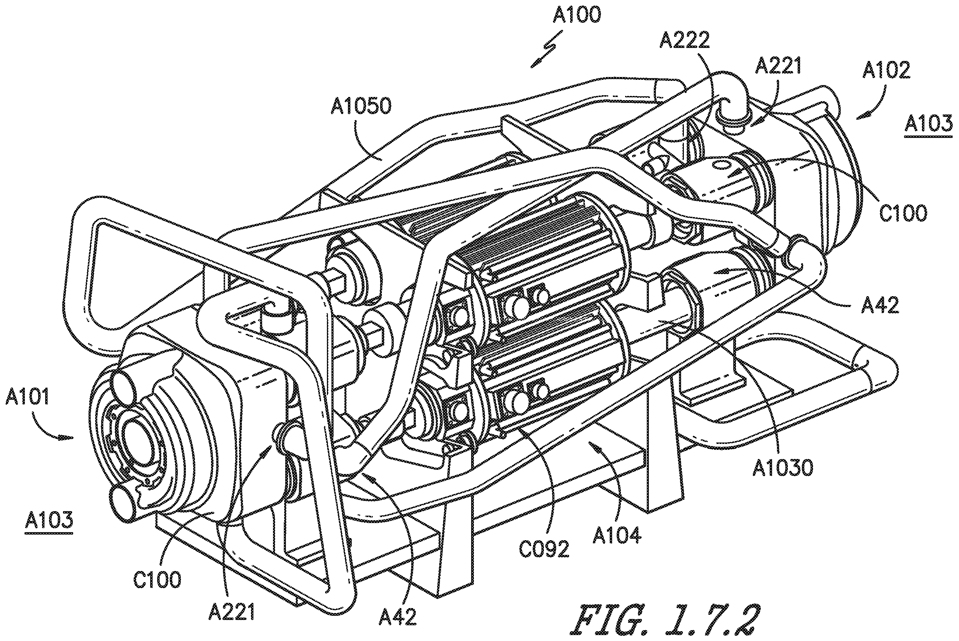

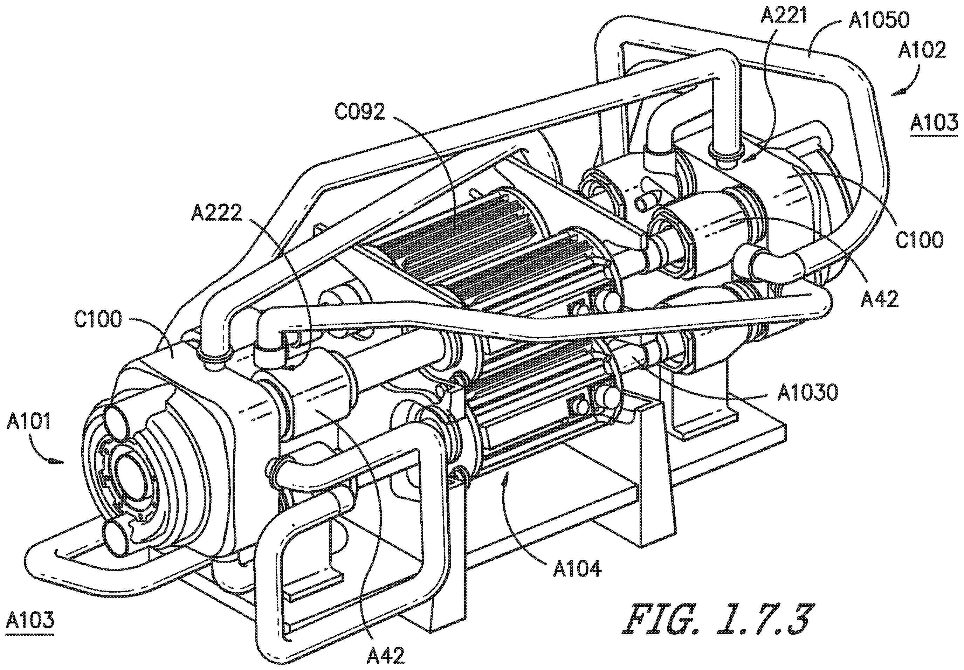

In various embodiments, the interconnected volume includes pairs of the expansion chamber A221 fluidly coupled to the compression chamber A222 each defined at laterally separated ends of the piston assemblies A1010. In one embodiment, the engine A100 defines a first end 101 separated along the lateral direction L by the connection member A1030 from a second end 102, such as depicted in FIG. 1.7.2 and FIG. 1.7.3. Each end of the engine A100 defines an expansion chamber A221 and a compression chamber A222 at each piston A1011 of each piston assembly A1010. The engine A100 depicted in FIGS. 1.7.1 -FIG. 1.7.4, and further in regard to FIG. 1.3.1, includes the expansion chamber A221 at one end connected to a respective compression chamber A222 at another end via respective conduits. In one embodiment, such as depicted in FIGS. 1.7.2 and 1.7.3, the engine A100 includes two expansion chambers A221 at the first end 101 each connected to respective compression chambers A222 at the second end 102 via respective conduits A1050. The engine A100 further includes two expansion chambers A221 at the second end 102 each connected to respective compression chamber A222 at the first end 101 via respective conduits A1050. The system A10 further includes four expansion chambers A221 at one end each connected to respective compression chambers A222 at the same end via respective conduits A1050. In one embodiment, the system A10 includes two expansion chambers A221 at the first end 101 each connected to respective compression chambers A222 at the first end 101 via respective walled conduits A1050. The system A10 further includes two expansion chambers A221 at the second end 102 each connected to respective compression chambers A222 at the second end 102 via respective walled conduits A1050.

In one embodiment, the engine includes four piston assemblies A1010 extended along the lateral direction L and in circumferential arrangement relative to the reference longitudinal axis C204. The piston assemblies A1010 may be positioned equidistant to one another around the reference longitudinal axis C204. In one embodiment, a pair of the heater body is positioned at outer ends A103 of the engine. The heater body is positioned proximate to the expansion chamber A221 and distal to the compression chamber A222. Each heater body may be positioned and configured to provide a substantially even flow of thermal energy to four hot side heat exchangers 160 or expansion chambers A221 at a time.

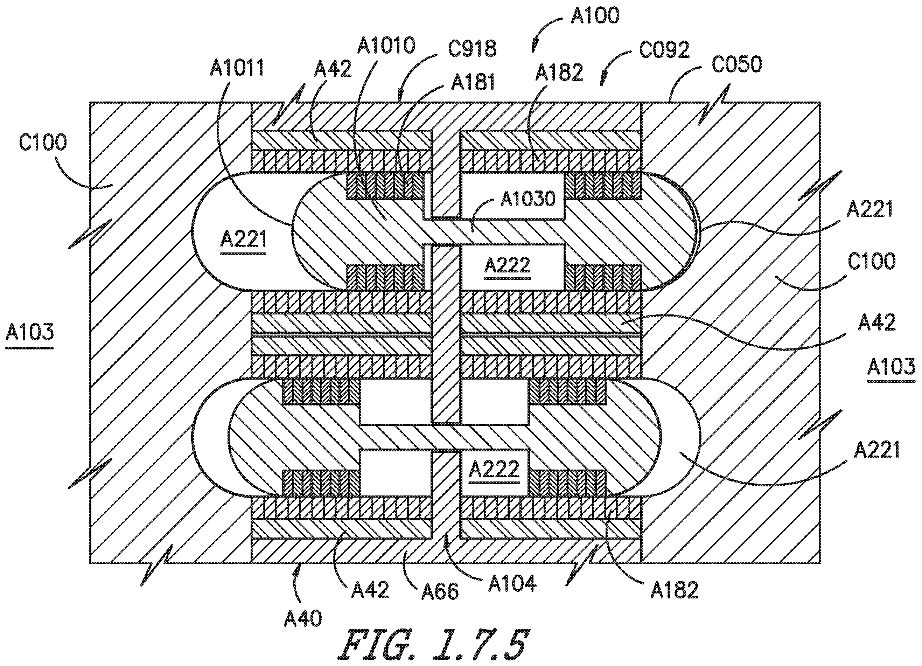

In other embodiments, the engine A100 includes two or more piston assemblies A1010 in side-by-side arrangement. The piston assemblies A1010 may be positioned equidistant relative to one another. In still various embodiments, a single heater body C100 may be positioned relative to each hot side heat exchanger or working fluid body C108. It should be appreciated that various embodiments of the system A10 provided herein may include any quantity of heater bodies positioned at any quantity of expansion chambers A221 as desired. Further embodiments of the system A10 provided herein in regard to FIG. 1.7.5 through 1.7.8 further illustrate positioning of the heater body C100 relative to the expansion chamber A221. However, it should be appreciated that other arrangements may be utilized as desired such as to provide thermal energy to the expansion chambers A221. In still various embodiments, other arrangements may be utilized such as to provide selective or independent operability of a plurality of heater bodies C100. For example, selective or independent operability of the plurality of heater bodies C100 may desirably control a temperature, flow rate, or other property of thermal energy, or particularly the heating working fluid, provided in thermal communication to the working fluid body C108. Selective operability may further include selective on/off operation of one or more heater bodies C100 independent of one another.

It should further be appreciated that although the piston assemblies A1010 of the engine A100 are depicted in straight, flat, inline, or horizontally opposed arrangements, the piston assemblies A1010 and heater bodies C100 may alternatively be arranged in V-, W-, radial, or circumferential arrangements, or other suitable piston assembly A1010 arrangements. For example, one or more embodiments of the system A10 may include a center and/or outer heater body C100 around which the plurality of piston assemblies A1010 is positioned.

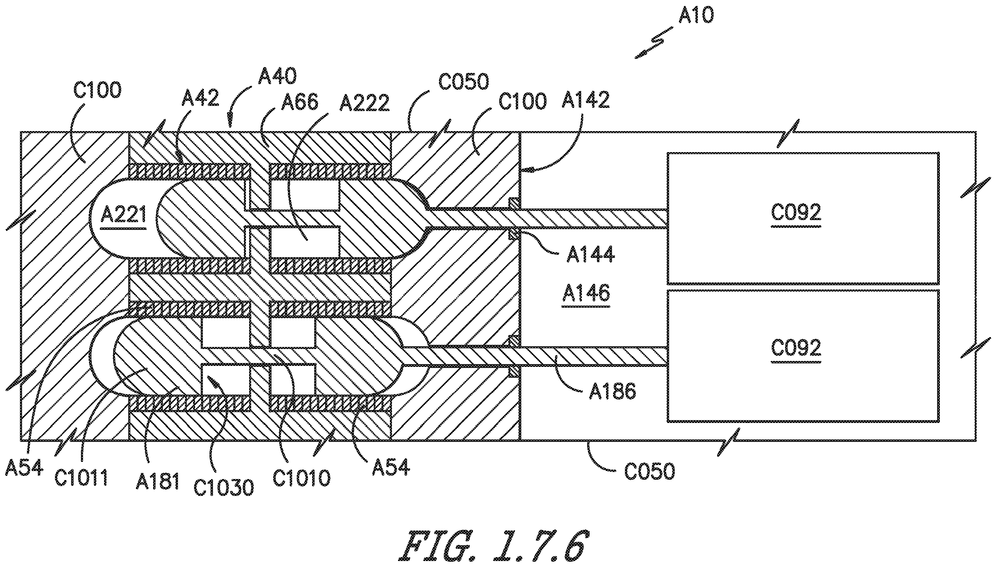

Referring now to FIG. 1.7.5 through FIG. 1.7.8, further exemplary embodiments of the system A10 are provided. The embodiments provided in regard to FIG. 1.7.5 through FIG. 1.7.8 are configured substantially similarly as shown and described in regard to FIG. 1.2.1 through FIG. 1.7.2. Referring to FIG. 1.7.5 through 1.7.8, positioning the load device c092 outside of the inner ends 104 of the piston assembly A1010 provides the connection member A1030 to be shorter between pistons A1011. The shorter connection member A1030 provides the pistons A1011 to be positioned more closely together in contrast to a longer connection member A1030 based at least on the load device c092 being positioned at the inner ends 104 of the piston assembly A1010. In regard to FIG. 1.7.5, the load device c092 is formed at least in part by the piston A1011 and the surrounding piston body C700. In regard to FIGS. 1.7.6 - FIG. 1.7.7, the load device c092 is positioned at one or more outer ends A103 of the engine. Positioning the load device c092 outside of the inner ends 104 provides dimensions and sizing of the load device c092 to be substantially de-coupled from dimensions and sizing of the closed cycle engine. For example, positioning the load device c092 outside of the inner end A104 of the engine de-couples the length and thickness of the dynamic member A181 from the connection member A1030. As another example, positioning the load device c092 outside of the inner end A104 of the engine de-couples a desired power density of the engine from the sizing and dimensions of the load device c092, such as an electric machine. As such, the shorter connection member A1030 between the pistons A1011 provides a smaller packaging of the engine while substantially maintaining the power generation and output relative to other arrangements.

In FIG. 1.7.5, the dynamic member A181 of the load device c092 defining the electric machine is positioned at the pistons A1011 of the piston assembly A1010. The stator assembly A182 of the electric machine is positioned at the piston body C700, such as at the second volume wall. Lateral movement of the pistons A1011 relative to the surrounding stator assembly A182 at the piston body C700 generates electricity at the electric machine. The system A10 further includes the chiller assembly surrounding the electric machine. In more particular embodiments, the chiller assembly surrounds the stator assembly A182 of the load device c092 defining an electric machine. The chiller assembly may further provide working fluid in thermal communication with inner ends 104 of the system A10, such as to provide thermal communication to the compression chamber A222 via the inner end wall A50.

Referring now to FIG. 1.7.5 through FIG. 1.7.6, in various embodiments the chiller assembly includes a chiller casing in which a chiller flowpath is defined next to the compression chamber A222 of the volume. The chiller flowpath may particularly be defined immediately next to or adjacent to the second volume wall defined by the chiller assembly, or particularly the chiller casing, such as depicted in regard to FIG. 1.7.5. The chiller assembly includes the second volume wall and further includes the inner end wall A50 such as described in regard to FIG. 1.3.1 - FIG. 1.3.2. The second volume wall and the inner end wall A50 may together define a single monolithic structure. Furthermore, the chiller casing may include the second volume wall and the inner end wall A50 and define the chiller flowpath as a single monolithic structure. As such, the structure and method for assembly and improved thermal efficiency may include positioning pistons A1011 and the connection member A1030 through the chiller assembly, operably coupling the pistons A1011 and the connection member A1030 together as the piston assembly A1010, and closing or sealing the expansion chamber A221 and compression chamber A222 via the heater body at the outer ends A103 of the closed cycle engine.

Referring now to FIG. 1.7.6 through FIG. 1.7.7, in various embodiments the load device c092 is positioned at one or more outer ends A103 of the closed cycle engine in operative communication with the piston assembly A1010. The system A10 may further include an extension member A186 connected to one or more pistons A1011 of the piston assembly A1010. The extension member A186 is connected to the piston A1011 and extended laterally outward toward one or more outer ends A103. The extension member A186 is operatively connected to the load device c092 such that lateral movement of the piston assembly A1010 including the extension member A186 generates electric energy at the electric machine. Although not further depicted in regard to FIGS. 8-9, the extension member A186 further includes the dynamic member A181 at the load device c092 defining the electric machine operatively coupled to the electric machine in magnetic communication with the stator assembly A182, such as depicted and described in regard to FIG. 1.3.1 - FIG. 1.3.2.

Referring still to FIG. 1.7.6 through FIG. 1.7.7, the machine body c918 surrounding the load device c092 includes an interface wall A142 in contact with the outer end A103 of the load device c092. Within the machine body c918 and around the load device c092 is a cavity A146. The interface wall A142 includes a seal A144, such as a gap seal, at an interface of the extension member A186 and the interface wall A142. The cavity A146 may particularly define a pressurized cavity such that pressurization at the volume within the piston body C700, such as at the expansion chamber A221, is substantially maintained or mitigated from pressure loss within the expansion chamber A221 along the extension member A186. It should be appreciated that any suitable type of seal may be incorporated at the interface wall A142 such as to substantially maintain pressure at the expansion chamber A221, or provide an acceptably low rate of leakage over time from the expansion chamber A221.

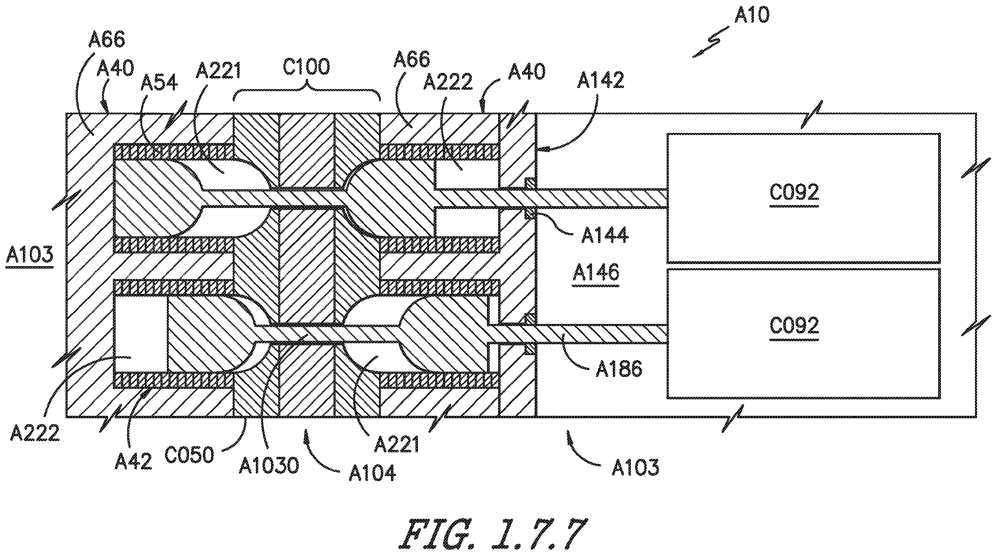

Regarding FIG. 1.7.6, and similarly as shown and described in regard to FIG. 1.3.1 through FIG. 1.7.5, the heater body is positioned at outer ends A103 of the closed cycle engine. In regard to the embodiment depicted in FIG. 1.7.7, the heater body is positioned at the inner end A104 of the closed cycle engine between each pair of piston bodies C700 at which each respective piston A1011 of the piston assembly A1010 is contained. The heater body may particularly define a single common heater body such as to provide a single thermal energy output source to each expansion chamber A221 of the closed cycle engine.

Referring to FIG. 1.7.7 and further in regard to the embodiment and description regarding FIG. 1.7.1 through FIG. 1.7.2, the single common heater body may be positioned to provide a substantially uniform thermal energy output to all eight expansion chambers A221 of the closed cycle engine. The single common heater body positioned between the expansion chambers A221 may alleviate or obviate issues that may arise from uneven thermal input to the expansion chambers A221. For example, the single common heater body may mitigate phase drifting of the piston assemblies A1010 relative to one another. As such, the single common heater body may promote balanced pressure operation of the closed cycle engine, mitigate unbalanced operation, reduce vibrations or mitigate promulgation of vibrations, improve efficiency of the system A10, or promote improved operability of the system A10.

It should be appreciated that various embodiments of the system A10 provided in regard to FIGS. 1.2.1 through FIG. 1.7.7 are further configured to provide a desired thermal energy output from the heater body to the expansion chambers A221. For example, the embodiments shown and described herein may be configured to output a substantially uniform thermal energy profile from each heater body to all expansion chambers A221. In still various embodiments, the chiller assembly includes the chiller working fluid input and the chiller working fluid output such as depicted and described in regard to FIG. 1.7.1 through FIG. 1.7.2, such as to provide a substantially uniform thermal energy output from the compression chamber A222 to the chiller assembly.

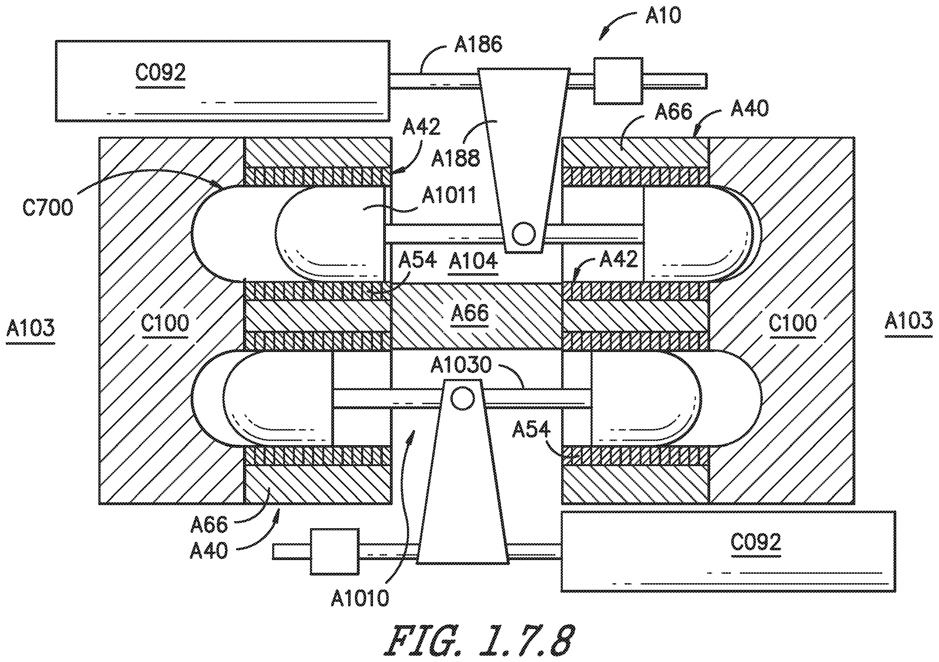

Referring now to FIG. 1.7.8, the schematic embodiment provided is configured substantially similarly as shown and described in regard to FIGS. 1.2.1 through FIG. 1.7.7. In the embodiment depicted in FIG. 1.7.8, the system A10 further includes an adapter A188 attaching the connection member A1030 to the extension member A186. In various embodiments, the adapter A188 is extended along a transverse direction generally acute to the lateral direction L. In one embodiment, the adapter A188 is extended substantially perpendicular to the lateral direction L. The adapter A188 provides substantially parallel arrangement of the connection member A1030 relative to the extension member A186 such as to translate lateral movement of the connection member A1030 at a first plane to lateral movement of the extension member A186 at a second plane different from the first plane. In various embodiments, the adapter A188 includes a mechanical connection, such as, for example, a rocker arm, to extend from the connection member A1030 to the load device c092. The adapter A188 further provides a diameter, length, or other dimension of the load device c092 to be decoupled from dimensions of the closed cycle engine. In various embodiments, the adapter A188 provides the dynamic member A181 and/or extension member A186 of the load device c092 to have a stroke or length different from the connection member A1030. The adapter A188 may further provide the load device c092 to include a gearing system, a frequency converter, or other devices to alter or scale the output of the load device c092 from the size or speed of the piston assembly A1010. As such, the closed cycle engine and the load device c092 may each be sized substantially separately for improved performance of each.

In general, the exemplary embodiments of system A10 and engine, or portions thereof, described herein may be manufactured or formed using any suitable process. However, in accordance with several aspects of the present subject matter, some or all of system A10 may be formed using an additive manufacturing process, such as a 3-D printing process. The use of such a process may allow portions of the system A10 to be formed integrally, as a single monolithic component, or as any suitable number of sub-components. In various embodiments, the manufacturing process may allow the all or part of the heater body, the chiller assembly, the load device c092, or the engine to be integrally formed and include a variety of features not possible when using prior manufacturing methods. For example, the additive manufacturing methods described herein provide the manufacture of the system A10 having unique features, configurations, thicknesses, materials, densities, and structures not possible using prior manufacturing methods. Some of these novel features can, for example, improve thermal energy transfer between two or more components, improve thermal energy transfer to the engine working fluid, improve thermal energy transfer from the engine working fluid to the chiller working fluid, reduce leakages, or facilitate assembly, or generally improve thermal efficiency, power generation and output, or power density of the system A10 using an additive manufacturing process as described herein.

**Exemplary Embodiments of the System and Engine**

Closed-cycle engine arrangements, such as Stirling engines, generally define a ratio of power output in Watts to a product of mean average engine working fluid pressure in Pascals, swept volume of the engine working fluid in cubic meters, and engine cycle frequency in Hertz (i.e., operating frequency of a piston assembly), otherwise referred to as a Beale number. A maximum operating Beale number for Stirling engines, depending on operating temperature and engine performance, generally ranges between 0.05 and 0.15. Referring to certain embodiments of the system A10 shown and described herein, features, arrangements, ratios, or methods of manufacture and assembly shown and described herein provide the engine A100 to define a maximum operational Beale number greater than or equal to 0.10. In another embodiment, the engine A100 defines a maximum operational Beale number greater than 0.15. In still another embodiment, the engine A100 defines a maximum operational Beale number greater than 0.20. In yet another embodiment, the engine A100 defines a maximum operational Beale number greater than 0.23. In various embodiments, the engine A100 defines a maximum operational Beale number less than or equal to 0.35. In still various embodiments, the engine A100 defines a maximum operational Beale number less than 0.30. In one embodiment, embodiments of the engine A100 shown and described herein define a maximum operational Beale number between 0.10 and 0.35, inclusive. In still various embodiments, the engine A100 defines a maximum operational Beale number between 0.15 and 0.30.

Embodiments of the system A10 and engine A100 provided herein provide greater Beale numbers via one or more of the features, arrangements, ratios, or methods of manufacture and assembly provided herein. Greater Beale numbers are provided at least in part via lower average engine working fluid pressure, lower engine cycle frequency of the piston assemblies A1010, or lower swept volume of the engine working fluid between fluidly connected chambers A221, A222, or combinations thereof, relative to the power output from the piston assembly A1010. Exemplary embodiments of the system A10 and engine A100 provided herein may produce a mechanical power output from the piston assembly A1010 up to 100 kilowatts (kW) or more.

Embodiments of the engine A100 provided herein may provide greater Beale numbers based at least in part on the plurality of heater conduits C110 collectively defining a desired heat transferability of thermal energy from the hot side heat exchanger C108 to the engine working fluid within the plurality of heater conduits C110. In various embodiments, the system A10 defines a ratio of maximum cycle volume of the engine working fluid to a collective volume of the plurality of heater conduits. The maximum cycle volume is the maximum volume of the engine working fluid relative to the expansion chamber A221 to the compression chamber A222 connected by the walled conduit A1050. The minimum cycle volume is the minimum volume of the engine working fluid relative to the expansion chamber A221 to the compression chamber A222 connected by the walled conduit A1050. The difference between the maximum cycle volume and the minimum cycle volume is the swept volume. In one embodiment, the ratio of maximum cycle volume of the engine working fluid to the volume of the passages within the plurality of heater conduits is between 2.5 and 25. For example, in various embodiments, the plurality of heater conduits together contain between two-fifths and one-twenty-fifth of the volume of the total volume of engine working fluid based on the maximum cycle volume. Stated differently, between two-fifths and one-twenty-fifth of the maximum cycle volume of the engine working fluid is receiving thermal energy from the hot side heat exchanger C108 during operation of the system A10.

In still various embodiments, embodiments of the engine A100 provided herein may provide greater Beale numbers based at least in part on a ratio of surface area of the plurality of heater conduits C110 versus volume of the working fluid within the plurality of heater conduits C110. For instance, the plurality of heater conduits may provide a range of surface area collectively within the plurality of heater conduits C110 relative to the volume of the engine working fluid within the plurality of heater conduits C110. The surface area may generally define the internal area of the heater conduits in direct fluid contact with the engine working fluid. In various embodiments, the ratio of surface area of the plurality of heater conduits to volume of the working fluid within the plurality of heater conduits is between 8 and 40. For example, in various embodiments, the plurality of heater conduits together defines a unit surface area within the conduits (i.e., surface area in fluid contact with the engine working fluid) between 8 and 40 times greater than a unit volume of the plurality of heater conduits.

In various embodiments, the internal surface area of the plurality of heater conduits is defined between a first opening and a second opening of the heater conduits C110. The first opening is in direct fluid communication with the expansion chamber A221, such as depicted at the piston chamber aperture C111 in FIG. 1.5.1. The second opening is in direct fluid communication with the walled conduit C1050, such as depicted at the opening C113 in FIG. 1.5.1. In one embodiment, the second opening is in direct fluid communication with the walled conduit C1050 including the regenerator body C800 defined therewithin. In another embodiment, the surface area of the plurality of heater conduits C110 defines an internal area of the heater conduits C110 corresponding to portions of the heater conduits C110 receiving thermal energy from the heater body C100. In another embodiment, the surface area of the plurality of heater conduits C110 defines an internal area of the heater conduits C110 extending from a first opening, such as defined at the plurality of piston apertures C111 in FIG. 1.5.1, to a first or proximal fin, tab, wall, or other feature of the fin array C1016 of the regenerator body C800 at the walled conduit C1050. In still another embodiment, such as an embodiment providing direct fluid communication of the heater conduits C110 to the chiller conduits A54, the second opening, such as depicted at opening C113 in FIG. 1.5.1., is in direct fluid communication with chiller collection chamber A62 or the chiller conduits A54. In various embodiments, the second opening, such as depicted at opening C113 in FIG. 1.5.1., is in direct fluid communication with the chiller collection chamber opening A60.

Embodiments of the engine A100 provided herein may provide greater Beale numbers based at least in part on the plurality of chiller conduits A54 collectively defining a desired heat transferability of thermal energy from the engine working fluid within the plurality of chiller conduits A54 to the cold side heat exchanger A42. In various embodiments, the system A10 defines a ratio of maximum cycle volume of the engine working fluid to a collective volume of the plurality of chiller conduits A54. In one embodiment, the ratio of maximum cycle volume of the engine working fluid to the volume of the plurality of chiller conduits A54 is between 10 and 100. For example, in various embodiments, the plurality of chiller conduits A54 together contain between one-tenth and one-hundredth of the volume of the total volume of engine working fluid based on the maximum cycle volume. Stated differently, between one-tenth and one-hundredth of the maximum cycle volume of the engine working fluid is transferring thermal energy to the cold side heat exchanger A42 during operation of the system A10.

In still various embodiments, embodiments of the engine provided herein may provide greater Beale numbers based at least in part on a ratio of surface area of the plurality of chiller conduits A54 versus volume of the working fluid within the plurality of chiller conduits A54. For instance, the plurality of chiller conduits A54 may particularly provide a range of surface area collectively within the plurality of chiller conduits A54 relative to the volume of the engine working fluid within the plurality of chiller conduits A54. In various embodiments, the ratio of surface area of the plurality of chiller conduits A54 to volume of the working fluid within the plurality of chiller conduits A54 is between 7 and 40. For example, in various embodiments, the plurality of chiller conduits A54 together defines a unit surface area within the conduits (i.e., surface area in fluid contact with the engine working fluid) between 7 and 40 times greater than a unit volume of the plurality of chiller conduits A54.

In various embodiments, the surface area of the chiller conduits A54 is defined from the chiller passage opening A58 to the chiller collection chamber opening A60. In one embodiment, the surface area of the chiller conduits A54 is the internal area within the chiller conduits A54 corresponding to the portion of the chiller conduits A54 at least partially surrounded by the chiller working fluid within the chiller working fluid passage A66 in thermal communication with the engine working fluid.

Various embodiments of the system A10 and engine A100 shown and described herein provide desired power outputs, power densities, or efficiencies, or combinations thereof, based on one or more elements, arrangements, flowpaths, conduits, surface areas, volumes, or assemblies, or methods thereof, provided herein. Efficiencies described herein may include $T_{Hot,engine}$ corresponding to temperature input to the engine working fluid at the heater conduits or working fluid pathways C110 from the hot side heat exchanger C108. Still various embodiments include $T_{Cold,ambient}$ corresponding to temperature removed from the engine working fluid at the chiller conduits A54 to the cold side heat exchanger A42. In other instances, the temperature input may alternatively correspond to heat or thermal energy input to the engine working fluid, such as from the heating working fluid. Still further, the temperature removed may alternatively correspond to heat or thermal energy output from the engine working fluid, such as to the chiller working fluid. In still various embodiments, the environment is the chiller working fluid into which the engine A100 rejects, exhausts, or otherwise releases heat or thermal energy from the engine working fluid at the chiller conduits A54.

In still yet various embodiments, efficiencies described herein may include $Q_{out}$ corresponding to thermal energy received by the engine working fluid at the heater conduits or working fluid pathways C110 from the hot side heat exchanger C108. Still various embodiments include $Q_{In}$ corresponding to thermal energy received at the chiller working fluid at the chiller working fluid passage A56 at the cold side heat exchanger A42 from the engine working fluid at the chiller conduits A54.

In still another embodiment, $E_{out}$ is the net electrical energy output from the load device C092 that is operatively coupled to the engine A100 via the piston assembly C1010.

In various embodiments, the features, arrangements, surface areas, volumes, or ratios thereof provide the engine A100 to operate at higher efficiencies over known closed cycle engines, or Stirling engines particularly. Various embodiments of the system A10 provided herein may be configured to produce mechanical power output from the piston assembly A1010 at a Carnot efficiency $\eta_{Carnot}$ of up to approximately 80%. In some embodiments, the system A10 provided herein may be configured to produce mechanical power output from the piston assembly A1010 at an efficiency of up to approximately 80% in certain cold environments (e.g., space). In one embodiment, the Carnot efficiency corresponds to the thermal efficiency of the engine A100 receiving thermal energy or heat at the heater conduits C110 and expelling thermal energy or heat from the engine working fluid at the chiller conduits A54. In one embodiment, the Carnot efficiency corresponds at least to the engine A100 including the hot side heat exchanger C108 and the cold side heat exchanger A42, such as depicted at the engine level efficiency (FIG. 1.2.1).

Various embodiments of the system A10 provided herein may be configured to produce mechanical power output from the piston assembly A1010 at electrical efficiency of up to approximately 80%. In one embodiment, the electrical efficiency corresponds to the useful work generated by the engine A100 receiving heat or thermal energy from the heating working fluid and releasing heat or thermal energy to the chiller working fluid and converted into electrical energy via the load device C092, such as depicted within area A106 in FIG. 1.2.1. In one embodiment, the electrical efficiency corresponds at least to the system A10 including the engine A100, the heater body C100, and the chiller assembly A40, such as depicted at the system level efficiency (FIG. 1.2.1).

In one embodiment, the system A10 provides a temperature differential via the heater body C100 and the chiller assembly C40 in which the engine A100 generates mechanical power output between 1 kW and 100 kW relative to the piston assembly A1010. In another embodiment, the system A10 is configured to generate between 10 kW and 100 kW. In yet another embodiment, the system A10 is configured to generate between 25 kW and 100 kW. In yet another embodiment, the system A10 may be configured to produce greater than 100 kW. For example, the system A10 may include a plurality of the engine A100 operably coupled at two or more piston assemblies A1010 and the load device c092 to produce greater than 100 kW. In various embodiments, a plurality of the engine A100 may be operably coupled to produce up to 5 megawatts.

In still various embodiments, the engine A100 further defines a ratio of mechanical power output from the piston assembly A1010 to maximum cycle volume of the working fluid between 0.0005 and 0.0040 kilowatt per cubic centimeter (kW/cc) for a given efficiency. In various embodiments, the ratio of mechanical power output from the piston assembly A1010 to maximum cycle volume of the working fluid is a range of maximum ratio at which the mechanical power output from the piston assembly A1010 to maximum cycle volume of the working fluid is defined. In some embodiments, the engine A100 defines a maximum ratio of mechanical power output from the piston assembly A1010 to maximum cycle volume of the working fluid between 0.0005 and 0.0040 kW generated from the piston assembly A1010 for one cubic centimeter of engine working fluid at an engine efficiency of at least 50%. Stated differently, between 0.0005 and 0.0040 kW/cc is generated from the piston assembly A1010 for one cubic centimeter of engine working fluid at an engine efficiency of at least 50%. In various embodiments, the engine A100 defines a ratio of mechanical power output from the piston assembly A1010 to the maximum cycle volume of the working fluid between 0.0010 and 0.0030 kW/cc at an engine efficiency of at least 50%. In another embodiment, the engine A100 defines a ratio of mechanical power output from the piston assembly A1010 to the maximum cycle volume of the working fluid between 0.0015 and 0.0025 kW/cc at an engine efficiency of at least 50%. In one embodiment, the system A10 defines the ratio of mechanical power output from the piston assembly A1010 to maximum cycle volume of the working fluid between 0.0005 kW/cc and 0.0040 kW/cc at a Carnot efficiency of the engine of up to 80%. In another embodiment, the engine A100 defines the ratio of mechanical power output from the piston assembly A1010 to maximum cycle volume of the working fluid between 0.0005 kW/cc and 0.0040 kW/cc with an efficiency of the engine A100 of up to 60%.

Various embodiments of the system A10 shown and described herein provide a power density by efficiency that may be advantageous over certain power generation or energy conversion systems including engine and heat exchanger systems. In some embodiments, the system A10 includes a power density ($kW/m^3$) by system level efficiency greater than 51. For example, the power density is power output at the load device c092 over volume of the engine working fluid at the engine A100. In particular embodiments, the system A10 includes the power density over maximum cycle volume of the engine working fluid at the engine A100. In some embodiments, the system A10 includes a power density ($kW/m^3$) by efficiency greater than 100. In still other embodiments, the system A10 includes a power density ($kW/m^3$) by efficiency greater than 255. In various embodiments, the system A10 includes a power density ($kW/m^3$) by efficiency less than 400. In other embodiments, the system A10 includes a power density ($kW/m^3$) by efficiency less than 125. In still various embodiments, the system A10 includes a power density ($kW/m^3$) by efficiency between 51 and 400.

In still various embodiments, the engine A100 defines the efficiencies and ratio of mechanical power output from the piston assembly A1010 to maximum cycle volume of the engine working fluid with a temperature differential of the engine working fluid at the expansion chamber A221 and the compression chamber A222 of at least 630 degrees Celsius. In one embodiment, the cold side heat exchanger A42 is configured to reduce the temperature of the engine working fluid at the chiller conduits A54 and/or compression chamber A222 less than 120 degrees Celsius. In another embodiment, the cold side heat exchanger A42 is configured to reduce the temperature of the engine working fluid at the chiller conduits A54 or compression chamber A222 to between approximately -20 degrees Celsius and approximately 120 degrees Celsius on average during steady-state full power operation. In still another embodiment, the cold side heat exchanger A42 is configured to reduce the temperature of the engine working fluid at the chiller conduits A54 or compression chamber A222 to between 20 degrees Celsius and approximately 120 degrees Celsius on average during steady-state full power operation. In yet another embodiment, the hot side heat exchanger C108 is configured to heat the engine working fluid at the heater conduits C110 or expansion chamber A221 to at least 750 degrees Celsius. However, it should be appreciated that an upper limit of the heat provided to the hot side heat exchanger C108 or the expansion chamber A221 is based at least on materials limits, such as one or materials listed or described herein, or another suitable material for constructing the engine and/or system. Material limits may include, but are not limited to, a melting point, tensile stress, yield stress, deformation or deflection limits, or desired life or durability of the engine.

## BALANCE OF PLANT

In one aspect, example embodiments of a balance of plant for a prime power generator are provided. A balance of plant for a power generation system can be described as the supporting components and systems of the prime power generator of the system. In some embodiments, the prime power generator of the system can be any of the closed cycle engines provided herein. For instance, any of the embodiments of the balance of plant described herein can be employed with any of the Stirling engines provided herein. In other embodiments, the prime power generator can a solid oxide fuel cell. In further embodiments, the balance of plant embodiments described herein can be employed with any suitable prime power generator.

The balance of plant embodiments of the various power generation systems described herein can include various features for recovering heat generated by the prime power generator and utilizing the recovered heat in some useful way. For example, heat recovered from the prime power generator can be used to produce useful work. The useful work can be utilized to drive components of the balance of plant, such as compressors, pumps, blowers, etc. The recovered heat can also be recirculated to the prime power generator, e.g., to improve the efficiency thereof. Furthermore, in some embodiments, the useful work can cause one or more electric machines to generate electrical power. In addition, recovered heat can be provided to one or more thermal applications in thermal communication with components of the balance of plant. The one or more thermal applications can utilize the recovered heat in any suitable fashion. The provided heat can improve the efficiency of the one or more thermal applications.

In another aspect, various embodiments of Notarniocla cycle systems and components therefore are provided. Generally, the Notarnicola cycle systems described herein are operable to produce useful work. The so-called Notarnicola cycle systems operate on a Notarnicola cycle, or stated differently, on a constant density heat addition principle. For instance, the Notarnicola cycle systems described herein can include a constant density heat exchanger operable to hold a volume of working fluid at constant density during heat application. By applying heat to a working fluid held at constant density, the temperature and pressure of the working fluid can be increased and thus its potential energy can be increased as well. Advantageously, the increased potential energy of the working fluid can allow for an expansion device or the like to extract more useful work therefrom. In some embodiments, the Notarnicola cycle can include a Wrankel device, or constant density heat exchanger/expansion device, for producing and extracting useful work. The Notarnicola cycle system can be a bottoming-cycle for a closed cycle engine, such as any one of the engines described herein or as a standalone system for producing useful work and/or electrical power.

### Balance of Plant for Closed Cycle Engine

### Closed Cycle Engine in Thermal Balance of Plant with Topping-Cycle CHP

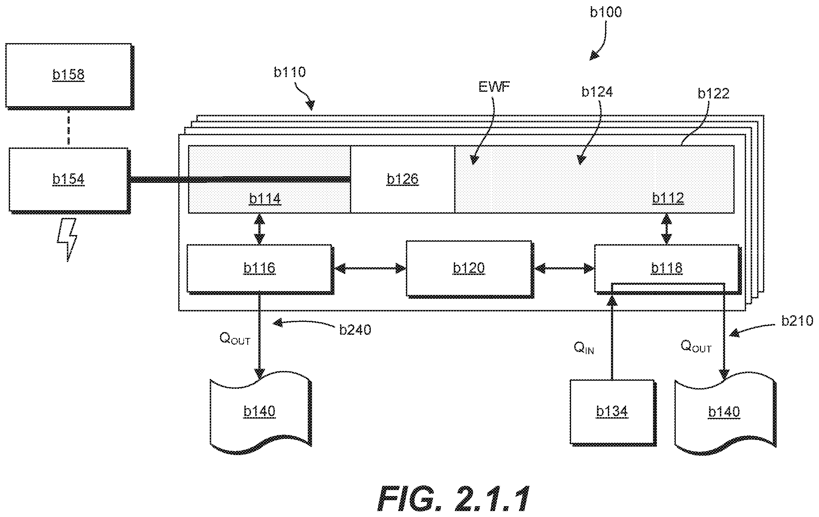

FIG. 2.1.1 provides a schematic view of a power generation system b100 according to an example embodiment of the present disclosure. More specifically, FIG. 2.1.1 provides a schematic view of a combined heat and power (CHP) or power generation system b100. The power generation system b100 is operatively configured to generate electrical power and thermal energy from a single fuel source or multiple fuel sources. Particularly, the power generation system b100 is operable to capture heat that would otherwise be emitted into an ambient environment during the electrical power generation process and redirect the captured heat for a useful purpose. Thus, the power generation system b100 of FIG. 2.1.1 is configured as a topping-cycle cogeneration system. The captured heat can be used for any suitable application, such as e.g., space heating, process steam, and/or other applications.

As depicted in FIG. 2.1.1, the power generation system b100 includes a closed cycle engine b110. The closed cycle engine b110 can be any of the closed cycle engines described herein. For instance, the closed cycle engine b110 can be one of the Stirling engines described herein. For this embodiment, the closed cycle engine b110 includes one or more piston assemblies b126 each movable within their respective piston bodies b122. Particularly, each piston assembly b126 is movable within a piston chamber b124 defined by their respective piston bodies b122. Additionally, the closed cycle engine b110 includes a regenerator b120, a hot side heat exchanger b118 operable to heat or impart thermal energy to the engine working fluid EWF within the piston bodies b122, and a cold side heat exchanger b116 operable to remove heat from the engine working fluid EWF within the piston bodies b122. Consequently, the closed cycle engine b110 generally defines a hot side b112 and a cold side b114. A heat source b134, such as e.g., solar, geothermal, a combustor b132, some combination thereof, etc., is operable to generate heat that can be provided to the hot side heat exchanger b118, e.g., via a heater loop b210. The heat generated by the heat source b134 can be imparted to the hot side b112 and ultimately to the engine working fluid EWF as denoted by $Q_{IN}$ in FIG. 2.1.1.

One or more electric machines b154 are operatively coupled with the closed cycle engine b110. For instance, each piston assembly b126 of the closed cycle engine b110 can have an electric machine b154 operatively coupled thereto. When the piston assemblies b126 are moved within their respective piston bodies b122, the one or more electric machines b154 can generate electrical power. The electric power generated by the one or more electric machines b154 can be provided to one or more electrical loads 158 in communication with the electric machines b154. For instance, the one or more electrical loads 158 can be a battery system, an electrical system connected thereto via the grid, or some other electrical load. Although the electric machine b154 is shown schematically in FIG. 2.1.1 and described herein as being outside of or external to the closed cycle engine b110, it will be appreciated that the electric machine b154 provided herein can be configured in any suitable manner described herein. For instance, the electric machine b154 can be configured as shown in any of FIGS. 1.7.5, 1.7.6, 1.7.7, 1.7.8, etc. or elsewhere herein.

As further depicted in FIG. 2.1.1, heat generated by the closed cycle engine b110 during electrical power generation is captured and provided to one or more thermal applications b140 of the power generation system b100. As one example, heat removed by the cold side heat exchanger b116 can be captured and provided to one or more thermal applications b140 in thermal communication with the cold side heat exchanger b116, as denoted by $Q_{OUT}$ in FIG. 2.1.1. For instance, relatively hot air or water can be removed from the cold side heat exchanger b116 and provided to the one or more thermal applications b140, e.g., via a chiller loop b240. Thus, in some embodiments, the cold side b114 of the closed cycle engine b110, and more particularly, the cold side heat exchanger b116, is in fluid communication with the one or more thermal applications b140. The captured heat can increase the efficiency of the thermal applications b140. As another example, heat generated by the heat source b134 and provided to the hot side heat exchanger b118 can be captured after being utilized to heat the hot side b112 of the closed cycle engine b110. The captured heat can be provided to one or more thermal applications b140 in thermal communication with the hot side heat exchanger b118, as denoted by $Q_{OUT}$ in FIG. 2.1.1. In some embodiments, the hot side b112 of the closed cycle engine b110, and more particularly, the hot side heat exchanger b118, is in fluid communication with the one or more thermal applications b140. The one or more thermal applications b140 in thermal communication with the cold side heat exchanger b116 and/or the hot side heat exchanger b118 can be any suitable thermal applications b140. For instance, the one or more thermal applications b140 can include a fluid heating device operable to heat air and/or water, such as e.g., a water heater appliance or a heating ventilation and air conditioning appliance. The thermal applications b140 can be residential and/or industrial thermal applications b140, for example.

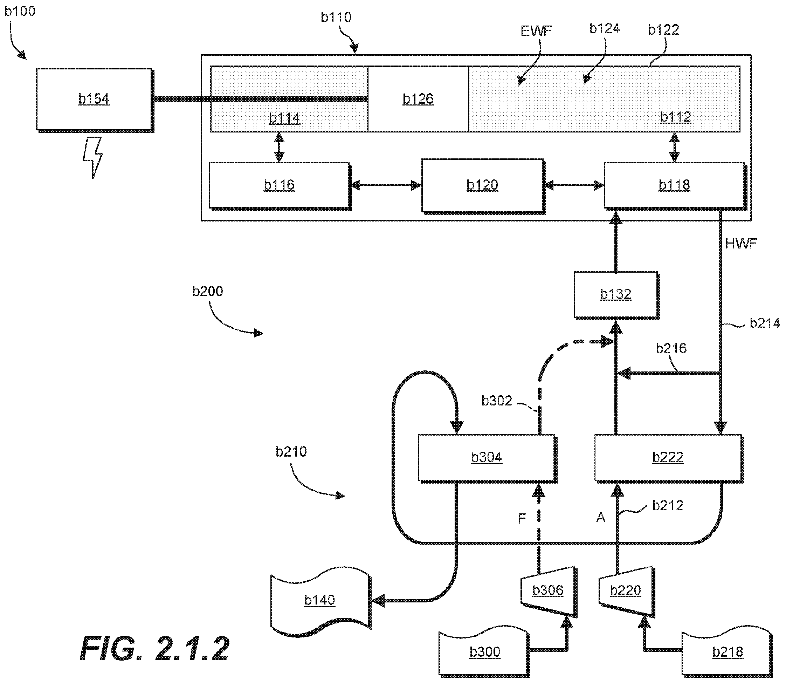

FIG. 2.1.2 provides a schematic view of a power generation system b100 according to an example embodiment of the present disclosure. As depicted in FIG. 2.1.2, the power generation system b100 includes a closed cycle engine b110. The closed cycle engine b110 can be the closed cycle engine b110 described above with reference to FIG. 2.1.1. Particularly, the closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114. Furthermore, as shown, one or more electric machines b154 are operatively coupled with the piston assemblies b126. When the piston assemblies b126 are moved within their respective piston bodies b122, the electric machines b154 are operable to generate electrical power.

For this embodiment, the closed cycle engine b110 includes a balance of plant b200 (i.e., supporting components and auxiliary systems of the closed cycle engine b110). The balance of plant b200 includes a heater loop b210 operable to impart thermal energy to the hot side heat exchanger b118. In turn, the hot side heat exchanger b118 can heat or impart thermal energy to the engine working fluid EWF within the piston bodies b122, thereby causing the engine working fluid EWF to expand and do work on the piston assembly b126, which causes the piston assembly b126 to move within the piston body b122.

As illustrated in FIG. 2.1.2, the heater loop b210 includes a compressor b220. The compressor b220 is positioned along an intake line b212 of the heater loop b210. The compressor b220 moves air (denoted by the "A" in FIG. 2.1.2) into the heater loop b210 from an air source b218 (e.g., an ambient environment) and pressurizes the air. That is, the compressor b220 compresses the incoming air, which causes the pressure of the incoming air to increase. In some embodiments, the compressor b220 is optional. Furthermore, in some embodiments, the compressor b220 moves a gas other than ambient air to the combustor b132, such as oxygen or an oxidizing gas. A recuperator b222 is positioned downstream of the compressor b220 along the intake line b212 of the heater loop b210 as well as along a heat recovery loop b214 of the heater loop b210. The air pressurized by the compressor b220 flows downstream to the recuperator b222 along the intake line b212 where the pressurized air is pre-heated by heating working fluid HWF (e.g., hot combustion gases) recovered from the closed cycle engine b110, or more particularly, from the hot side heat exchanger b118 of the closed cycle engine b110. As the pressurized and now pre-heated air flows downstream, the pressurized/pre-heated air combines or mixes with the heating working fluid HWF recirculated from the hot side heat exchanger b118, e.g., via a recirculation loop b216 of the heat recovery loop b214. In FIG. 2.1.2, the recirculation loop b216 is shown schematically, and it will be appreciated that the recirculation loop b216 can have many suitable configurations. For instance, the recirculation loop b216 can be configured as the eductor c116 described herein.

The heated air mixes with fuel (denoted by the "F" in FIG. 2.1.2) and the fuel/air mixture is combusted in a combustor b132 or burner of the closed cycle engine b110. The combustion gases generated by the combustion process are provided to the hot side heat exchanger b118 via the intake line b212. The hot side heat exchanger b118 facilitates heat exchange between the heating working fluid HWF (e.g., hot combustion gases) and the working fluid within the piston body b122. The heat imparted to the working fluid creates a temperature differential between the hot side b112 and the cold side b114 of the closed cycle engine b110. The expansion and compression of the working fluid causes the piston assemblies b126 to move within their respective piston bodies b122, thereby producing useful work. The useful mechanical work can be converted into electrical power, e.g., by the one or more electric machines b154 operatively coupled with the piston assemblies b126.

After the heating working fluid HWF imparts thermal energy to the engine working fluid EWF within the piston body b122, the heating working fluid HWF is captured and directed downstream along the heat recovery loop b214 for further useful purposes. For instance, a portion of the heating working fluid HWF is recirculated via the recirculation loop b216 back to the combustor b132 and a portion of the heating working fluid HWF is used to impart thermal energy to the pressurized air passing through the recuperator b222. That is, a portion of the heating working fluid HWF is used to preheat the incoming pressurized air at the recuperator b222.

After flowing through the recuperator b222, in some embodiments, the heating working fluid HWF recovered from the hot side heat exchanger b118 continues downstream along the heat recovery loop b214 to a fuel preheater b304. The heating working fluid HWF can impart thermal energy to fuel flowing downstream along a fuel line 302 from a fuel source b300 (e.g., a fuel tank). For this embodiment, a fuel pump b306 is positioned along the fuel line 302 for moving the fuel (e.g., liquid fuel) from the fuel source b300 downstream along the fuel line 302. In this way, the fuel can be preheated prior to being mixed with the heated/pressurized air. Preheating the fuel prior to mixing with the heated/pressurized air can reduce the amount of fuel required for the same work output. After heat exchange at the fuel preheater b304, the heating working fluid HWF flows downstream along the heat recovery loop b214 of the heater loop b210 to one or more thermal applications b140 in fluid communication therewith. As noted above, the one or more thermal applications b140 in fluid communication with the hot side heat exchanger b118 can be any suitable thermal applications b140. For instance, the one or more thermal applications b140 can include a fluid heating device operable to heat air and/or water for building or other industrial use.

Notably, for this embodiment, the heat recovered from the hot side heat exchanger b118 is exchanged with the various elements along the heater loop b210 and the one or more thermal applications b140 noted above in an ordered manner to achieve high efficiency of the power generation system b100. For instance, for the depicted embodiment of FIG. 2.1.2, the heat or thermal energy generated by the combustor b132 is first used by the hot side heat exchanger b118 to heat the engine working fluid EWF within the piston body b122. Thereafter, the heating working fluid HWF can continue downstream. Some of the recovered combustion gases or heated working fluid HWF are directed back to the combustor b132 via the recirculation loop b216 (e.g., via the eductor c116 described herein) and some of the combustion gases are directed to the recuperator b222 for pre-heating the compressed air, which also returns heat to the engine. Next, the hot combustion gases are used to pre-heat the fuel at the fuel preheater b304, thereby returning heat to the engine. Finally, the remaining useable heat is directed to the one or more thermal applications b140 positioned downstream of the fuel preheater b304.

In some embodiments, however, the heat generated by the combustor b132 can be used to heat all or only some of the elements described above. For instance, in some embodiments, the hot combustion gases generated by the combustor b132 can be passed through the hot side heat exchanger b118 to exchange heat with the engine working fluid EWF and then can be passed directly downstream to the one or more thermal applications b140. In other embodiments, the hot combustion gases generated by the combustor b132 can be passed through the hot side heat exchanger b118 to exchange heat with the engine working fluid EWF, a portion of the combustion gases can be recirculated to the combustor b132 via the recirculation loop b216, and the remaining portion of the combustion gases can be passed directly downstream to the one or more thermal applications b140. In further embodiments, the hot combustion gases generated by the combustor b132 can be passed through the hot side heat exchanger b118 to exchange heat with the engine working fluid EWF, a portion of the combustion gases can be recirculated to the combustor b132 via the recirculation loop b216, and the remaining portion of the combustion gases can be passed through the recuperator b222 to exchange heat with the incoming pressurized air and then can be passed directly downstream to the one or more thermal applications b140.

In yet other embodiments, the hot combustion gases generated by the combustor b132 can be passed through the hot side heat exchanger b118 to exchange heat with the engine working fluid EWF, a portion of the combustion gases can be recirculated to the combustor b132 via the recirculation loop b216, and the remaining portion of the combustion gases can be passed through the recuperator b222 to exchange heat with the incoming pressurized air, passed through the fuel preheater b304 to exchange heat with the incoming fuel, and then can be passed directly downstream to the one or more thermal applications b140. In some embodiments, additionally or alternatively to the heater loop b210 of FIG. 2.1.2, the hot side heat exchanger b118 can be in direct fluid communication with the one or thermal applications b140. A valve can be positioned along the direct line and can be controlled to selectively allow hot combustion gases to flow directly from the exit of the hot side heat exchanger b118 to the one or more thermal applications b140. In this way, if the thermal applications b140 require a preselected amount of thermal energy, the hot combustion gases can be directed directly thereto, e.g., for a predetermined time. In some embodiments, some or all of the heat exchange elements of the heater loop b210 and closed cycle engine b110 can be additively manufactured.

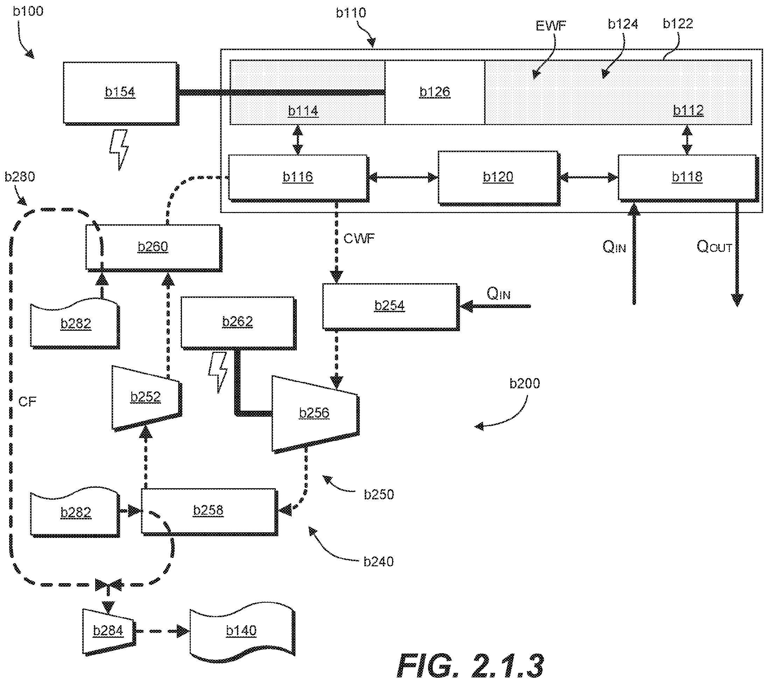

FIG. 2.1.3 provides a schematic view of another power generation system b100 according to an example embodiment of the present disclosure. As depicted in FIG. 2.1.3, the power generation system b100 includes a closed cycle engine b110. The closed cycle engine b110 can be the closed cycle engine b110 described above with reference to FIG. 2.1.1. Particularly, the closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114. Furthermore, as shown, one or more electric machines b154 are operatively coupled with the piston assemblies b126. When the piston assemblies b126 are moved within their respective piston bodies b122, the electric machines b154 are operable to generate electrical power.

For this embodiment, the closed cycle engine b110 includes a balance of plant b200. The balance of plant b200 includes a chiller loop b240 operable to remove heat or thermal energy from the cold side b114 of the closed cycle engine b110. Particularly, a chiller working fluid CWF can be passed through the cold side heat exchanger b116. The engine working fluid EWF can exchange heat with the relatively cool chiller working fluid CWF flowing through the cold side heat exchanger b116, and thus, the chiller working fluid CWF removes heat from the closed cycle engine b110 to provide cooling thereto, e.g., at the cold side b114. The cooled engine working fluid EWF facilitates compression thereof when the piston assembly b126 is moved toward the compression space by the expansion of the engine working fluid EWF at the other end of the piston assembly b126.

As illustrated in FIG. 2.1.3, the chiller loop b240 includes two linked loops, including a bottoming-cycle loop b250 and a cooling loop b280. The bottoming-cycle loop b250 or system is a recovered heat to power system. Particularly, a chiller working fluid CWF, such as e.g., a supercritical carbon dioxide or some other suitable low temperature working fluid, is moved through the bottoming-cycle loop b250 to remove heat from the compression space or cold side b114 of the engine (e.g., to increase the temperature differential between the expansion and compression spaces of the engine). Components of the bottoming-cycle loop b250 utilize the captured heat to generate electrical power. The cooling loop b280 is operable to cool certain components positioned along the bottoming-cycle loop b250. Specifically, a cooling fluid CF, such as e.g., ambient air or some other suitable heat-sink fluid, is moved through the cooling loop b280 and exchanges heat with the various components of the bottoming-cycle loop b250 to provide cooling thereto. The chiller loop b240 will be described in detail below.

For this embodiment, the bottoming-cycle loop b250 of the chiller loop b240 includes a pump b252 operable to move the chiller working fluid CWF along or through the bottoming-cycle loop b250. As noted above, the chiller working fluid CWF can be a supercritical carbon dioxide fluid or some other suitable low temperature working fluid. A fourth heat exchanger or precooler b260 is positioned downstream of the pump b252 along the bottoming-cycle loop b250. The precooler b260 is optional in some embodiments. The precooler b260 cools the chiller working fluid CWF as the chiller working fluid CWF flows therethrough. The cold side heat exchanger b116 (e.g., an evaporator) is positioned downstream of the precooler b260 along the bottoming-cycle loop b250. The cold side heat exchanger b116 is positioned in a heat exchange relationship with the compression space or cold side b114 of the closed cycle engine b110 as shown in FIG. 2.1.3. During operation of the closed cycle engine b110, the chiller working fluid CWF flowing through the cold side heat exchanger b116 picks up or removes heat from the engine working fluid EWF and walls of the piston body b122 at or proximate the compression space of the engine. That is, the engine working fluid EWF and walls at or proximate the compression space of the engine impart thermal energy to the chiller working fluid CWF flowing through the cold side heat exchanger b116. Accordingly, the compression space or cold side b114 of the engine acts as a first heat source and heat recovered therefrom can be utilized to generate electrical power, among other possible uses.

In some embodiments, optionally, the relatively hot chiller working fluid CWF flows downstream from the cold side heat exchanger b116 to a superheater b254 or second heat exchanger positioned along the bottoming-cycle loop b250. A second heat source b134, denoted by the $Q_{IN}$ in FIG. 2.1.3, can impart additional thermal energy to the chiller working fluid CWF flowing through the superheater b254. The second heat source b134 can be any suitable heat source b134, such as e.g., another working fluid, electric resistance or induction heating, heat from solar energy, some combination thereof, etc. In some embodiments, as will be explained in greater detail herein, the superheater b254 holds or contains the chiller working fluid CWF at constant density during heat application. In this way, in addition to increasing the temperature at the superheater b254, the pressure of the chiller working fluid CWF can be increased as well. This can increase the potential energy of the chiller working fluid CWF. In yet other embodiments, the superheater b254 is operatively configured to hold the chiller working fluid CWF at constant specific volume during heat application. In some other embodiments, the superheater b254 is operable to heat the chiller working fluid CWF flowing therethrough in any suitable manner.

An expansion device b256 is positioned downstream of the cold side heat exchanger b116 along the bottoming-cycle loop b250. In some embodiments, the expansion device b256 is immediately downstream of the cold side heat exchanger b116. In yet other embodiments, as noted above, the expansion device b256 is downstream of the cold side heat exchanger b116 but directly downstream of the superheater b254. The expansion device b256 can be a turbine, for example. The expansion device b256 can be operatively coupled with one or more elements of the chiller loop b240 and/or the heater loop b210. For instance, the expansion device b256 can be mechanically coupled with the pump b252 of the bottoming-cycle loop b250, the compressor b220 of the heater loop b210 (e.g., the compressor b220 of FIG. 2.1.2), and/or a fan b284 of the chiller loop b240, among other components. The expansion device b256 can be mechanically coupled with such components via one or more shafts or a shaft system. The expansion device b256 is operable to extract thermal energy from the chiller working fluid CWF to produce useful work such that electrical power can be generated and/or saved. Particularly, the expansion of the chiller working fluid CWF can drivingly rotate the expansion device b256 about its axis of rotation, which in turn drives one or more shafts and the components operatively coupled thereto. Moreover, when the shaft is driven by rotation of the expansion device b256, the useful work produced can be utilized by one or more electric machines b262 operatively coupled to the expansion device b256. In some embodiments, the one or more electric machines b262 are electric generators. In this way, the one or more electric machines b262 can generate electrical power when driven by the expansion device b256. The electrical power generated can be used to operate the various devices or components of the power generation system b100, such as e.g., fans, pumps, outside air conditioning units, onboard vehicle systems, among other potential uses, thereby increasing overall system electrical efficiency. In some embodiments, the one or more electric machines b262 are electric motors.

After expanding at the expansion device b256 to produce useful work such that electrical power can ultimately be generated, the chiller working fluid CWF flows downstream from the expansion device b256 to a third heat exchanger b258 positioned along the bottoming-cycle loop b250. The third heat exchanger b258 is positioned between the expansion device b256 and the pump b252 along the bottoming-cycle loop b250. The third heat exchanger b258 cools the chiller working fluid CWF before the chiller working fluid CWF flows downstream to the pump b252 where the chiller working fluid CWF is pumped or moved along the bottoming-cycle loop b250 once again.

As noted above, the chiller loop b240 includes the cooling loop b280 linked to the bottoming-cycle loop b250. As depicted in FIG. 2.1.3, the cooling fluid CF is introduced into the cooling loop b280 at the precooler b260 via a pressure differential. The cooling fluid CF can be moved from a fluid source b282 through the precooler b260. The relatively cool cooling fluid CF can pick up or remove heat from the chiller working fluid CWF flowing through the bottoming-cycle loop b250 at the precooler b260. That is, the chiller working fluid CWF of the bottoming-cycle loop b250 can impart thermal energy to the cooling fluid CF of the cooling loop b280 at the precooler b260. In addition, cooling fluid CF is introduced into the cooling loop b280 at the third heat exchanger b258 via a pressure differential. The cooling fluid CF can be moved from a fluid source b282 through the third heat exchanger b258. The relatively cool cooling fluid CF can pick up heat from the chiller working fluid CWF flowing through the bottoming-cycle loop b250 at the third heat exchanger b258. That is, the chiller working fluid CWF flowing along the bottoming-cycle loop b250 can impart thermal energy to the cooling fluid CF of the cooling loop b280 at the third heat exchanger b258. As illustrated in FIG. 2.1.3, the cooling fluid CF can flow downstream from the precooler b260 and downstream from the third heat exchanger b258 to a fan b284 positioned along the cooling loop b280. The fan b284 moves the relatively warm cooling fluid CF to one or more thermal applications b140 of the power generation system b100. The fan b284 can cause the pressure differential at the inlet of the precooler b260 and the inlet of the third heat exchanger b258 such that the cooling fluid CF is moved into the cooling loop b280 of the chiller loop b240. Thus, for the depicted embodiment of FIG. 2.1.3, the heat extracted from the cold side b114 of the closed cycle engine b110 is used by the bottoming-cycle loop b250 to generate electrical power and the remainder of the heat is directed to a thermal application of the power generation system b100 via the cooling loop b280, e.g., for hot water or air generation.

Moreover, in some embodiments, the fan b284 can be controlled by one or more controllers to control the mass flow through the cooling loop b280. In this way, the heat removed from the chiller working fluid CWF and the heat provided to the one or more thermal applications b140 can be controlled. The fan b284 can be modulated between an on and off position and/or modulated to various speeds for controlling the mass flow through the cooling loop b280. In addition, in some embodiments, the precooler b260 and the third heat exchanger b258 each have dedicated fans that can be controlled independently of one another.

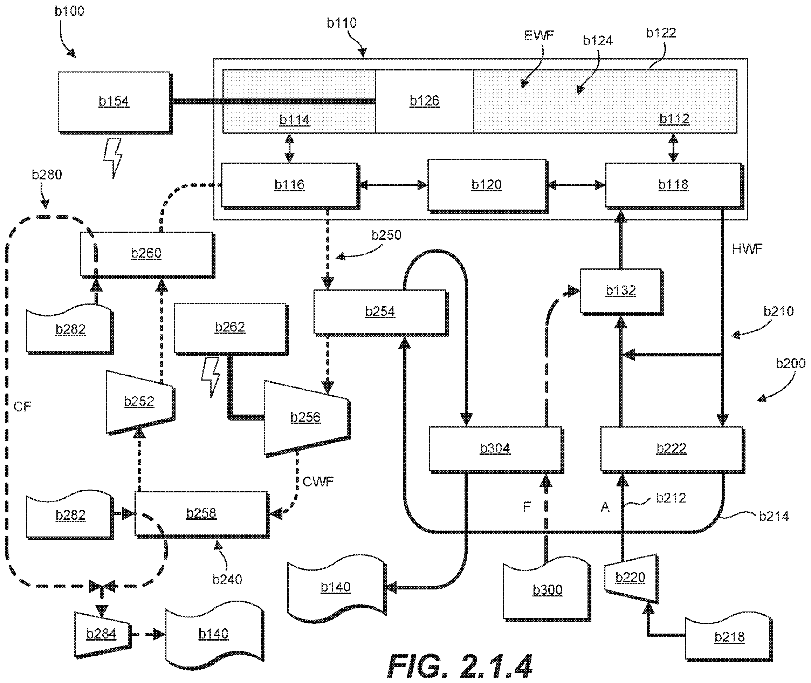

FIG. 2.1.4 provides a schematic view of yet another power generation system b100 according to an example embodiment of the present disclosure. As depicted in FIG. 2.1.4, the power generation system b100 includes a closed cycle engine b110. The closed cycle engine b110 can be the closed cycle engine b110 described above with reference to FIG. 2.1.1. Particularly, the closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114. Furthermore, as shown, one or more electric machines b154 are operatively coupled with the piston assemblies b126. When the piston assemblies b126 are moved within their respective piston bodies b122, the electric machines b154 are operable to generate electrical power.

Generally, the power generation system b100 of FIG. 2.1.4 combines the balance of plant b200 features of the embodiment of FIG. 2.1.2 and the embodiment of FIG. 2.1.3. Moreover, notably for this embodiment, the heater loop b210 is positioned at least in part in a heat exchange relationship with the chiller loop b240. Accordingly, as will be explained below, heat captured from the hot side b112 of the engine can be used as a heat source b134 for increasing the temperature of the chiller working fluid CWF flowing along the bottoming-cycle loop b250 to increase the potential energy thereof. In this way, more electrical power can be generated by the one or more electric machines b262 operatively coupled with the expansion device b256 of the chiller loop b240. The remainder of the recovered heat can be directed to one or more thermal applications b140. In addition, heat captured by the cooling cycle of the chiller loop b240 can be directed to the same or different one or more thermal applications b140. In some embodiments, the thermal applications b140 can be bottoming-cycles, e.g., having one or more components operable to produce further electrical power and/or useful work.

For this embodiment, the heater loop b210 includes a compressor b220 positioned along an intake line b212 of the heater loop b210. The compressor b220 moves air into the heater loop b210 from an air source b218 (e.g., an ambient environment) and pressurizes the air. A recuperator b222 is positioned downstream of the compressor b220 along the intake line b212 of the heater loop b210 as well as along a heat recovery loop b214 of the heater loop b210. The air pressurized by the compressor b220 flows downstream to the recuperator b222 along the intake line b212 where the pressurized air is pre-heated by hot combustion gases recovered from the closed cycle engine b110, or more particularly, from the hot side heat exchanger b118 of the closed cycle engine b110. As the pressurized and now pre-heated air flows downstream, the pressurized/pre-heated air combines or mixes with hot combustion gases recirculated from the hot side heat exchanger b118, e.g., via a recirculation loop b216 of the heat recovery loop b214.

The heated air mixes with fuel and the fuel/air mixture is combusted in a combustor b132 or burner of the closed cycle engine b110. The combustion gases generated by the combustion process are provided to the hot side heat exchanger b118 via the intake line b212. The hot side heat exchanger b118 facilitates heat exchange between the hot combustion gases and the working fluid within the piston body b122. The heat imparted to the engine working fluid EWF creates a temperature differential between the hot side b112 and the compression space (e.g., the cold side b114) of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b154 operatively coupled with the piston assemblies b126.

After the relatively hot combustion gases impart thermal energy to the working fluid within the piston body b122, the combustion gases are captured and directed downstream along the heat recovery loop b214 for further useful purposes. For instance, a portion of the combustion gases are recirculated via the recirculation loop b216 back to the combustor b132 and a portion of the combustion gases are used to impart thermal energy to the pressurized air passing through the recuperator b222. That is, a portion of the combustion gases are used to preheat the incoming pressurized air at the recuperator b222.

After flowing through the recuperator b222, the hot combustion gases recovered from the hot side heat exchanger b118 of the closed cycle engine b110 continue downstream along the heat recovery loop b214 to the superheater b254 of the chiller loop b240. Thus, as noted above, the heater loop b210 is at least in part in a heat exchange relationship with the chiller loop b240. Particularly, for this embodiment, the heater loop b210 is at least in part in a heat exchange relationship with the chiller loop b240 at the superheater b254. The hot combustion gases heat or impart thermal energy to the chiller working fluid CWF flowing through the bottoming-cycle loop b250 at the superheater b254. In this way, the temperature of the chiller working fluid CWF is increased even further prior to expanding at the expansion device b256 downstream of the superheater b254. The increased potential energy of the chiller working fluid CWF allows the expansion device b256 to extract more useful work therefrom. Accordingly, more electrical power can be generated by the one or more electric machines b262 operatively coupled thereto.

After imparting thermal energy to the chiller working fluid CWF at the superheater b254, the combustion gases flow downstream along the heat recovery loop b214 to the fuel preheater b304. The combustion gases can impart thermal energy to fuel flowing downstream along a fuel line 302 from a fuel source b300 (e.g., a fuel tank) the fuel preheater b304. In this way, the fuel can be preheated prior to being mixed with the heated/pressurized air. Preheating the fuel prior to mixing with the heated/pressurized air can reduce the amount of fuel required for the same work output. After heat exchange at the fuel preheater b304, the combustion gases flow downstream along the heat recovery loop b214 of the heater loop b210 to one or more thermal applications b140 in fluid communication therewith. As noted above, the one or more thermal applications b140 in fluid communication with the hot side heat exchanger b118 can be any suitable thermal applications b140. For instance, the one or more thermal applications b140 can include a fluid heating device operable to heat air and/or water for building or other industrial use.

Notably, for this embodiment, the heat recovered from the hot side heat exchanger b118 is exchanged with the various elements along the heater loop b210 and the one or more thermal applications b140 noted above in an ordered manner to achieve high efficiency of the power generation system b100. For instance, for the depicted embodiment of FIG. 2.1.4, the thermal energy generated by the combustor b132 is first used by the hot side heat exchanger b118 to heat the working fluid within the piston body b122. Thereafter, the hot combustion gases continue downstream. Some of the recovered combustion gases are directed back to the combustor b132 via the recirculation loop b216 and some of the combustion gases are directed to the recuperator b222 for pre-heating the compressed air, which also returns heat to the engine. Next, the hot combustion gases are used to heat the chiller working fluid CWF flowing along the bottoming-cycle loop b250 at the superheater b254. The hot combustion gases are then used to pre-heat the fuel at the fuel preheater b304, thereby returning heat to the engine. Finally, the remaining useable heat is directed to the one or more thermal applications b140 positioned downstream of the fuel preheater b304.

The chiller loop b240 is similarly configured as described with reference to the embodiment of FIG. 2.1.3. Notably, as noted above, the heat source b134 that imparts thermal energy to the chiller working fluid CWF flowing through the bottoming-cycle loop b250 at the superheater b254 is the hot combustion gases flowing along the heat recovery loop b214 of the heater loop b210. Accordingly, heat recovered from the hot side b112 of the engine is utilized for electrical power generation. Furthermore, it will be appreciated that the various loops of the balance of plant b200 can be controlled by one or more controllers. Particularly, components of the heater loop b210, the chiller loop b240, including the bottoming-cycle loop b250 and the cooling loop b280, can be controlled in accordance with the desired output of the closed cycle engine b110, the electric machines b154, and the electric machines b262, as well as the thermal requirements of the thermal applications b140.

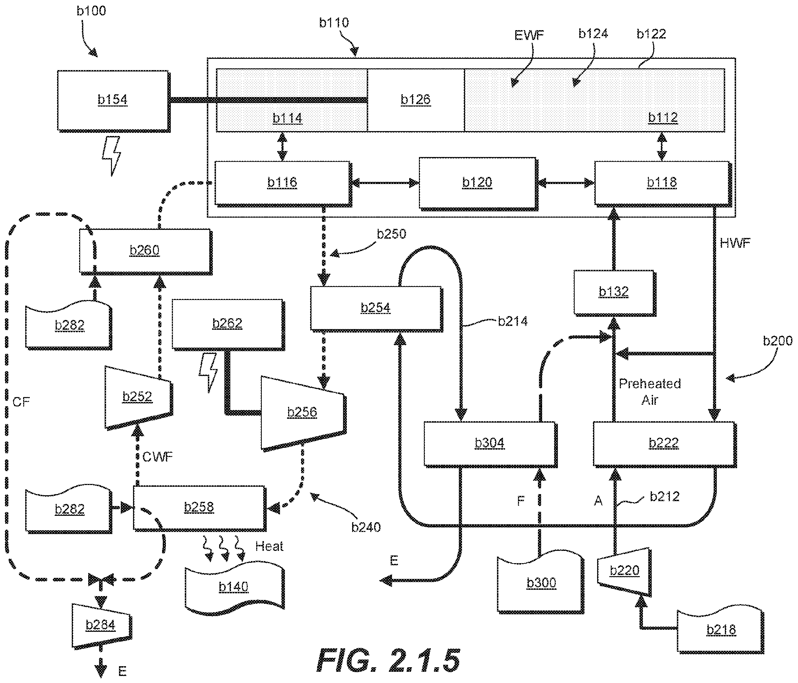

FIG. 2.1.5 provides a schematic view of another power generation system b100 according to an example embodiment of the present disclosure. The power generation system b100 of FIG. 2.1.5 is configured in a similar manner as the power generation system b100 of FIG. 2.1.4, except as provided below. For this embodiment, heat provided to the one or more thermal applications b140 is captured directly from the third heat exchanger b258 positioned along the bottoming-cycle loop b250 rather than from the cooling fluid CF used to cool the third heat exchanger b258. Accordingly, the one or more thermal applications b140 are in thermal communication with the third heat exchanger b258.

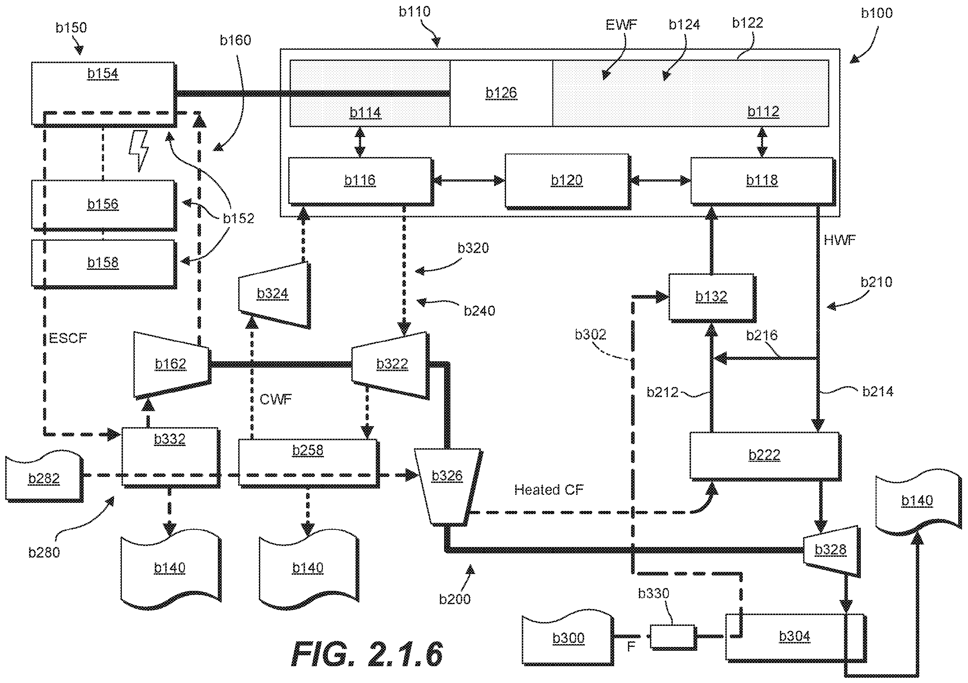

FIG. 2.1.6 provides a schematic view of a further example power generation system b100 according to an example embodiment of the present disclosure. For the illustrated embodiment of FIG. 2.1.6, the power generation system b100 includes a closed cycle engine b110. The closed cycle engine b110 can be the closed cycle engine b110 described above with reference to FIG. 2.1.1. Particularly, the closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114.

Furthermore, as shown, the power generation system b100 includes one or more electric machines b154 operatively coupled with the piston assemblies b126. When the piston assemblies b126 are moved within their respective piston bodies b122, the electric machines b154 are operable to generate electrical power. One or more energy storage devices b156 are in communication with the electric machines b154. The one or more energy storages devices can be any suitable type of energy storage devices b156, such as e.g., batteries, super capacitors, etc. In some embodiments, the one or more energy storage devices b156 are configured to receive electrical power from the one or more electric machines b154. That is, power generated by the electric machines b154, e.g., during operation of the closed cycle engine b110, can be provided to the one or more energy storage devices b156. In some embodiments, additionally or alternatively, the one or more energy storage devices b156 are configured to provide electrical power to the one or more electric machines b154, e.g., during initialization of the closed cycle engine b110. As further depicted in FIG. 2.1.6, one or more electrical loads 158 are electrically connectable with the one or more energy storage devices b156. In some embodiments, additionally or alternatively, the one or more electrical loads 158 are directly electrically connectable with the one or more electric machines b154. The one or more electrical loads 158 are configured to receive electrical power from the one or more energy storage devices b156 and/or the electric machines b154. The one or more electrical loads 158 can be any suitable type or application of electrical load. For example, the electrical loads 158 can be one or more building electrical loads 158, the electrical systems of a vehicle, and/or a power grid.

As further depicted in FIG. 2.1.6, the power generation system b100 includes a balance of plant b200. The balance of plant b200 includes a heater loop b210 that includes various components for imparting thermal energy to the hot side b112 of the closed cycle engine b110. Moreover, for this embodiment, the balance of plant b200 includes a refrigeration loop b320 for cooling the cold side b114 of the closed cycle engine b110. That is, various components positioned along the refrigeration loop b320 are configured to actively cool the cold side b114 of the closed cycle engine b110. The balance of plant b200 also includes an electrical system cooling loop b160 positioned at least in part in a heat exchange relationship with the electrical components b152 of the power generation system b100 for removing heat therefrom. Heat captured from the electrical system cooling loop b160 can be provided to one or more thermal applications b140 and/or the heater loop b210, for example. The balance of plant b200 further includes a cooling loop b280 for cooling various components positioned along the refrigeration loop b320 and the electrical system cooling loop b160. The refrigeration loop b320, the electrical system cooling loop b160, the cooling loop b280, and the heater loop b210 will be described in detail below.

The refrigeration loop b320 is positioned at least in part in a heat exchange relationship with the cold side b114 of the closed cycle engine b110 for removing heat therefrom. The refrigeration loop b320 includes a compressor b322 operable to move a chiller working fluid CWF through or along the refrigeration loop b320. The chiller working fluid CWF can be any suitable type of cooling fluid, such as e.g., a suitable refrigerant. A heat exchanger b258 is positioned downstream of the compressor b322 along the refrigeration loop b320. Notably, the heat exchanger b258 is in a heat exchange relationship with a cooling loop b280. The working fluid flowing through the cooling loop b280 removes heat from the chiller working fluid CWF flowing through the refrigeration loop b320 at the heat exchanger b258. In this way, heat is removed from the chiller working fluid CWF. In addition, for this embodiment, the heat expelled from the heat exchanger b258 is directed to one or more thermal applications b140 of the power generation system b100.

An expander b324 or expansion device b256 is positioned along the refrigeration loop b320 downstream of the heat exchanger b258 and between the cold side heat exchanger b116 and the heat exchanger b258. The expander b324 is operable to expand the chiller working fluid CWF. Consequently, the expander b324 decreases the temperature and pressure of the chiller working fluid CWF. In some embodiments, the chiller working fluid CWF is cooled below a temperature of an ambient environment along at least a portion of the refrigeration loop b320, and particularly, the chiller working fluid CWF is cooled below an ambient temperature downstream of the expander b324 and upstream of the cold side heat exchanger b116 positioned along the refrigeration loop b320 downstream of the expander b324 and upstream of the compressor b322. The cold side heat exchanger b116 and the heat exchanger b258 are positioned on opposing sides of the refrigeration loop b320.

The cold side heat exchanger b116 is in a heat exchange relationship with the cold side b114 of the closed cycle engine b110 for removing heat therefrom. Particularly, as the chiller working fluid CWF flows through the cold side heat exchanger b116, heat from the closed cycle engine b110 imparts thermal energy to the chiller working fluid CWF. In this way, the cold side b114 of the closed cycle engine b110 is cooled. After removing heat from the closed cycle engine b110 at the cold side heat exchanger b116, the chiller working fluid CWF flows downstream to the compressor b322 where the chiller working fluid CWF is moved around the refrigeration loop b320 once again. Thus, for this embodiment, the refrigeration loop b320 is a closed cycle loop.

The electrical system cooling loop b160 is positioned at least in part in a heat exchange relationship with the one or more electrical components b152 of the power generation system b100 for removing heat therefrom. Particularly, for this example embodiment, the electrical system cooling loop b160 is in a heat exchange relationship with the electric machines b154, the energy storage devices b156, and the electrical loads 158. However, in other embodiments, the electrical system cooling loop b160 can be in a heat exchange relationship with one, some, or all of the electric machines b154, the energy storage devices b156, and the electrical loads 158. A pump b162 is positioned along the electrical system cooling loop b160 and is operable to move an electrical system cooling fluid ESCF through the electrical system cooling loop b160. The electrical system cooling fluid ESCF can be any suitable type of cooling fluid. The pump b162 is operatively coupled with the compressor b322, e.g., via one or more shafts or a shaft system.

As depicted, the pump b162 moves the electrical system cooling fluid ESCF downstream through the electrical system cooling loop b160. Particularly, as the electrical system cooling fluid ESCF is moved through the electrical system cooling loop b160, the electrical system cooling fluid ESCF picks up or removes heat from the electric machines b154, from the energy storage devices b156, and finally from the electrical loads 158 in communication with the energy storage devices b156. A heat exchange device or radiator b332 is positioned along the electrical system cooling loop b160 downstream of the electrical components b152 of the electric system and upstream of the pump b162. The radiator b332 is operable to expel heat from the electrical system cooling fluid ESCF. Moreover, for this embodiment, the heat expelled from the radiator b332 is directed to one or more thermal applications b140 of the power generation system b100. After heat is expelled from the electrical system cooling fluid ESCF at the radiator b332, the electrical system cooling fluid ESCF flows downstream to the pump b162 and is recirculated through the electrical system cooling loop b160.

The cooling loop b280 is positioned at least in part in a heat exchange relationship with the heat exchanger b258 for removing heat from the chiller working fluid CWF flowing through the refrigeration loop b320 and at least in part in a heat exchange relationship with the radiator b332 for removing heat from the electrical system cooling fluid ESCF flowing through the electrical system cooling loop b160. Particularly, as shown in FIG. 2.1.6, a blower b326 is positioned along the cooling loop b280. The blower b326 is operable to move a working fluid through the cooling loop b280. For instance, the blower b326 can move working fluid (e.g., ambient air) received from a fluid source b282 into and through the cooling loop b280. The blower b326 is operatively coupled with the compressor b322, which is in turn operatively coupled with the pump b162. For instance, the blower b326 can be operatively coupled with the compressor b322 via one or more shafts or a shaft system.

When the working fluid is moved through the cooling loop b280, the working fluid is moved through the radiator b332 positioned along the electrical system cooling loop b160. The relatively hot electrical system cooling fluid ESCF flowing along the electrical system cooling loop b160 imparts thermal energy to the relatively cool working fluid flowing through the cooling loop b280 at the radiator b332. Accordingly, the temperature of the working fluid flowing along the cooling loop b280 is increased by the relatively hot electrical system cooling fluid ESCF at the radiator b332.

The heat exchanger b258 of the refrigeration loop b320 is positioned downstream of the radiator b332 along the cooling loop b280. Thus, conversely, the radiator b332 is positioned along the cooling loop b280 upstream of the heat exchanger b258. After exchanging heat with the electrical system cooling fluid ESCF flowing along the electrical system cooling loop b160 at the radiator b332, the working fluid flows downstream to the heat exchanger b258 along the cooling loop b280. The relatively hot chiller working fluid CWF flowing along the refrigeration loop b320 imparts thermal energy to the relatively cool working fluid flowing through the cooling loop b280 at the heat exchanger b258. Accordingly, the temperature of the working fluid flowing along the cooling loop b280 is increased by the relatively hot chiller working fluid CWF at the heat exchanger b258. Moreover, for this embodiment, the blower b326 is positioned downstream of the radiator b332 and the heat exchanger b258 along the cooling loop b280. However, in other embodiments, the blower b326 can be positioned upstream of the radiator b332 and/or the heat exchanger b258 along the cooling loop b280.

After flowing through the heat exchanger b258, the heated working fluid flows downstream to the blower b326. The blower b326 compresses the heated working fluid and moves the heated working fluid to the heater loop b210 of the balance of plant b200. Particularly, the blower b326 increases the pressure of the heated working fluid and moves the heated and pressurized working fluid downstream to a recuperator b222 positioned along an intake line b212 of the heater loop b210. The recuperator b222 is positioned along a heat recovery loop b214 of the heater loop b210 as well. At the recuperator b222, the pressurized and heated working fluid is heated by hot combustion gases recovered from the closed cycle engine b110, or more particularly, from the hot side heat exchanger b118 of the closed cycle engine b110. Accordingly, the temperature of the pressurized working fluid is increased at the recuperator b222.

After passing through the recuperator b222, the working fluid flows downstream along the intake line b212 of the heater loop b210. As the working fluid flows downstream, the working fluid combines or mixes with hot combustion gases recirculated from the hot side heat exchanger b118, e.g., via a recirculation loop b216 of the heat recovery loop b214. In this manner, the temperature of the working fluid is increased once again prior to flowing to a combustor b132.

The heated working fluid mixes with fuel and the fuel/air mixture is combusted in the combustor b132. The combustion gases generated by the combustion process are provided to the hot side heat exchanger b118 via the intake line b212. The hot side heat exchanger b118 facilitates heat exchange between the hot combustion gases and engine working fluid EWF disposed within the piston bodies b122 of the closed cycle engine b110. The heat imparted to the engine working fluid EWF creates a temperature differential between the hot side b112 and the cold side b114 of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b154 operatively coupled with the piston assemblies b126.

After the relatively hot combustion gases impart thermal energy to the engine working fluid EWF within the piston bodies b122, the combustion gases are captured and directed downstream along the heat recovery loop b214 of the heater loop b210 for further useful purposes. For instance, a portion of the combustion gases are recirculated via the recirculation loop b216 back to the combustor b132 and a portion of the combustion gases are used to impart thermal energy to the pressurized air passing through the recuperator b222. That is, a portion of the combustion gases are used to preheat the incoming pressurized air at the recuperator b222.

After flowing through the recuperator b222, the hot combustion gases recovered from the hot side heat exchanger b118 of the closed cycle engine b110 continue downstream along the heat recovery loop b214 to an expansion device, such as e.g., a turbine b328. The turbine b328 expands the hot combustion gases and extracts work therefrom. Particularly, the expanding hot combustion gases do work on the turbine b328 thus causing the turbine b328 to rotate about its axis of rotation. For this embodiment, the turbine b328 is operatively coupled with the blower b326 positioned along the cooling loop b280/heater loop b210, which is operatively coupled with the compressor b322 positioned along the refrigeration loop b320, which is in turn operatively coupled with the pump b162 positioned along the electrical system cooling loop b160. The turbine b328 is operatively coupled with the blower b326, compressor b322, and pump b162 via a shaft system as depicted in FIG. 2.1.6. Accordingly, when the turbine b328 is driven about its axis of rotation, the turbine b328 in turn drivingly rotates the blower b326, compressor b322, and the pump b162.

After expansion at the turbine b328, the combustion gases flow downstream along the heat recovery loop b214 of the heater loop b210 to a fuel preheater b304 The combustion gases can impart thermal energy to fuel flowing along a fuel line 302 from a fuel source b300 (e.g., a fuel tank). In this way, the fuel can be preheated prior to being mixed with the working fluid, e.g., prior to or at the combustor b132. Preheating the fuel prior to mixing with the working fluid can reduce the amount of fuel required for the same work output of the closed cycle engine b110. A fuel control device b330 is positioned along the fuel line 302 for regulating or controlling the amount or mass flow of the fuel to the combustor b132.

After heat exchange at the fuel preheater b304, the combustion gases flow downstream along the heat recovery loop b214 of the heater loop b210 to one or more thermal applications b140 in fluid communication therewith. As noted above, the one or more thermal applications b140 in fluid communication with the hot side heat exchanger b118 can be any suitable thermal applications b140. For instance, the one or more thermal applications b140 can include a fluid heating device operable to heat air and/or water for building or other industrial use. The one or more thermal applications b140 in fluid communication with the heat recovery loop b214 can be the same or different thermal applications b140 as the thermal applications b140 in fluid communication with the electrical system cooling loop b160 via the radiator b332 and/or the thermal applications b140 in fluid communication with the refrigeration loop b320 via the heat exchanger b258.

## Closed Cycle Engine with Refrigerated Chiller Loop

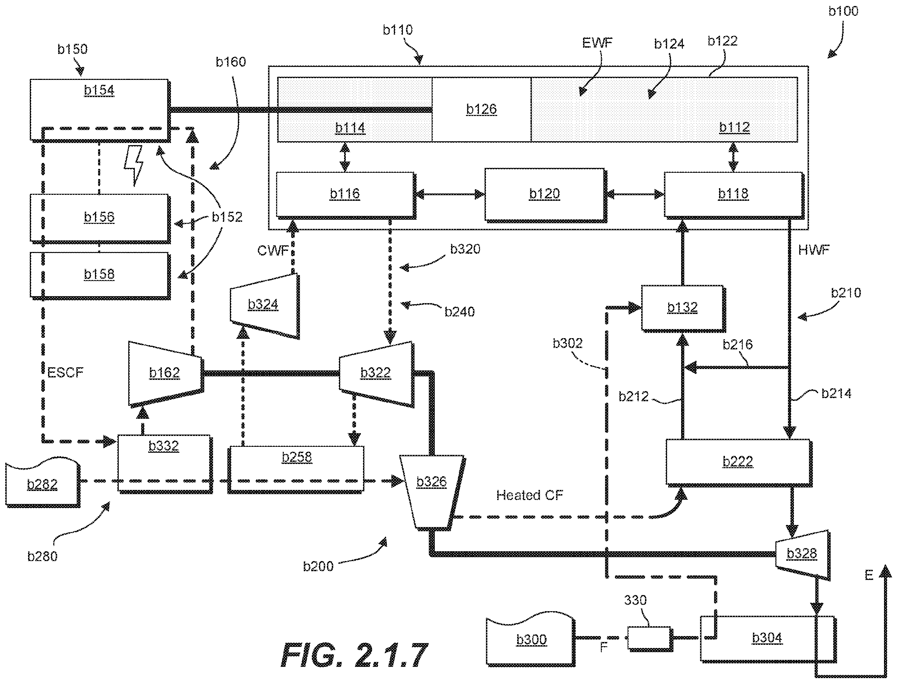

FIG. 2.1.7 provides a schematic view of a power generation system b100 according to an example embodiment of the present disclosure. The power generation system b100 of FIG. 2.1.7 is configured in a similar manner as the power generation system b100 of FIG. 2.1.6, except as provided below. For this embodiment, there are no thermal applications b140 in thermal communication with the radiator b332 or the heat exchanger b258. Furthermore, there is no one or more thermal applications b140 in thermal communication with the heat recovery loop b214 downstream of the fuel preheater b304. Rather, as depicted in FIG. 2.1.7, the hot combustion gases are exhausted downstream of the fuel preheater b304, e.g., to an ambient environment.

## Closed Cycle Engine BOP with WHR Electricity Generation

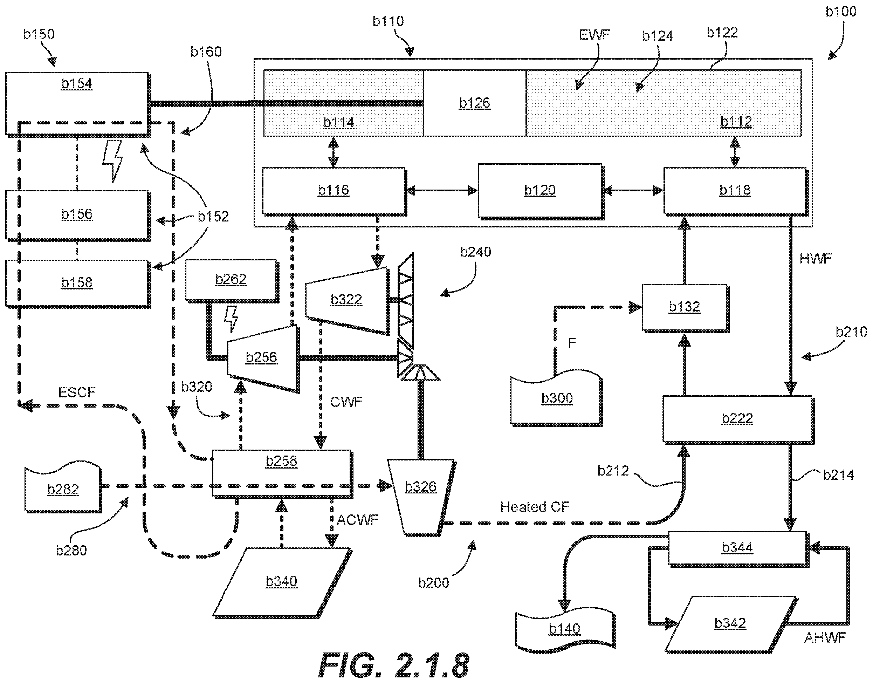

FIG. 2.1.8 provides a schematic view of a power generation system b100 according to an example embodiment of the present disclosure. For the illustrated embodiment of FIG. 2.1.8, the power generation system b100 includes a closed cycle engine b110. The closed cycle engine b110 can be the closed cycle engine b110 described above with reference to FIG. 2.1.1. Particularly, the closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114.

Furthermore, as shown, the power generation system b100 includes one or more electric machines b154 operatively coupled with the piston assemblies b126. When the piston assemblies b126 are moved within their respective piston bodies b122, the electric machines b154 are operable to generate electrical power. One or more energy storage devices b156 are in communication with the electric machines b154. The one or more energy storages devices can be any suitable type of energy storage devices b156, such as e.g., batteries, super capacitors, etc. In some embodiments, the one or more energy storage devices b156 are configured to receive electrical power from the one or more electric machines b154. That is, power generated by the electric machines b154, e.g., during operation of the closed cycle engine b110, can be provided to the one or more energy storage devices b156. In some embodiments, additionally or alternatively, the one or more energy storage devices b156 are configured to provide electrical power to the one or more electric machines b154, e.g., during initialization of the closed cycle engine b110. As further shown in FIG. 2.1.8, one or more electrical loads 158 are electrically connectable with the one or more energy storage devices b156. In some embodiments, additionally or alternatively, the one or more electrical loads 158 are directly electrically connectable with the one or more electric machines b154. The one or more electrical loads 158 are configured to receive electrical power from the one or more energy storage devices b156 and/or the electric machines b154. The one or more electrical loads 158 can be any suitable type or application of electrical load. For example, the electrical loads 158 can be one or more building electrical loads 158, the electrical systems of a vehicle, and/or a power grid.

As further depicted in FIG. 2.1.8, the power generation system b100 includes a balance of plant b200. The balance of plant b200 includes a heater loop b210 that includes various components for imparting thermal energy to the hot side b112 of the closed cycle engine b110. Moreover, for this embodiment, the balance of plant b200 includes a refrigeration loop b320 for cooling the cold side b114 of the closed cycle engine b110. That is, various components positioned along the refrigeration loop b320 are configured to actively cool the cold side b114 of the closed cycle engine b110. The balance of plant b200 also includes an electrical system cooling loop b160 positioned at least in part in a heat exchange relationship with the electrical components b152 of the power generation system b100 for removing heat therefrom. Heat captured from the electrical system cooling loop b160 can be provided to one or more thermal applications b140 and/or the heater loop b210, for example. The balance of plant b200 further includes a cooling loop b280 for cooling various components positioned along the refrigeration loop b320 and the electrical system cooling loop b160. The balance of plant b200 can also include an auxiliary cooling loop b340 for providing additional cooling to components positioned along the refrigeration loop b320 and an auxiliary heating loop b342 for providing additional heating to recovered heat being exhausted to one or more thermal applications b140 in thermal communication with the heat recovery loop b214 of the heater loop b210. The noted loops will be described in detail below.

The refrigeration loop b320 is positioned at least in part in a heat exchange relationship with the cold side b114 of the closed cycle engine b110 for removing heat therefrom. The refrigeration loop b320 includes a compressor b322 operable to move a chiller working fluid CWF through or along the refrigeration loop b320. The chiller working fluid CWF can be any suitable cooling fluid, such as e.g., a suitable refrigerant. A heat exchanger b258 is positioned downstream of the compressor b322 along the refrigeration loop b320. Notably, the heat exchanger b258 is in a heat exchange relationship with a cooling loop b280. The working fluid (e.g., ambient air) flowing through the cooling loop b280 removes heat from the chiller working fluid CWF flowing through the refrigeration loop b320 at the heat exchanger b258. In this way, heat is removed from the chiller working fluid CWF.

In addition, for this embodiment, the auxiliary cooling loop b340 is positioned at least in part in a heat exchange relationship with the heat exchanger b258. That is, the auxiliary cooling loop b340 is in thermal communication with the heat exchanger b258. The auxiliary cooling loop b340 is operable to cool the chiller working fluid CWF flowing along the refrigeration loop b320. For instance, for this embodiment, the relatively warm chiller working fluid CWF imparts thermal energy to an auxiliary cooling working fluid ACWF flowing along the auxiliary cooling loop b340. In this way, heat can be removed from the chiller working fluid CWF by both the auxiliary cooling working fluid ACWF flowing through the auxiliary cooling loop b340 and the cooling fluid CF flowing through the cooling loop b280 at the heat exchanger b258. The auxiliary cooling working fluid ACWF can be any suitable cooling fluid, such as e.g., ambient air, a refrigerant, etc.

An expansion device b256 is positioned along the refrigeration loop b320 downstream of the heat exchanger b258 and between the cold side heat exchanger b116 and the heat exchanger b258. For this embodiment, the expansion device b256 is a turbine. The expansion device b256 is operable to expand the chiller working fluid CWF. Consequently, the expansion device b256 decreases the temperature and pressure of the chiller working fluid CWF. In some embodiments, the chiller working fluid CWF is cooled below a temperature of an ambient environment along at least a portion of the refrigeration loop b320, and particularly, the chiller working fluid CWF is cooled below an ambient temperature downstream of the expansion device b256 and upstream of the cold side heat exchanger b116 positioned along the refrigeration loop b320 downstream of the expansion device b256 and upstream of the compressor b322. The cold side heat exchanger b116 and the third heat exchanger b258 are positioned on opposing sides of the refrigeration loop b320.

As depicted in FIG. 2.1.8, one or more electric machines b262 are operatively coupled with the expansion device b256 or turbine positioned along the refrigeration loop b320. When the chiller working fluid CWF is expanded by the expansion device b256, the expansion device b256 extracts work therefrom. Particularly, the expanding chiller working fluid CWF does work on the expansion device b256 thereby causing the expansion device b256 to rotate about its axis of rotation. When the expansion device b256 is rotated about its axis of rotation, the electric machines b262, operable as electric generators, generate electrical power. In this way, supplemental electrical power can be regenerated from heat extracted from the cold side b114 of the closed cycle engine b110. Moreover, for this embodiment, the turbine is operatively coupled with the compressor b322 positioned along the refrigeration loop b320 and a blower b326 positioned along the cooling loop b280/heater loop b210. The turbine is operatively coupled with the compressor b322 and blower b326 via a geared-shaft system as depicted in FIG. 2.1.8. Accordingly, when the turbine is driven about its axis of rotation, the turbine in turn drivingly rotates the compressor b322 and the blower b326. In some embodiments, however, the turbine is only operatively coupled with the one or more electric machines b262 for generating supplemental electrical power from the heat extracted from the cold side b114 of the closed cycle engine b110.

The cold side heat exchanger b116 is in a heat exchange relationship with the cold side b114 of the closed cycle engine b110 for removing heat therefrom. Particularly, as the chiller working fluid CWF flows through the cold side heat exchanger b116, heat from the closed cycle engine b110 imparts thermal energy to the chiller working fluid CWF. In this way, the cold side b114 of the closed cycle engine b110 is cooled. After removing heat from the closed cycle engine b110 at the cold side heat exchanger b116, the chiller working fluid CWF flows downstream to the compressor b322 where the chiller working fluid CWF is moved around the refrigeration loop b320 once again. Thus, for this embodiment, the refrigeration loop b320 is a closed cycle loop.

The electrical system cooling loop b160 is positioned at least in part in a heat exchange relationship with the one or more electrical components b152 of the power generation system b100 for removing heat therefrom. Particularly, for this example embodiment, the electrical system cooling loop b160 is in a heat exchange relationship with the electric machines b154, the energy storage devices b156, and the electrical loads 158. However, in other embodiments, the electrical system cooling loop b160 can be in a heat exchange relationship with one, some, or all of the electric machines b154, the energy storage devices b156, and the electrical loads 158. The electrical system cooling fluid ESCF can be any suitable type of cooling fluid.

When the electrical system cooling fluid ESCF is moved through the electrical system cooling loop b160, the electrical system cooling fluid ESCF picks up or removes heat from the electric loads b158, the energy storage devices b156, and the electric machines b154. The cooling fluid then flows downstream to the heat exchanger b258 such that heat is removed from the electrical system cooling fluid ESCF, e.g., by cooling fluid CF flowing through the cooling loop b280 and/or the auxiliary cooling fluid ACWF. Notably, for this embodiment, the electrical system cooling loop b160 is in a heat exchange relationship with the cooling loop b280 and the auxiliary cooling loop b340 at the heat exchanger b258. Similarly, the refrigeration loop b320 is in a heat exchange relationship with the cooling loop b280 and the auxiliary cooling loop b340 at the heat exchanger b258.

The cooling loop b280 is operatively configured to pick up or remove heat from the electrical system cooling loop b160 and the refrigeration loop b320. A blower b326 is positioned along the cooling loop b280 as shown in FIG. 2.1.8. The blower b326 is operable to move a cooling fluid CF through the cooling loop b280. For instance, the blower b326 can move the cooling fluid CF (e.g., ambient air) received from an fluid source b282 into and through the cooling loop b280. Particularly, the blower b326 can move the cooling fluid CF over or across the heat exchanger b258, e.g., for removing heat from the chiller working fluid CWF flowing along the refrigeration loop b320 and/or the electrical system cooling fluid ESCF flowing along the electrical system cooling loop b160. Particularly, the relatively hot chiller working fluid CWF flowing along the refrigeration loop b320 imparts thermal energy to the relatively cool cooling fluid CF flowing through the cooling loop b280 at the heat exchanger b258. Accordingly, the temperature of the cooling fluid CF flowing along the cooling loop b280 is increased by the relatively hot chiller working fluid CWF at the third heat exchanger b258. In addition, the relatively hot electrical system cooling fluid ESCF flowing along the electrical system cooling loop b160 imparts thermal energy to the relatively cool cooling fluid CF flowing through the cooling loop b280 at the heat exchanger b258. Consequently, the temperature of the cooling fluid CF flowing along the cooling loop b280 is increased by the relatively hot electrical system cooling fluid ESCF at the heat exchanger b258. The auxiliary cooling working fluid ACWF flowing through the auxiliary cooling loop b340 can also receive heat from the relatively hot chiller working fluid CWF flowing along the refrigeration loop b320 and the electrical system cooling fluid ESCF flowing along the electrical system cooling loop b160. As noted above, the blower b326 is operatively coupled with the turbine b256. Thus, the blower b326 is driven by the turbine b256, e.g., when the chiller working fluid CWF undergoes expansion.

After flowing through the heat exchanger b258, the now heated cooling fluid CF flows downstream to the blower b326. The blower b326 compresses the heated cooling fluid CF and moves the heated cooling fluid CF to the heater loop b210 of the balance of plant b200. Particularly, the blower b326 increases the pressure of the heated cooling fluid CF and moves the heated and pressurized cooling fluid CF downstream to a recuperator b222 positioned along an intake line b212 of the heater loop b210. The recuperator b222 is positioned along a heat recovery loop b214 of the heater loop b210 as well. At the recuperator b222, the pressurized and heated cooling fluid CF is heated by heating working fluid HWF (e.g., hot combustion gases) recovered from the closed cycle engine b110, or more particularly, from the hot side heat exchanger b118 of the closed cycle engine b110. Accordingly, the temperature of the pressurized cooling fluid CF is increased at the recuperator b222. In this embodiment, the cooling fluid CF flowing through the cooling loop b280 and into the intake line b212 of the heater loop b210 is air.

After passing through the recuperator b222, the cooling fluid CF flows downstream along the intake line b212 of the heater loop b210 to a combustor b132. The heated cooling fluid CF mixes with fuel and the fuel/air mixture is combusted in the combustor b132. The combustion gases generated by the combustion process are provided to the hot side heat exchanger b118 via the intake line b212. The hot side heat exchanger b118 facilitates heat exchange between the hot combustion gases and engine working fluid EWF disposed within the piston bodies b122 of the closed cycle engine b110. The heat imparted to the engine working fluid EWF creates a temperature differential between the hot side b112 and the cold side b114 of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b154 operatively coupled with the piston assemblies b126.

After the relatively hot combustion gases or heating working fluid HWF impart thermal energy to the engine working fluid EWF within the piston bodies b122, the combustion gases are captured and directed downstream along the heat recovery loop b214 of the heater loop b210 for further useful purposes. For instance, the combustion gases are used to impart thermal energy to the pressurized air passing through the recuperator b222. That is, a portion of the combustion gases are used to preheat the incoming pressurized air at the recuperator b222.

After flowing through the recuperator b222, the hot combustion gases recovered from the hot side heat exchanger b118 of the closed cycle engine b110 continue downstream along the heat recovery loop b214 to a recovery heat exchanger b344. The auxiliary heating loop b342 is positioned at least in part in a heat exchange relationship with the recovery heat exchanger b344. That is, the auxiliary heating loop b342 is in thermal communication with the recovery heat exchanger b344. The auxiliary heating loop b342 is operable to heat the combustion gases or heating working fluid HWF flowing downstream along the heat recovery loop b214 of the heater loop b210. For instance, for this embodiment, the relatively hot auxiliary working fluid AHWF flowing along the auxiliary heating loop b342 imparts thermal energy to the combustion gases at the recovery heat exchanger b344. In this way, heat can be imparted to the combustion gases at the recovery heat exchanger b344. Particularly, heat can be imparted to the combustion gases at the recovery heat exchanger b344 prior to flowing downstream to one or more thermal applications b140 in fluid communication with the heat recovery loop b214. In this way, if the thermal application b140 positioned downstream along the heater loop b210 requires more heat than currently being provided by the combustion gases, the auxiliary heating loop b342 can be activated to provide additional heat to the combustion gases. Thus, the auxiliary heating loop b342 can be selectively controlled to heat the combustion gases, e.g., depending on the thermal requirements of the thermal applications b140 positioned downstream along the heater loop b210. The auxiliary working fluid AHWF flowing along the auxiliary heating loop b342 can be any suitable working fluid. In other embodiments, the combustion gases can be heated by any suitable heat source b134 prior to flowing downstream to the one or more thermal applications b140 of the power generation system b100.

**Closed Cycle Engine with Waste Heat Recovery Bottoming Cycle**

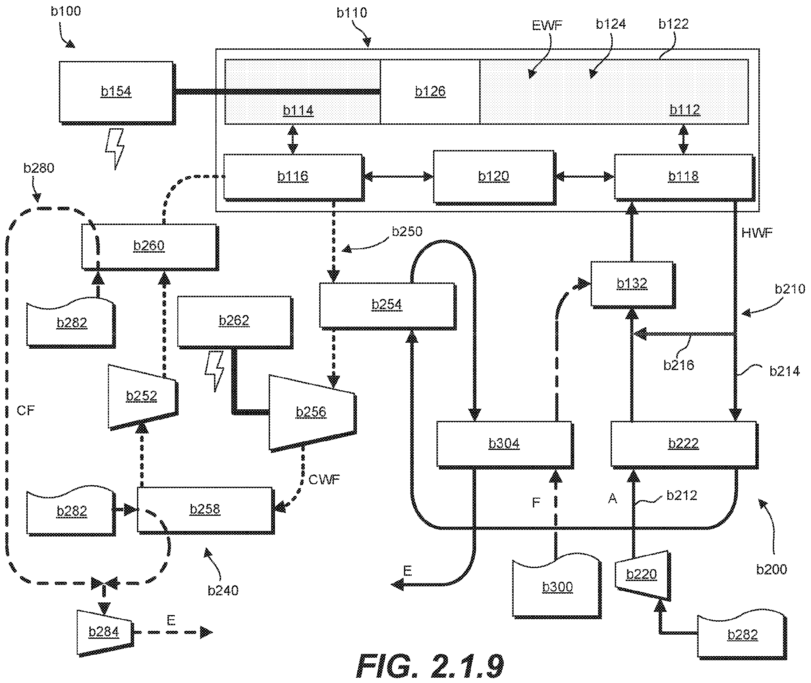

FIG. 2.1.9 provides a schematic view of a power generation system b100 according to an example embodiment of the present disclosure. Generally, the power generation system b100 of FIG. 2.1.9 includes a prime power generation system b100 and a balance of plant b200. The balance of plant b200 includes a heat recovery system to recover heat from the prime power generation system b100. Particularly, the heat recovery system operates a Rankine-based bottoming cycle to recover heat (e.g., engine exhaust) generated by the prime power generation system b100. The recovered heat can then be used in a useful way. For instance, the energy recovered by the heat recovery system can be used to "pay" for pumps and other accessories associated with the balance of plant b200 so such components do not rob the closed cycle engine b110 of efficiency. Further, in some embodiments, some or all of the balance of plant b200 components can be additively manufactured, e.g., by one or more of the additive manufacturing techniques described herein. In this way, the costs associated with manufacturing such components can minimized, particularly for relatively smaller mobile applications.

As depicted in FIG. 2.1.9, the prime power generation system b100 of the power generation system b100 is a closed cycle engine b110. The closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114. Furthermore, as shown, one or more electric machines b154 are operatively coupled with the piston assemblies b126. When the piston assemblies b126 are moved within their respective piston bodies b122, the electric machines b154 are operable to generate electrical power.

Generally, the power generation system b100 of FIG. 2.1.9 combines the balance of plant b200 features of the embodiment of FIG. 2.1.2 and the embodiment of FIG. 2.1.3, and thus, the power generation system b100 is configured in the same or similar manner as the embodiment of FIG. 2.1.4, except as provided below. Notably for this embodiment, the heater loop b210 of the balance of plant b200 is positioned at least in part in a heat exchange relationship with the chiller loop b240 of the balance of plant b200. Accordingly, as will be explained below, heat captured from the hot side b112 of the engine can be used as a heat source b134 for increasing the temperature of the chiller working fluid CWF flowing along the bottoming-cycle loop b250 to ultimately increase the potential energy thereof. In this way, more or supplemental electrical power can be generated by the one or more electric machines b262 operatively coupled with the expansion device b256 of the chiller loop b240. Additionally, heat can be captured from the hot side b112 of the engine and fed directly back to the engine or to one or more components for increasing the temperature of fuel and/or air flowing to the combustor b132.

For this embodiment, the heater loop b210 includes a compressor b220 positioned along an intake line b212 of the heater loop b210. The compressor b220 moves air into the heater loop b210 from an air source b218 (e.g., an ambient environment) and pressurizes the air. A recuperator b222 is positioned downstream of the compressor b220 along the intake line b212 of the heater loop b210 as well as along a heat recovery loop b214 of the heater loop b210. The air pressurized by the compressor b220 flows downstream to the recuperator b222 along the intake line b212 where the pressurized air is pre-heated by hot combustion gases recovered from the closed cycle engine b110, or more particularly, from the hot side heat exchanger b118 of the closed cycle engine b110. As the pressurized and now pre-heated air flows downstream, the pressurized/pre-heated air combines or mixes with hot combustion gases recirculated from the hot side heat exchanger b118, e.g., via a recirculation loop b216 of the heat recovery loop b214.

The heated air mixes with fuel and the fuel/air mixture is combusted in a combustor b132 or burner of the closed cycle engine b110. The combustion gases generated by the combustion process are provided to the hot side heat exchanger b118 via the intake line b212. The hot side heat exchanger b118 facilitates heat exchange between the hot combustion gases and the engine working fluid EWF within the piston body b122. The heat imparted to the engine working fluid EWF creates a temperature differential between the hot side b112 and the cold side b114 of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b154 operatively coupled with the piston assemblies b126.

After the relatively hot combustion gases impart thermal energy to the engine working fluid EWF within the piston body b122, the combustion gases are captured and directed downstream along the heat recovery loop b214 for further useful purposes. For instance, a portion of the combustion gases are recirculated via the recirculation loop b216 back to the combustor b132 and a portion of the combustion gases are used to impart thermal energy to the pressurized air passing through the recuperator b222. That is, a portion of the combustion gases are used to preheat the incoming pressurized air at the recuperator b222.

After flowing through the recuperator b222, the hot combustion gases recovered from the hot side heat exchanger b118 of the closed cycle engine b110 continue downstream along the heat recovery loop b214 to the superheater b254 of the chiller loop b240. Thus, as noted above, the heater loop b210 is at least in part in a heat exchange relationship with the chiller loop b240. Particularly, for this embodiment, the heater loop b210 is at least in part in a heat exchange relationship with the chiller loop b240 at the superheater b254. The hot combustion gases heat or impart thermal energy to the chiller working fluid CWF flowing through the bottoming-cycle loop b250 at the superheater b254. In this way, the temperature of the chiller working fluid CWF is increased even further prior to expanding at the expansion device b256 downstream of the superheater b254. The increased potential energy of the chiller working fluid CWF allows the expansion device b256 to extract more useful work therefrom. Accordingly, more electrical power can be generated by the one or more electric machines b262 operatively coupled with the expansion device b256.

After imparting thermal energy to the chiller working fluid CWF at the superheater b254, the combustion gases flow downstream along the heat recovery loop b214 to the fuel preheater b304. The combustion gases impart thermal energy to fuel flowing downstream along a fuel line 302 from a fuel source b300 (e.g., a fuel tank) at the fuel preheater b304. In this way, the fuel can be preheated prior to being mixed with the heated/pressurized air. Preheating the fuel prior to mixing with the heated/pressurized air can reduce the amount of fuel required for the same work output. After heat exchange at the fuel preheater b304, the combustion gases flow downstream along the heat recovery loop b214 of the heater loop b210 and are exhausted from the system.

Notably, for this embodiment, the heat recovered from the hot side heat exchanger b118 is exchanged with the various elements along the heater loop b210 in an ordered manner to achieve high efficiency of the power generation system b100. For instance, for the depicted embodiment of FIG. 2.1.9, the thermal energy generated by the combustor b132 is first used by the hot side heat exchanger b118 to heat the engine working fluid EWF within the piston body b122. Thereafter, the hot combustion gases continue downstream. Some of the recovered combustion gases are directed back to the combustor b132 via the recirculation loop b216 and some of the combustion gases are directed to the recuperator b222 for pre-heating the compressed air, which also returns heat to the engine. Next, the hot combustion gases are used to heat the chiller working fluid CWF flowing along the bottoming-cycle loop b250 at the superheater b254. The hot combustion gases are then used to pre-heat the fuel at the fuel preheater b304, thereby returning heat to the engine. Finally, the combustion gases are exhausted from the system.

The chiller loop b240 of the balance of plant b200 is operable to remove heat or thermal energy from the cold side b114 of the closed cycle engine b110. Particularly, a working fluid can be passed through the cold side heat exchanger b116. The engine working fluid EWF can exchange heat with the relatively cool working fluid flowing through the cold side heat exchanger b116, and thus, the working fluid removes heat from the closed cycle engine b110 to provide cooling thereto, e.g., at the cold side b114. The cooled engine working fluid EWF facilitates compression thereof when the piston assembly b126 is moved toward the compression space by the expansion of the working fluid at the other end of the regenerative engine.

As illustrated in FIG. 2.1.9, the chiller loop b240 includes two linked loops, including a bottoming-cycle loop b250 and a cooling loop b280. The bottoming-cycle loop b250 or system is a recovered heat to power system. Particularly, a chiller working fluid CWF, such as e.g., a supercritical carbon dioxide or some other suitable low temperature working fluid, is moved through the bottoming-cycle loop b250 to remove heat from the cold side b114 of the engine (e.g., to increase the temperature differential between the hot and cold sides of the engine). Components of the bottoming-cycle loop b250 utilize the captured heat to generate electrical power. The cooling loop b280 is operable to cool certain components positioned along the bottoming-cycle loop b250. Specifically, a cooling fluid CF, such as e.g., ambient air or some other suitable heat-sink fluid, is moved through the cooling loop b280 and exchanges heat with the various components of the bottoming-cycle loop b250 to provide cooling thereto. The chiller loop b240 will be described in detail below.

For this embodiment, the bottoming-cycle loop b250 of the chiller loop b240 includes a pump b252 operable to move the chiller working fluid CWF along or through the bottoming-cycle loop b250. As noted above, the chiller working fluid CWF can be a supercritical carbon dioxide fluid or some other suitable low temperature working fluid. A precooler b260 is optionally positioned downstream of the pump b252 along the bottoming-cycle loop b250. The precooler b260 cools the chiller working fluid CWF as the chiller working fluid CWF flows therethrough. The cold side heat exchanger b116 (e.g., an evaporator) is positioned downstream of the precooler b260 along the bottoming-cycle loop b250. The cold side heat exchanger b116 is positioned in a heat exchange relationship with the cold side b114 of the closed cycle engine b110 as shown in FIG. 2.1.9. During operation of the closed cycle engine b110, the chiller working fluid CWF flowing through the cold side heat exchanger b116 picks up or removes heat from the engine working fluid EWF and walls of the piston body b122 at or proximate the cold side b114 of the engine b110. That is, the engine working fluid EWF and walls at or proximate the cold side b114 of the engine b110 impart thermal energy to the chiller working fluid CWF flowing through the cold side heat exchanger b116. Accordingly, the heat captured from the cold side b114 of the engine b110 can be utilized to generate electrical power and/or produce useful work.

In some embodiments, optionally, the relatively hot chiller working fluid CWF flows downstream from the cold side heat exchanger b116 to a superheater b254 or second heat exchanger positioned along the bottoming-cycle loop b250. For this embodiment, the heat source b134 that imparts thermal energy to the chiller working fluid CWF flowing through the bottoming-cycle loop b250 at the superheater b254 is the hot combustion gases flowing along the heat recovery loop b214 of the heater loop b210. Accordingly, heat recovered from the hot side b112 of the engine is utilized for electrical power generation.

An expansion device b256 is positioned downstream of the cold side heat exchanger b116 along the bottoming-cycle loop b250. In some embodiments, the expansion device b256 is immediately downstream of the cold side heat exchanger b116. In yet other embodiments, as noted above, the expansion device b256 is downstream of the cold side heat exchanger b116 but directly downstream of the superheater b254. The expansion device b256 can be a turbine, for example. The expansion device b256 can be operatively coupled with one or more elements of the chiller loop b240 and/or the heater loop b210. For instance, the expansion device b256 can be mechanically coupled with the pump b252 of the bottoming-cycle loop b250, the compressor b220 of the heater loop b210, and/or a fan b284 of the cooling loop b280 of the chiller loop b240, among other components. The expansion device b256 can be mechanically coupled with such components via one or more shafts or a shaft system. The expansion device b256 is operable to extract thermal energy from the chiller working fluid CWF to produce useful work such that electrical power can be generated. Particularly, the expansion of the chiller working fluid CWF can drivingly rotate the expansion device b256 about its axis of rotation, which in turn drives the one or more shafts and the components operatively coupled thereto. Moreover, when the shaft system is driven by rotation of the expansion device b256, the useful work produced can be utilized to drive one or more electric machines b262 operatively coupled to the expansion device b256. In this way, the electric machines b262 can generate electrical power. The electrical power generated can be used to pay or operate the various devices or components of the power generation system b100, such as e.g., fans, pumps, outside air conditioning units, onboard vehicle systems, among other potential uses.

After expanding at the expansion device b256 to produce useful work such that electrical power can ultimately be generated, the chiller working fluid CWF flows downstream from the expansion device b256 to a third heat exchanger b258 or third heat exchanger positioned along the bottoming-cycle loop b250. The third heat exchanger b258 is positioned between the expansion device b256 and the pump b252 along the bottoming-cycle loop b250. The third heat exchanger b258 cools the chiller working fluid CWF before the chiller working fluid CWF flows downstream to the pump b252 where the chiller working fluid CWF is pumped or moved along the bottoming-cycle loop b250 once again.

As noted above, the chiller loop b240 includes the cooling loop b280 linked to the bottoming-cycle loop b250. As depicted in FIG. 2.1.9, the cooling fluid CF is introduced into the cooling loop b280 at the precooler b260 via a pressure differential. The relatively cool cooling fluid CF can pick up or remove heat from the chiller working fluid CWF flowing through the bottoming-cycle loop b250 at the precooler b260. That is, the chiller working fluid CWF of the bottoming-cycle loop b250 can impart thermal energy to the cooling fluid CF of the cooling loop b280 at the precooler b260. In addition, cooling fluid CF is introduced into the cooling loop b280 at the third heat exchanger b258 via a pressure differential. The relatively cool cooling fluid CF can pick up heat from the chiller working fluid CWF flowing through the bottoming-cycle loop b250 at the third heat exchanger b258. That is, the chiller working fluid CWF flowing along the bottoming-cycle loop b250 can impart thermal energy to the cooling fluid CF of the cooling loop b280 at the third heat exchanger b258. As illustrated in FIG. 2.1.9, the cooling fluid CF can flow downstream from the precooler b260 and downstream from the third heat exchanger b258 to a fan b284 positioned along the cooling loop b280. The fan b284 moves the cooling fluid CF through the cooling loop b280. Particularly, the fan b284 can cause the pressure differential at the inlet of the precooler b260 and the inlet of the third heat exchanger b258 such that the cooling fluid CF is moved into and through the cooling loop b280 of the chiller loop b240. After removing heat from the chiller working fluid CWF flowing through the bottoming-cycle loop b250 at the precooler b260 and the third heat exchanger b258, the cooling fluid CF is exhausted from the system.

**Closed Cycle Engine with WHR Bottoming Cycle - Variants**

FIG. 2.1.10 provides a schematic view of a power generation system b100 according to an example embodiment of the present disclosure. The power generation system b100 of FIG. 2.1.10 is configured in a similar manner as the power generation system b100 of FIG. 2.1.9, except as provided below.

As noted above, the power generation system b100 includes a closed cycle engine b110 defining a hot side b112 and a cold side b114. The closed cycle engine b110 also includes a balance of plant b200. Particularly, the balance of plant b200 includes a heater loop b210 positioned at least in part in a heat exchange relationship with the hot side b112 of the closed cycle engine b110 for imparting thermal energy thereto. The heater loop b210 has an intake line b212. Further, as shown, the balance of plant b200 includes a chiller loop b240 having a bottoming-cycle loop b250 and a cooling loop b280. The bottoming-cycle loop b250 is positioned at least in part in a heat exchange relationship with the cold side b114 of the closed cycle engine b110 for extracting or removing thermal energy therefrom. The cooling loop b280 is positioned at least in part in a heat exchange relationship with the bottoming-cycle loop b250 for extracting or removing thermal energy therefrom.

Notably, for this embodiment, the cooling loop b280 is in fluid communication with the intake line b212 of the heater loop b210. More specifically, instead of a fan b284 moving air through the cooling loop b280 as shown in the embodiment depicted in FIG. 2.1.9, a compressor b220 positioned along the intake line b212 of the heater loop b210 moves a working fluid into and through the cooling loop b280 and ultimately to the heater loop b210. As depicted in FIG. 2.1.10, cooling fluid CF (e.g., ambient air) is introduced into the cooling loop b280 at the precooler b260 via a pressure differential. The relatively cool working fluid can pick up or remove heat from the chiller working fluid CWF flowing through the bottoming-cycle loop b250 at the precooler b260. That is, the chiller working fluid CWF of the bottoming-cycle loop b250 can impart thermal energy to the cooling fluid CF of the cooling loop b280 at the precooler b260. In addition, cooling fluid CF is introduced into the cooling loop b280 at the third heat exchanger b258 via a pressure differential. The relatively cool cooling fluid CF can pick up heat from the chiller working fluid CWF flowing through the bottoming-cycle loop b250 at the third heat exchanger b258. That is, the chiller working fluid CWF flowing along the bottoming-cycle loop b250 can impart thermal energy to the cooling fluid CF of the cooling loop b280 at the third heat exchanger b258.

After picking up heat from the chiller working fluid CWF flowing through the bottoming-cycle loop b250 at the precooler b260 and the third heat exchanger b258, the cooling fluid CF flows downstream to an inlet of the compressor b220 of the heater loop b210. Thus, the compressor b220 moves the cooling fluid CF through the cooling loop b280 and to the heater loop b210. The compressor b220 can cause the pressure differential at the inlet of the precooler b260 and the inlet of the third heat exchanger b258 such that the cooling fluid CF is moved into and through the cooling loop b280 of the chiller loop b240. As the cooling fluid CF is heated by the chiller working fluid CWF at the precooler b260 and at the third heat exchanger b258, the cooling fluid CF delivered to the heater loop b210 is heated by heat recovered from the bottoming-cycle loop b250. By heating the cooling fluid CF, the efficiency of the power generation can be improved, among other benefits.

FIG. 2.1.11 provides a schematic view of a power generation system b100 according to an example embodiment of the present disclosure. The power generation system b100 of FIG. 2.1.11 is configured in a similar manner as the power generation system b100 of FIG. 2.1.10, except as provided below. In some embodiments, the airflow required to cool the chiller working fluid CWF at the precooler b260 and the chiller working fluid CWF at the third heat exchanger b258 is greater than the airflow needed for the combustor b132. Accordingly, in order to balance the required airflows, a portion of cooling fluid CF can be exhausted downstream of the compressor b220 of the heater loop b210. Particularly, for the depicted embodiment of FIG. 2.1.11, a portion of cooling fluid CF is exhausted downstream of the compressor b220 third heat exchanger b258. That is, the cooling fluid CF heated at the precooler b260 combines with the cooling fluid CF heated at the third heat exchanger b258 at a junction 286, and after combining, the combined flow of cooling fluid CF travels downstream along an intake delivery line b288 to the compressor b220 positioned along the intake line b212 of the heater loop b210. As shown, a portion of the combined flow of cooling fluid CF is exhausted from the intake line b212 downstream of the compressor b220.

In some embodiments, the amount or volume of cooling fluid CF exhausted from the system downstream of the compressor b220 can be controlled. For instance, as shown in FIG. 2.1.11, an exhaust regulator b292 can be positioned along an exhaust line b290 in fluid communication with the intake line b212. The exhaust regulator b292 is operable to regulate an exhaust flow rate of the cooling fluid CF flowing to the combustor b132. For instance, when the exhaust flow rate of the cooling fluid CF reaches a predetermined threshold, the exhaust regulator b292 can selectively allow a portion of the cooling fluid CF to exhaust from the system, e.g., to balance the airflow required to cool the precooler b260 and third heat exchanger b258 and the airflow required for the combustor b132. In some embodiments, one or more controllers can control the exhaust regulator b292 to selectively control the mass flow of exhaust to the combustor b132. In this way, the exhaust regulator b292 can be a controllable device. In other embodiments, the exhaust regulator b292 can be a self-regulating control device.

FIG. 2.1.12 provides a schematic view of a power generation system b100 according to an example embodiment of the present disclosure. The power generation system b100 of FIG. 2.1.12 is configured in a similar manner as the power generation system b100 of FIG. 2.1.10, except as provided below. In some embodiments, the airflow needed for the combustor b132 is greater than the airflow needed to cool the chiller working fluid CWF at the precooler b260 and the chiller working fluid CWF at the third heat exchanger b258. Accordingly, in order to balance the required airflows, in addition to the cooling fluid CF from the cooling loop b280, additional working fluid can be moved into and along the intake line b212.

For instance, as shown in FIG. 2.1.12, a supplemental intake line b294 is in fluid communication with the intake line b212 upstream of the compressor b220. In other embodiments, the supplemental intake line b294 is in fluid communication with the intake delivery line b288. The compressor b220 is operable to move a supplemental working fluid SWF (e.g., ambient air) from an air source b298 (e.g., an ambient environment) through the supplemental intake line b294 and to the inlet of the compressor b220. Accordingly, the supplemental working fluid SWF received from the air source b298 via the supplemental intake line b294 is mixed with the cooling fluid CF flowing along the intake delivery line b288. Particularly, the supplemental working fluid SWF received from the air source b298 via the supplemental intake line b294 is mixed or combined with the cooling fluid CF flowing along the intake delivery line b288 upstream of the compressor b220. In this manner, the mass flow or volume of total working fluid (e.g., a combination of cooling fluid CF from the cooling loop b280 and the supplemental working fluid SWF) flowing to the combustor b132 can be increased.

In some embodiments, the amount or volume of total working fluid delivered to the combustor b132 can be controlled. For instance, as shown in FIG. 2.1.12, an airflow regulator 296 can be positioned along the supplemental intake line b294 in fluid communication with the intake delivery line b288. The airflow regulator 296 is operable to regulate an amount of supplemental working fluid SWF provided to the combustor b132. For instance, to control the total working fluid flow rate to the combustor b132, the airflow regulator 296 can selectively allow an amount of supplemental working fluid SWF to flow into the intake line b212. In this way, the total working fluid flowing to the combustor b132 can be controlled and the airflow required to cool the precooler b260 and third heat exchanger b258 can be balanced with the airflow required for the combustor b132. In some embodiments, one or more controllers can control the airflow regulator 296 to selectively control the mass flow of total working fluid flowing to the combustor b132. In this way, the airflow regulator 296 can be a controllable device.

FIG. 2.1.13 provides a schematic view of a power generation system b100 according to an example embodiment of the present disclosure. The power generation system b100 of FIG. 2.1.13 is configured in a similar manner as the power generation system b100 of FIG. 2.1.10, except as provided below. In some embodiments, the airflow required to cool the chiller working fluid CWF at the precooler b260 and the chiller working fluid CWF at the third heat exchanger b258 is greater than the airflow needed for the combustor b132. Thus, in order to balance the required airflows, the cooling fluid CF flowing through the precooler b260 is exhausted to the ambient environment downstream of the precooler b260 and is not directed to the intake line b212 of the heater loop b210. As shown, the cooling fluid CF heated at the precooler b260 does not mix with the cooling fluid CF flowing through the third heat exchanger b258 in this embodiment (e.g., at a junction 286). Accordingly, only the cooling fluid CF flowing through the third heat exchanger b258 is moved to the inlet of the compressor b220 positioned along the intake line b212 of the heater loop b210. Particularly, the cooling fluid CF heated at the third heat exchanger b258 can flow downstream to the inlet of the compressor b220 along an intake delivery line b288 fluidly connecting an outlet of the third heat exchanger b258 and the inlet of the compressor b220.

FIG. 2.1.14 provides a schematic view of a power generation system b100 according to an example embodiment of the present disclosure. The power generation system b100 of FIG. 2.1.14 is configured in a similar manner as the power generation system b100 of FIG. 2.1.10, except as provided below. In some embodiments, as noted above, the airflow required to cool the chiller working fluid CWF at the precooler b260 and the chiller working fluid CWF at the third heat exchanger b258 is greater than the airflow needed for the combustor b132. Thus, in order to balance the required airflows, the cooling fluid CF flowing through the third heat exchanger b258 is exhausted to the ambient environment downstream of the third heat exchanger b258 and is not directed to the intake line b212 of the heater loop b210. As shown, the cooling fluid CF heated at the third heat exchanger b258 does not mix with the cooling fluid CF flowing through the precooler b260 in this embodiment (e.g., at a junction 286). Accordingly, only the cooling fluid CF flowing through the precooler b260 is moved to the inlet of the compressor b220 positioned along the intake line b212 of the heater loop b210. Particularly, the cooling fluid CF heated at the precooler b260 can flow downstream to the inlet of the compressor b220 along an intake delivery line b288 fluidly connecting an outlet of the precooler b260 and the inlet of the compressor b220.

FIG. 2.1.15 provides a schematic view of a power generation system b100 according to an example embodiment of the present disclosure. The power generation system b100 of FIG. 2.1.15 is configured in a similar manner as the power generation system b100 of FIG. 2.1.10, except as provided below. For this embodiment, cooling fluid CF heated at the third heat exchanger b258 and/or at the precooler b260 flows into an intake delivery line b288 that provides fluid communication between the cooling loop b280 and the inlet of the compressor b220 positioned along the intake line b212 of the heater loop b210. The balance of plant b200 of the closed cycle engine b110 includes a fuel source b300 and a fuel line 302 that provides fluid communication between the fuel source b300 and at least one of the intake line b212 and a combustor b132 positioned along the intake line b212 of the heater loop b210. Moreover, notably, a fuel preheater b304 is positioned along the intake delivery line b288 that provides fluid communication between the cooling loop b280 and the heater loop b210. In addition, the fuel preheater b304 is positioned along the fuel line 302. Accordingly, the heated cooling fluid CF flowing through the intake delivery line b288 from the cooling loop b280 to the compressor b220 can heat or impart thermal energy to fuel flowing through the fuel line 302 at the fuel preheater b304. Thus, heat recovered from the chiller loop b240 can be utilized to preheat fuel flowing to the combustor b132.

## Closed Cycle Engine with WHR Bottoming Cycle with Electrical system

FIG. 2.1.16 provides a schematic view of a power generation system b100 according to an example embodiment of the present disclosure. The power generation system b100 of FIG. 2.1.16 is configured in a similar manner as the power generation system b100 of FIG. 2.1.10, except as provided below. For this embodiment, the power generation system b100 includes a closed cycle engine b110 defining a hot side b112 and a cold side b114. The closed cycle engine b110 also includes a balance of plant b200. Particularly, the balance of plant b200 includes a heater loop b210 positioned at least in part in a heat exchange relationship with the hot side b112 of the closed cycle engine b110 for imparting thermal energy thereto. The heater loop b210 has an intake line b212. Further, as shown, the balance of plant b200 includes a chiller loop b240 having a bottoming-cycle loop b250 and a cooling loop b280. The bottoming-cycle loop b250 is positioned at least in part in a heat exchange relationship with the cold side b114 of the closed cycle engine b110 for extracting or removing thermal energy therefrom. The cooling loop b280 is positioned at least in part in a heat exchange relationship with the bottoming-cycle loop b250 for extracting or removing thermal energy therefrom.

The power generation system b100 also includes an electrical system b150. The electrical system b150 includes one or more electrical components b152, such as one or more electric machines b154 operatively coupled with at least one of the piston assemblies b126 of the closed cycle engine b110, one or more energy storage devices b156 in communication with the electric machines b154, and one or more electrical loads 158 in communication with the energy storage devices b156. In some embodiments, the electric machines b154 are operable as either electric generators or electric motors. The one or more energy storage devices b156 can include any suitable type of energy storage device, such as batteries, super capacitors, etc. The electrical loads 158 can include electric motors, the grid, vehicle electrical systems, household electrical systems, or any other suitable electrical component requiring electrical power.

For the depicted embodiment of FIG. 2.1.16, the system includes an electrical system cooling loop b160 positioned at least in part in a heat exchange relationship with the one or more electrical components b152 of the electrical system b150 for removing heat therefrom. The electrical system cooling loop b160 can be an open loop, e.g., as shown in FIG. 2.1.16, or can be a closed loop. An electrical system cooling fluid ESCF can be moved through the electrical system cooling loop b160 to remove heat from the electrical components b152. In some embodiments, the electrical system cooling fluid ESCF is ambient air. In yet other embodiments, the electrical system cooling fluid ESCF is a liquid, such as water. As shown, the electrical system cooling fluid ESCF can be moved into an inlet of the electrical system cooling loop b160 from a fluid source b170 (e.g., an ambient air environment or liquid cooling sink). The electrical system cooling fluid ESCF can be moved through the electrical system cooling loop b160 to cool the electrical components b152. Particularly, the relatively cool electrical system cooling fluid ESCF flowing through the electrical system cooling loop b160 can pick up heat or thermal energy given off by the electrical components b152. The heated electrical system cooling fluid ESCF can then flow out of or exit the electrical system cooling loop b160 through an outlet of the electrical system cooling loop b160, e.g., to an ambient environment. In some embodiments, electrical system cooling fluid ESCF can flow passively through the electrical system cooling loop b160, e.g., as shown in FIG. 2.1.16. In yet other embodiments, an air handler (e.g., a fan or blower) can move the electrical system cooling fluid ESCF through the electrical system cooling loop b160. In such embodiments, the electrical system b150 can include a thermal management system for monitoring the temperature of the electrical components 152 and communicating with one or more controllers of the system b100 that cooling for the electrical components 152 is required. At such time, the one or more controllers and/or the thermal management system can activate the air handler to move electrical system cooling fluid ESCF through the electrical system cooling loop 160. Each embodiment depicted herein (e.g., the embodiments of FIGS. 2.1.16 through 2.1.23, the embodiments of FIGS. 2.1.6 through 2.1.8, etc.) that includes electrical components can include a thermal management system therefore.

FIG. 2.1.17 provides a schematic view of another power generation system b100 according to an example embodiment of the present disclosure. The power generation system b100 of FIG. 2.1.17 is configured in a similar manner as the power generation system b100 of FIG. 2.1.16, except as provided below. For this embodiment, the balance of plant b200 of the closed cycle engine b110 includes a heater loop b210 positioned at least in part in a heat exchange relationship with the hot side b112 of the closed cycle engine b110 for imparting thermal energy thereto. The heater loop b210 has an intake line b212. The balance of plant b200 also has a chiller loop b240 having a bottoming-cycle loop b250 and a cooling loop b280. The bottoming-cycle loop b250 is positioned at least in part in a heat exchange relationship with the cold side b114 of the closed cycle engine b110 for extracting thermal energy therefrom. The cooling loop b280 is positioned at least in part in a heat exchange relationship with the bottoming-cycle loop b250 for extracting thermal energy therefrom. Further, as depicted, the cooling loop b280 is in fluid communication with the intake line b212 of the heater loop b210. Particularly, an intake delivery line b288 provides fluid communication between the cooling loop b280 and the intake line b212 of the heater loop b210.

In addition, for this embodiment, the electrical system cooling loop b160 is in fluid communication with the cooling loop b280, and thus, the electrical system cooling loop b160 is in fluid communication with the heater loop b210. In this way, heat given off by the electrical components b152 of the electrical system b150 can be captured and used in useful ways. For instance, in this example embodiment, the captured heat is utilized to preheat the air flowing downstream to the combustor b132.

Particularly, a compressor b220 is positioned along the intake line b212 of the heater loop b210. The compressor b220 moves the cooling fluid CF through the cooling loop b280 such that the cooling fluid CF removes heat from a chiller working fluid CWF flowing through the bottoming-cycle loop b250 (e.g., at the precooler b260 and/or the third heat exchanger b258). The compressor b220 also moves the electrical system cooling fluid ESCF along the electrical system cooling loop b160 such that the electrical system cooling fluid ESCF removes heat from the electrical components b152 of the electrical system b150. Thus, the compressor b220 is operable to move a combined flow of electrical system cooling fluid ESCF heated at the electrical system cooling loop b160 and cooling fluid CF heated at the precooler b260 and/or third heat exchanger b258 along the cooling loop b280 to the inlet of the compressor b220. Further, the compressor b220 is operable to move the combined flow downstream to the combustor b132.

FIG. 2.1.18 provides a schematic view of another power generation system b100 according to an example embodiment of the present disclosure. The power generation system b100 of FIG. 2.1.18 is configured in a similar manner as the power generation system b100 of FIG. 2.1.16, except as provided below. For this embodiment, the electrical system cooling loop b160 is in direct fluid communication with the intake line b212 of the heater loop b210 and the cooling fluid CF flowing through the cooling loop b280 is exhausted from the system as shown in FIG. 2.1.18.

More specifically, a compressor b220 is positioned along the intake line b212 of the heater loop b210 and an intake delivery line b288 provides direct fluid communication between the electrical system cooling loop b160 and the inlet of the compressor b220. Accordingly, electrical system cooling fluid ESCF moved through the electrical system cooling loop b160 picks up or extracts heat or thermal energy given off by the electrical components b152 and then flows downstream to the intake line b212 of the heater loop b210. The heated electrical system cooling fluid ESCF is then compressed at the compressor b220 and moved downstream to the recuperator b222 where the heated electrical system cooling fluid ESCF is further heated. The electrical system cooling fluid ESCF continues downstream to the combustor b132. The heated electrical system cooling fluid ESCF is mixed with fuel and the fuel/heated cooling fluid (e.g., heated air) mixture is combusted. The combustion gases generated by the combustor b132 flow downstream to the hot side heat exchanger b118 to ultimately heat the engine working fluid EWF within the piston bodies b122 of the closed cycle engine b110. The compressor b220 can be controlled to balance the mass flow of heated electrical system cooling fluid ESCF flowing downstream to the combustor b132. For instance, one or more controllers can control the speed of the compressor b220 to ultimately achieve a desired fuel/heated cooling fluid ratio or equivalence ratio.

Moreover, for this embodiment, the cooling fluid CF flowing through the cooling loop b280 is exhausted from the system, e.g., to an ambient environment. Specifically, in this example embodiment, all of the cooling fluid CF flowing through the cooling loop b280 is exhausted from the system, e.g., to an ambient environment. In alternative embodiments, the heat from the cooling fluid CF can be directed to one or more thermal applications b140 or systems.

FIG. 2.1.19 provides a schematic view of yet another power generation system b100 according to an example embodiment of the present disclosure. The power generation system b100 of FIG. 2.1.19 is configured in a similar manner as the power generation system b100 of FIG. 2.1.16, except as provided below. For this embodiment, the balance of plant b200 of the closed cycle engine b110 includes a heater loop b210, a chiller loop b240, and an electrical system cooling loop b160. The chiller loop b240 has a bottoming-cycle loop b250 and a cooling loop b280. As shown, a superheater b254 is positioned along the bottoming-cycle loop b250 and along the electrical system cooling loop b160. Notably, the electrical system cooling loop b160 is positioned at least in part in a heat exchange relationship with the bottoming-cycle loop b250 at the superheater b254. In this way, the relatively hot electrical system cooling fluid ESCF flowing through the superheater b254 can impart thermal energy to the chiller working fluid CWF flowing along the bottoming-cycle loop b250 at the superheater b254. As noted herein, the electrical system cooling fluid ESCF can be heated as the electrical system cooling fluid ESCF passes through the electrical system cooling loop b160 by heat given off by the electrical components b152 of the electrical system b150. In some embodiments, the heat imparted to the chiller working fluid CWF by the heated electrical system cooling fluid ESCF can cause the chiller working fluid CWF to superheat.

As further shown in FIG. 2.1.19, the heater loop b210 has a heat recovery loop b214 positioned at least in part in a heat exchange relationship with the bottoming-cycle loop b250 for imparting thermal energy thereto. Particularly, the heat recovery loop b214 of the heater loop b210 is positioned in a heat exchange relationship with the bottoming-cycle loop b250 at the superheater b254. Thus, the superheater b254 is positioned along the heat recovery loop b214 in addition to the bottoming-cycle loop b250. Accordingly, in addition to the relatively hot electrical system cooling fluid ESCF imparting thermal energy to the chiller working fluid CWF flowing through the bottoming-cycle loop b250 at the superheater b254, the hot combustion gases or heating working fluid HWF flowing along the heat recovery loop b214 can likewise impart thermal energy to the chiller working fluid CWF at the superheater b254. In this way, the potential energy of the chiller working fluid CWF can be increased. As such, an expansion device b256 positioned along the bottoming-cycle loop b250 downstream of the superheater b254 can extract more energy from the chiller working fluid CWF to produce useful work, e.g., that can be used to generate electrical power by the one or more electric machines b262 operatively coupled thereto.

After imparting thermal energy to the chiller working fluid CWF flowing along the bottoming-cycle loop b250 at the superheater b254, the electrical system cooling fluid ESCF can continue flowing downstream of the superheater b254. As shown, the electrical system cooling fluid ESCF can be exhausted from the electrical system cooling loop b160 downstream of the superheater b254. Particularly, the electrical system cooling fluid ESCF is exhausted from the electrical system cooling loop b160 directly downstream of the superheater b254. In other embodiments, the electrical system cooling fluid ESCF flowing downstream along the electrical system cooling loop b160 can be directed to one or more thermal applications b140.

FIG. 2.1.20 provides a schematic view of yet another power generation system b100 according to an example embodiment of the present disclosure. The power generation system b100 of FIG. 2.1.20 is configured in a similar manner as the power generation system b100 of FIG. 2.1.19, except as provided below.

For this embodiment, the electrical system cooling loop b160 is a closed loop. The electrical system cooling fluid ESCF is heated by heat given off by the electrical components b152 as it passes through the electrical system b150. The heated electrical system cooling fluid ESCF then flows downstream to the superheater b254. At the superheater b254, the heated electrical system cooling fluid ESCF imparts thermal energy to the chiller working fluid CWF flowing along the bottoming-cycle loop b250, e.g., as described above with reference to the embodiment of FIG. 1.1.19. Thereafter, however, instead of exhausting from the system, the electrical system cooling fluid ESCF flows downstream to a radiator b164 positioned the electrical system cooling loop b160. The radiator b164 is operable to remove heat from the electrical system cooling fluid ESCF, e.g., such that the electrical system cooling fluid ESCF can better cool the electrical components b152 of the electrical system b150. A pump b162 is positioned between the radiator b164 and the electrical system b150 along the electrical system cooling loop b160. Particularly, the pump b162 is positioned directly downstream of the radiator b164 and directly upstream of the electrical system b150. In other embodiments, the pump b162 is positioned upstream of the radiator b164 and downstream of the superheater b254. Generally, the pump b162 is operable to move the electrical system cooling fluid ESCF through the electrical system cooling loop b160. Further, in some embodiments, the pump b162 is operatively coupled with the turbine, e.g., so that the turbine can drivingly rotate the pump b162 positioned along the electrical system cooling loop b160.

FIG. 2.1.21 provides a schematic view of another power generation system b100 according to an example embodiment of the present disclosure. The power generation system b100 of FIG. 2.1.21 is configured in a similar manner as the power generation system b100 of FIG. 2.1.19, except as provided below.

For this embodiment, a first superheater b166 is positioned along the bottoming-cycle loop b250 and a second superheater b168 is positioned along the bottoming-cycle loop b250 downstream of the first superheater b166 and between the first superheater b166 and an expansion device b256. Particularly, the first superheater b166 is positioned downstream of and in direct fluid communication with the outlet of the cold side heat exchanger b116. Further, the first superheater b166 is positioned along the electrical system cooling loop b160 such that the heated electrical system cooling fluid ESCF flowing through the electrical system cooling loop b160 imparts thermal energy to the chiller working fluid CWF flowing through the bottoming-cycle loop b250 at the first superheater b166. Thus, the bottoming-cycle loop b250 and the electrical system cooling loop b160 are in a heat exchange relationship at the first superheater b166. After the electrical system cooling fluid ESCF flowing along the electrical system cooling loop b160 heats or imparts thermal energy to the chiller working fluid CWF at the first superheater b166, the electrical system electrical system cooling fluid ESCF is exhausted from the system. In other embodiments, however, the electrical system cooling fluid ESCF is directed downstream to one or more thermal applications b140.

As further depicted in FIG. 2.1.21, the heater loop b210 has a heat recovery loop b214 positioned at least in part in a heat exchange relationship with the bottoming-cycle loop b250 for imparting thermal energy thereto. More particularly, the second superheater b168 is positioned along the heat recovery loop b214 in addition to the bottoming-cycle loop b250. In this manner, the hot combustion gases flowing through the heat recovery loop b214 can heat or impart thermal energy to the chiller working fluid CWF flowing through the bottoming-cycle loop b250. As noted previously, this can increase the temperature of the chiller working fluid CWF and consequently increase the potential energy of the chiller working fluid CWF. As such, the expansion device b256 positioned along the bottoming-cycle loop b250 downstream of the second superheater b168 and between the second superheater b168 and the third heat exchanger b258 can extract more energy from the chiller working fluid CWF to produce useful work, e.g., that can be used to generate electrical power by the one or more electric machines b262 operatively coupled with the turbine.

FIG. 2.1.22 provides a schematic view of yet another power generation system b100 according to an example embodiment of the present disclosure. The power generation system b100 of FIG. 2.1.22 is configured in a similar manner as the power generation system b100 of FIG. 2.1.19, except as provided below.

For this embodiment, a first superheater b166 is positioned along the bottoming-cycle loop b250 and a second superheater b168 is positioned along the bottoming-cycle loop b250 downstream of the first superheater b166 and between the first superheater b166 and an expansion device b256. Particularly, the first superheater b166 is positioned downstream of and in direct fluid communication with the outlet of the cold side heat exchanger b116. The heater loop b210 of the balance of plant b200 of the closed cycle engine b110 has a heat recovery loop b214 positioned at least in part in a heat exchange relationship with the bottoming-cycle loop b250 for imparting thermal energy thereto. More particularly, the first superheater b166 is positioned along the heat recovery loop b214 in addition to the bottoming-cycle loop b250. In this manner, the hot combustion gases flowing through the heat recovery loop b214 can heat or impart thermal energy to the chiller working fluid CWF flowing through the bottoming-cycle loop b250 at the first superheater b166. As noted previously, this can increase the temperature of the chiller working fluid CWF and consequently increase the potential energy of the chiller working fluid CWF.

As further depicted in FIG. 2.1.22, the second superheater b168 is positioned along the electrical system cooling loop b160 such that the heated electrical system cooling fluid ESCF flowing through the electrical system cooling loop b160 imparts thermal energy to the chiller working fluid CWF flowing through the bottoming-cycle loop b250 at the second superheater b168. Thus, the bottoming-cycle loop b250 and the electrical system cooling loop b160 are in a heat exchange relationship at the second superheater b168. After the electrical system cooling fluid ESCF flowing along the electrical system cooling loop b160 heats or imparts thermal energy to the chiller working fluid CWF at the second superheater b168, the electrical system cooling fluid ESCF is exhausted from the system. In other embodiments, however, the electrical system cooling fluid ESCF is directed downstream to one or more thermal applications b140.

FIG. 2.1.23 provides a schematic view of yet another power generation system b100 according to an example embodiment of the present disclosure. The power generation system b100 of FIG. 2.1.23 is configured in a similar manner as the power generation system b100 of FIG. 2.1.21, except as provided below. For this embodiment, a first superheater b166 (denoted as "Superheater b254 1" in FIG. 2.1.23) is positioned along the bottoming-cycle loop b250 and a second superheater b168 (denoted as "Superheater b254 2" in FIG. 2.1.23) is positioned along the bottoming-cycle loop b250 downstream of the first superheater b166 and between the first superheater b166 and an expansion device b256. Particularly, the first superheater b166 is positioned downstream of and in direct fluid communication with the outlet of the cold side heat exchanger b116.

Further, the first superheater b166 is positioned along the electrical system cooling loop b160 such that the heated electrical system cooling fluid ESCF flowing through the electrical system cooling loop b160 imparts thermal energy to the chiller working fluid CWF flowing through the bottoming-cycle loop b250 at the first superheater b166. Thus, the bottoming-cycle loop b250 and the electrical system cooling loop b160 are in a heat exchange relationship at the first superheater b166. Notably, for this embodiment, the electrical system cooling loop b160 is a closed loop. As shown, after the electrical system cooling fluid ESCF flowing along the electrical system cooling loop b160 heats or imparts thermal energy to the chiller working fluid CWF at the first superheater b166, the electrical system cooling fluid ESCF flows downstream to a radiator b164 positioned along the electrical system cooling loop b160. The radiator b164 is operable to remove heat from the electrical system cooling fluid ESCF, e.g., such that the electrical system cooling fluid ESCF can better cool the electrical components b152 of the electrical system b150. A pump b162 is positioned between the radiator b164 and the electrical system b150 along the electrical system cooling loop b160. Particularly, the pump b162 is positioned directly downstream of the radiator b164 and directly upstream of the electrical system b150. In other embodiments, the pump b162 is positioned upstream of the radiator b164 and downstream of the superheater b254. The pump b162 is operable to move the electrical system cooling fluid ESCF through the electrical system cooling loop b160. Further, in some embodiments, the pump b162 is operatively coupled with the turbine, e.g., so that the turbine can drivingly rotate the pump b162 positioned along the electrical system cooling loop b160.

As further depicted in FIG. 2.1.23, the heater loop b210 has a heat recovery loop b214 positioned at least in part in a heat exchange relationship with the bottoming-cycle loop b250 for imparting thermal energy thereto. More particularly, the second superheater b168 is positioned along the heat recovery loop b214 in addition to the bottoming-cycle loop b250. In this manner, the hot combustion gases flowing through the heat recovery loop b214 can heat or impart thermal energy to the chiller working fluid CWF flowing through the bottoming-cycle loop b250 at the second superheater b168. Accordingly, for this embodiment, the chiller working fluid CWF flowing through the bottoming-cycle loop b250 is first heated at the cold side heat exchanger b116. That is, the chiller working fluid CWF picks up heat from the cold side b114 of the closed cycle engine b110 to provide cooling thereto. Next, the chiller working fluid CWF is heated at the first superheater b166 by the hot electrical system cooling fluid ESCF flowing along the electrical system cooling loop b160. Thereafter, the chiller working fluid CWF is heated at the second superheater b168 by the hot combustion gases flowing along the heat recovery loop b214 of the heater loop b210. Heating the chiller working fluid CWF can increase the temperature of the chiller working fluid CWF, which increases the potential energy of the chiller working fluid CWF. In some embodiments, the first superheater b166 and/or the second superheater b168 can superheat the chiller working fluid CWF. As such, the expansion device b256 positioned along the bottoming-cycle loop b250 downstream of the second superheater b168 and between the second superheater b168 and the third heat exchanger b258 can extract more energy from the chiller working fluid CWF to produce useful work, e.g., that can be used to generate electrical power by the one or more electric machines b262 operatively coupled with the turbine.

## SOFC as Bottoming Cycle to A Closed Cycle Engine

FIG. 2.1.24 provides a schematic block diagram of a power generation system b400 according to an example embodiment of the present disclosure. For this embodiment, the power generation system b400 includes a prime power generation system b402 and a heat recovery system b404. The power generation system b400 includes a prime power generator b406 operable to generate electrical power. The heat recovery system b404 includes a bottoming-cycle system b408 operable to recover heat from the prime power generation system 402. The bottoming-cycle system b408 can use the recovered heat to generate additional electrical power.

As depicted, in this example embodiment, the prime power generator b406 is a Solid Oxide Fuel cell (SOFC) b420 operable to generate electrical power by oxidizing a fuel via an electrochemical process. SOFC b420 are flexible with respect to fuels. For instance, in some embodiments, a SOFC b420 can operate with pure methane. Other suitable fuels may be used as well (e.g., alternatively to or in addition to methane). Further, in some embodiments, SOFC b420 can operate around 800°C. As will be explained further below, at least some of the heat generated by the SOFC b420, or the heat source in this example, can be used by the bottoming-cycle system b408 to generate electricity and/or to produce mechanical work.

The bottoming-cycle system b408 can be any suitable system described herein. For this example embodiment, the bottoming-cycle system b408 includes a closed cycle engine b110, such as e.g., any of the closed cycle engines described herein. For instance, the bottoming-cycle system b408 can include any of the Stirling engines provided herein. Generally, the closed cycle engine b110 can utilize heat recovered from the heat source, or the SOFC b420 in this example embodiment, to generate electrical power via one or more electric machines b412 operatively coupled thereto. In some embodiments, the closed cycle engine b110 can utilize the recovered heat to produce mechanical work.

Moreover, in some embodiments, the bottoming-cycle system b408 can also be operatively coupled with one or more further bottoming-cycle systems. For instance, as shown in FIG. 2.1.24, the bottoming-cycle system b408 can be operatively coupled with a second bottoming-cycle system b410, such as e.g., another closed cycle engine b110 or one of the other bottoming-cycle systems described herein. The second bottoming-cycle system b410 can be operatively coupled with one or more electric machines b412 operable to generate electrical power. Notably, the prime power generation system b402 can be operatively coupled with any suitable number of bottoming-cycle systems. The prime power generation system b402 can be operatively coupled with any suitable number of bottoming-cycle systems in series, e.g., as shown in FIG. 2.1.24, or additionally or alternatively, the prime power generation system b402 can be operatively coupled with any suitable number of bottoming-cycle systems in parallel.

FIG. 2.1.25 provides a schematic block diagram depicting various advantages of the heat recovery system b404 of FIG. 2.1.24 according to an aspect of the present disclosure. Advantageously, the SOFC b420 prime power generation system b402 and the operatively coupled Stirling engine bottoming-cycle system b408 can generate electrical power at an electrical efficiency of about 70% or greater while achieving a Combined Heat and Power (CHP) efficiency of 90% or better. Furthermore, the heat recovery system b404 of FIG. 2.1.24 and FIG. 2.1.25 can produce ultra-low emissions relative to other conventional systems.

FIG. 2.1.26 provides a schematic view of a power generation system b400 having a prime power generation system b402 and a heat recovery or bottoming-cycle system b408 according to an example embodiment of the present disclosure. The prime power generation system b402 includes a prime power generator b406. For this embodiment, the prime power generator b406 is a fuel cell b420. The fuel cell b420 can be a SOFC b420, for example. Generally, the fuel cell b420 is operable to generate electrical power. The heat recovery system b404 includes a bottoming-cycle system b408. The bottoming-cycle system b408 includes a closed cycle engine b110. The bottoming-cycle system b408 can recover heat generated by the fuel cell b420 and can direct the heat to a hot side b112 of the closed cycle engine b110. Particularly, the recovered heat can be used to increase the temperature of engine working fluid EWF within the piston bodies b122 of the closed cycle engine b110 at the hot side b112. The heat imparted to the engine working fluid EWF creates a temperature differential between the hot side b112 and the cold side b114 of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b412 operatively coupled with the piston assemblies b126.

Furthermore, the prime power generation system b402 includes a reformer b428 operable to receive a fuel from a fuel source b430 and yield a synthesized gas based at least in part on the fuel received. For instance, as noted above, the fuel can be methane and/or some other suitable fuel. The reformer b428 also receives water, and thus, the reformer b428 yields the synthesized gas based at least in part on received water. In some embodiments, the synthesized gas includes reformate, carbon monoxide, carbon dioxide, water, and/or nitrogen. The reformer b428 can be an auto thermal reformer b428, for example.

The system b400 also includes a water source b436, such as e.g., a water tank, a municipal water line, a natural body of water, a filtered water source b436, etc. A water supply conduit b440 provides fluid communication between the water source b436 and the reformer b428 as shown in FIG. 2.1.26. For depicted embodiment, the system includes a water heat exchanger b438 positioned downstream of the water source b436 and upstream of the reformer b428. Notably, the water heat exchanger b438 is positioned in a heat exchange relationship with the water supply conduit b440 for imparting thermal energy to water W flowing from the water source b436 to the reformer b428. Accordingly, the reformer b428 yields the synthesized gas based at least in part on received heated water W. In some embodiments, the water heat exchanger b438 is operable to vaporize the water flowing therethrough.

As further depicted in FIG. 2.1.26, the system includes a fuel source b430. A fuel supply conduit b434 provides fluid communication between the fuel source b430 and the reformer b428. A fuel heat exchanger b432 is positioned downstream of the fuel source b430 and upstream of the reformer b428. Specifically, the fuel heat exchanger b432 is positioned in a heat exchange relationship with the fuel supply conduit b434 for imparting thermal energy to the fuel F flowing from the fuel source b430 to the reformer b428. In this way, the reformer b428 can receive heated fuel F. In addition, as shown in FIG. 2.1.26, the reformer b428 also receives a volume of heated air from a combustor heat exchanger b448 of the system. Thus, the reformer b428 receives heated water, heated fuel, and heated air and yields a synthesized gas.

After the reformer b428 converts or yields the synthesized gas, the synthesized gas is routed to the closed cycle engine b110. Particularly, as noted above, the closed cycle engine b110 defines or has a hot side b112 in fluid communication with the reformer b428. The hot side b112 of the closed cycle engine b110 is operable to receive the synthesized gas as shown in FIG. 2.1.26. The synthesized gas imparts thermal energy to the hot side b112 and particularly to the engine working fluid EWF such that piston assemblies b126 of the closed cycle engine b110 are moved. The fuel cell b420 is in fluid communication with the hot side b112 of the closed cycle engine b110 and is operable to receive the synthesized gas after the synthesized gas has passed through the hot side b112 of the closed cycle engine b110. Specifically, the fuel cell b420 has an anode b422 and a cathode b424 spaced from one another by an electrolyte. As shown, the anode b422 of the fuel cell b420 receives the synthesized gas from the hot side b112 of the closed cycle engine b110. As will be appreciated, the hydrogen atoms of the synthesized gas interact with the anode b422 and chemical reactions strip the hydrogen atoms of their electrons, thereby ionizing the hydrogen atoms. Oxygen enters the fuel cell b420 via heated air at the cathode b424 and eventually combines with the hydrogen ions. The hydrogen ions and oxygen form water, which is drained from the fuel cell b420. The electrons stripped from the hydrogen atoms provide electric current that can be used to do work. Accordingly, the fuel cell b420 generates electrical power. Furthermore, as noted above, the fuel cell b420 generates heat that can be harnessed and ultimately used to generate further electrical power.

The combustor b446 of a heater body b444 (e.g., such as one of the heater bodies described herein) is positioned downstream of and is in fluid communication with the fuel cell b420. The combustor b446 can be the combustor b446 of the closed cycle engine b110, and more specifically, any one of the Stirling engines described herein. In some embodiments, the combustor b446 is a catalytic combustor. Generally, the combustor b446 is operable to receive air and excess fuel from the fuel cell b420 and combust the excess fuel/air mixture to generate heat. As the hot stream mixture of excess fuel and air exits the fuel cell b420 at a relatively high temperature, the combustor b446 can readily combust the mixture efficiently. As further depicted in FIG. 2.1.26, the system b400 includes a combustor heat exchanger b448 positioned in a heat exchange relationship with the combustor b446. The hot combustion gases generated by the combustor b446 impart thermal energy to air flowing through the combustor heat exchanger b448.

Once heated by the combustor heat exchanger b448, the heated air is routed to the reformer b428. Specifically, as depicted, the combustor heat exchanger b448 is in fluid communication with the reformer b428 such that the heated air can be directed to and mixed with at least one of the fuel and the water therein. By heating the air input into the reformer b428, the temperature of the synthesized gas output by the reformer b428 is increased, which ultimately can increase the temperature of the hot side b112 of the closed cycle engine b110, thereby improving the efficiency of the closed cycle engine b110 and overall system.

The combustion gases generated by the combustor b446 are routed along a heater supply conduit b460 to ultimately provide a heat source b134 for various heat exchangers, such as the water heat exchanger b438, the fuel heat exchanger b432, and a recovery heat exchanger b442. As shown, the heater supply conduit b460 provides fluid communication between the combustor heat exchanger b448 and the recovery heat exchanger b442, the water heat exchanger b438, and the fuel heat exchanger b432. In this way, the combustion gases can act as a heat source b134 and impart thermal energy to the air flowing through the recovery heat exchanger b442, the water flowing through the water heat exchanger b438, and the fuel flowing through the fuel heat exchanger b432. In this example embodiment, the recovery heat exchanger b442 is positioned upstream of the water heat exchanger b438 and fuel heat exchanger b432. The water heat exchanger b438 is positioned upstream of the fuel heat exchanger b432 along the heater supply conduit b460. However, in alternative embodiments, the water heat exchanger b438 is positioned downstream of the fuel heat exchanger b432 along the heater supply conduit b460.

As further shown in FIG. 2.1.26, the closed cycle engine b110 has or defines a cold side b114, as noted previously, and the system further includes a chiller loop b240 operable to remove heat from the cold side b114 of the closed cycle engine b110. A chiller pump b456 is positioned along the chiller loop b240 and is operable to move a chiller working fluid through the chiller loop b240, including through the cold side b114 of the closed cycle engine b110 as depicted. The chiller working fluid can be any suitable working fluid, such a refrigerant, water, a supercritical fluid (e.g., supercritical carbon dioxide). A chiller heat exchanger b454 is positioned along the chiller loop b240. Notably, a cooling loop b458 is positioned in a heat exchange relationship with the chiller loop b240 for removing heat from the chiller working fluid flowing through the chiller heat exchanger b454. A fluid mover b452 is positioned along the cooling loop b458 and is operable to move air through the chiller heat exchanger b454. In this way, the air moved through the chiller heat exchanger b454 picks up heat from the chiller working fluid. Thus, the air becomes preheated air. Accordingly, the air flowing through the cooling loop b458 cools the chiller working fluid and recovers heat therefrom.

A recovery supply loop b450 provides fluid communication between the fluid mover b452 and the recovery heat exchanger b442 and ultimately to the cathode b424 of the fuel cell b420 and the combustor heat exchanger b448 as depicted in FIG. 2.1.26. Accordingly, after air is moved through the chiller heat exchanger b454 along the cooling loop b458, the preheated air is moved downstream to the recovery heat exchanger b442 along the recovery supply loop b450. The preheated air is heated once again at the recovery heat exchanger b442. As noted above, the recovery heat exchanger b442 is also in fluid communication with the heater supply conduit b460. In this manner, the combustion gases flowing downstream from the combustor heat exchanger b448 can impart thermal energy (e.g., heat) to the preheated air flowing through the recovery heat exchanger b442 along the recovery supply loop b450.

Once heated at the recovery heat exchanger b442, a first portion of the heated air flows to the cathode b424 of the fuel cell b420 along the recovery supply loop b450. In this manner, oxygen can be provided to the cathode b424 so that chemical reactions can take place. Moreover, a second portion of the heated air flows through the combustor heat exchanger b448 where the heated air is heated by the hot combustion gases generated by the combustor b446. Thereafter, the heated air, now at an even higher temperature, is routed to the reformer b428. In some embodiments, the recovery heat exchanger b442 is operable to superheat the air flowing from the fluid mover b452 to the combustor heat exchanger b448 and/or the cathode b424 of the fuel cell b420. In some embodiments, the air is superheated at the combustor heat exchanger b448.

The system also includes one or more electric machines b412. The one or more electric machines b412 are operatively coupled with at least one of the piston assemblies b126 of the closed cycle engine b110. The one or more electric machines b412 are operable to generate electrical power when driven by the piston assemblies b126 of the closed cycle engine b110. In some embodiments, the fuel cell b420 is operable to generate about 25 kWe and the one or more electric machines b412 are operable to produce about 25 kWe.

FIG. 2.1.27 provides a schematic block diagram depicting a power generation system b400 having a prime power generation system b402 and a heat recovery system b404 according to an example embodiment of the present disclosure. The prime power generation system b402 includes a prime power generator b406, which is a fuel cell b420 in this example embodiment. The fuel cell b420 can be a SOFC b420, for example. Generally, the fuel cell b420 is operable to generate electrical power. The heat recovery system b404 includes a bottoming-cycle system b408. The bottoming-cycle system b408 includes a closed cycle engine b110. The bottoming-cycle system b408 can recover heat generated by the fuel cell b420 and can direct the heat to a hot side b112 of the closed cycle engine b110. Particularly, the recovered heat can be used to increase the temperature of engine working fluid EWF within the piston bodies b122 of the closed cycle engine b110 at the hot side b112. The heat imparted to the engine working fluid EWF creates a temperature differential between the hot side b112 and the cold side b114 of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b412 operatively coupled with the piston assemblies b126.

The embodiment depicted in FIG. 2.1.27 has a similar configuration to the system of FIG. 2.1.26 except as provided below. For this embodiment, the synthesized gas yielded by the reformer b428 exits the reformer b428 and flows directly to the anode b422 of the fuel cell b420 (as opposed to flowing to the hot side b112 of the closed cycle engine b110 as shown in FIG. 2.1.26). Further, for the depicted embodiment of FIG. 2.1.27, the combustion gases exiting the combustor heat exchanger b448 flow downstream directly to the hot side b112 of the closed cycle engine b110 (as opposed to flowing to the reformer b428 or the recovery heat exchanger b442 as shown in FIG. 2.1.26) and then to the recovery heat exchanger b442. Accordingly, the hot side b112 of the closed cycle engine b110 is the first primary heat exchange element that the combustion gases exchange heat with after exiting the combustor heat exchanger b448. Moreover, in some embodiments, the combustion gases flowing downstream along the heater supply conduit b460 can exchange heat with the water flowing along the water supply conduit b440 at the water heat exchanger b438 and then may be exhausted downstream of the water heat exchanger b438 and upstream of the fuel heat exchanger b432. However, in other embodiments, the combustion gases flowing downstream along the heater supply conduit b460 can exchange heat first with the air flowing along the recovery supply loop b450 at the recovery heat exchanger b442, with the water flowing along the water supply conduit b440 at the water heat exchanger b438, and then with the fuel at the fuel heat exchanger b432. Thereafter, the hot combustion gases can be exhausted from the system. In some embodiments, the hot combustion gases can be directed to one or more thermal applications 140 for providing heat thereto.

## Computing System

FIG. 5.1.28 provides an example computing system in accordance with an example embodiment of the present disclosure. The one or more controllers, computing devices, or other control devices described herein can include various components and perform various functions of the one or more computing devices of the computing system b2000 described below.

As shown in FIG. 5.1.28, the computing system b2000 can include one or more computing device(s) b2002. The computing device(s) b2002 can include one or more processor(s) b2004 and one or more memory device(s) b2006. The one or more processor(s) b2004 can include any suitable processing device, such as a microprocessor, microcontroller, integrated circuit, logic device, and/or other suitable processing device. The one or more memory device(s) b2006 can include one or more computer-readable media, including, but not limited to, non-transitory computer-readable media, RAM, ROM, hard drives, flash drives, and/or other memory devices.

The one or more memory device(s) b2006 can store information accessible by the one or more processor(s) b2004, including computer-readable instructions b2008 that can be executed by the one or more processor(s) b2004. The instructions b2008 can be any set of instructions that when executed by the one or more processor(s) b2004, cause the one or more processor(s) b2004 to perform operations. In some embodiments, the instructions b2008 can be executed by the one or more processor(s) b2004 to cause the one or more processor(s) b2004 to perform operations, such as any of the operations and functions for which the computing system b2000 and/or the computing device(s) b2002 are configured, such as e.g., operations for controlling certain aspects of power generation systems and/or controlling one or more closed cycle engines as described herein. For instance, the methods described herein can be implemented in whole or in part by the computing system b2000. Accordingly, the method can be at least partially a computer-implemented method such that at least some of the steps of the method are performed by one or more computing devices, such as the exemplary computing device(s) b2002 of the computing system b2000. The instructions b2008 can be software written in any suitable programming language or can be implemented in hardware. Additionally, and/or alternatively, the instructions b2008 can be executed in logically and/or virtually separate threads on processor(s) b2004. The memory device(s) b2006 can further store data b2010 that can be accessed by the processor(s) b2004. For example, the data b2010 can include models, databases, etc.

The computing device(s) b2002 can also include a network interface b2012 used to communicate, for example, with the other components of system (e.g., via a network). The network interface b2012 can include any suitable components for interfacing with one or more network(s), including for example, transmitters, receivers, ports, controllers b1510, antennas, and/or other suitable components. One or more controllable devices b1534 and other controllers b1510 can be configured to receive one or more commands or data from the computing device(s) b2002 or provide one or more commands or data to the computing device(s) b2002.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

It should be appreciated that performances, power outputs, efficiencies, or temperature differentials at the system A10, the engine A100, or both, provided herein may be based on a "Sea Level Static" or "Standard Day" input air condition such as defined by the United States National Aeronautics and Space Administration, unless otherwise specified. For example, unless otherwise specified, conditions provided to the heater body, the chiller assembly, or both, or any subsystems, components, etc. therein, or any other portions of the system A10 receiving an input fluid, such as air, are based on Standard Day conditions.

The heat transfer relationships described herein may include thermal communication by conduction and/or convection. A heat transfer relationship may include a thermally conductive relationship that provides heat transfer through conduction (e.g., heat diffusion) between solid bodies and/or between a solid body and a fluid. Additionally, or in the alternative, a heat transfer relationship may include a thermally convective relationship that provides heat transfer through convection (e.g., heat transfer by bulk fluid flow) between a fluid and a solid body. It will be appreciated that convection generally includes a combination of a conduction (e.g., heat diffusion) and advection (e.g., heat transfer by bulk fluid flow). As used herein, reference to a thermally conductive relationship may include conduction and/or convection; whereas reference to a thermally convective relationship includes at least some convection.

A thermally conductive relationship may include thermal communication by conduction between a first solid body and a second solid body, between a first fluid and a first solid body, between the first solid body and a second fluid, and/or between the second solid body and a second fluid. For example, such conduction may provide heat transfer from a first fluid to a first solid body and/or from the first solid body to a second fluid. Additionally, or in the alternative, such conduction may provide heat transfer from a first fluid to a first solid body and/or through a first solid body (e.g., from one surface to another) and/or from the first solid body to a second solid body and/or through a second solid body (e.g., from one surface to another) and/or from the second solid body to a second fluid.

A thermally convective relationship may include thermal communication by convection (e.g., heat transfer by bulk fluid flow) between a first fluid and a first solid body, between the first solid body and a second fluid, and/or between a second solid body and a second fluid. For example, such convection may provide heat transfer from a first fluid to a first solid body and/or from the first solid body to a second fluid. Additionally, or in the alternative, such convection may provide heat transfer from a second solid body to a second fluid.

It will be appreciated that the terms "clockwise" and "counter-clockwise" are terms of convenience and are not to be limiting. Generally, the terms "clock-wise" and "counter-clockwise" have their ordinary meaning, and unless otherwise indicated refer to a direction with reference to a top-down or upright view. Clockwise and counter-clockwise elements may be interchanged without departing from the scope of the present disclosure.

Where temperatures, pressures, loads, phases, etc. are said to be substantially similar or uniform, it should be appreciated that it is understood that variations, leakages, or other minor differences in inputs or outputs may exist such that the differences may be considered negligible by one skilled in the art. Additionally, or alternatively, where temperatures or pressures are said to be uniform, i.e., a substantially uniform unit (e.g., a substantially uniform temperature at the plurality of chambers A221), it should be appreciated that in one embodiment, the substantially uniform unit is relative to an average operating condition, such as a phase of operation of the engine, or thermal energy flow from one fluid to another fluid, or from one surface to a fluid, or from one surface to another surface, or from one fluid to another surface, etc. For example, where a substantially uniform temperature is provided or removed to/from the plurality of chambers A221, A222, the temperature is relative to an average temperature over a phase of operation of the engine. As another example, where a substantially uniform thermal energy unit is provided or removed to/from the plurality of chambers A221, A222, the uniform thermal energy unit is relative to an average thermal energy supply from one fluid to another fluid relative to the structure, or plurality of structures, through which thermal energy transferred.

Various interfaces, such as mating surfaces, interfaces, points, flanges, etc. at which one or more monolithic bodies, or portions thereof, attach, couple, connect, or otherwise mate, may define or include seal interfaces, such as, but not limited to, labyrinth seals, grooves into which a seal is placed, crush seals, gaskets, vulcanizing silicone, etc., or other appropriate seal or sealing substance. Additionally, or alternatively, one or more of such interfaces may be coupled together via mechanical fasteners, such as, but not limited to, nuts, bolts, screws, tie rods, clamps, etc. In still additional or alternative embodiments, one or more of such interfaces may be coupled together via a joining or bonding processes, such as, but not limited to, welding, soldering, brazing, etc., or other appropriate joining process.

It should be appreciated that ratios, ranges, minimums, maximums, or limits generally, or combinations thereof, may provide structure with benefits not previously known in the art. As such, values below certain minimums described herein, or values above certain maximums described herein, may alter the function and/or structure of one or more components, features, or elements described herein. For example, ratios of volumes, surface area to volume, power output to volume, etc. below the ranges described herein may be insufficient for desired thermal energy transfer, such as to undesirably limit power output, efficiency, or Beale number. As another example, limits greater than those described herein may undesirably increase the size, dimensions, weight, or overall packaging of the system or engine, such as to undesirably limit the applications, apparatuses, vehicles, usability, utility, etc. in which the system or engine may be applied or operated. Still further, or alternatively, undesired increases in overall packaging may undesirably decrease efficiency of an overall system, application, apparatus, vehicle, etc. into which the engine may be installed, utilized, or otherwise operated. For example, although an engine may be constructed defining a similar or greater efficiency as described herein, such an engine may be of undesirable size, dimension, weight, or overall packaging such as to reduce an efficiency of the system into which the engine is installed. As such, obviation or transgression of one or more limits described herein, such as one or limits relative to features such as, but not limited to, heater conduits, chiller conduits A54, chamber volumes, walled conduit volumes, or operational temperatures, or combinations thereof, may undesirably alter such structures such as to change the function of the system or engine.

Although specific features of various embodiments may be shown in some drawings and not in others, this is for convenience only. This written description uses examples to describe the presently disclosed subject matter, including the best mode, and also to provide any person skilled in the art to practice the subject matter, including making and using any devices or systems and performing any incorporated methods. The patentable scope of the presently disclosed subject matter is defined by the claims, and may include other examples that occur to those skilled in the art. The scope of the invention(s) described herein is defined by one or more of the claims.

**EP 3 973 161 B1**

**Claims**

1.  A system, comprising:

   a closed cycle engine (b110) defining a hot side (b112) and a cold side (114);
   a heater loop (b210) positioned at least in part in a heat exchange relationship with the hot side (b112) of the closed cycle engine (b110) for imparting thermal energy thereto; and
   a hot side heat exchanger (b118) positioned along an intake line (b212) of the heater loop (b210);
   wherein the heater loop (b210) has a heat recovery loop (b214) operable to recover heat from the hot side (b112) and return the recovered heat to the hot side (b112), and wherein the heat recovery loop (b214) has a recirculation loop (b216) in fluid communication with the intake line (b212) for recirculating heating working fluid to the hot side heat exchanger (b118);
   further comprising:

   a chiller loop (b240) positioned at least in part in a heat exchange relationship with the cold side of the closed cycle engine (b110) for removing heat therefrom, **characterised in that** the chiller loop (b240) has a bottoming-cycle loop; and
   an expansion device positioned along the bottoming-cycle loop and operable to expand and extract energy from the chiller working fluid heated by heat recovered from the cold side of the close cycle engine (b110).

2.  The system of claim 1, comprising:
   a recuperator (b222) positioned upstream of the hot side heat exchanger (b118) along the intake line (b212), and wherein the recuperator (b222) is positioned along the heat recovery loop (b214) of the heater loop (b210), wherein the recuperator (b222) is operable to preheat pressurized fluid flowing along the intake line (b212).

3.  The system of claim 2, wherein heating working fluid recovered from the hot side heat exchanger (b118) flows through the recuperator (b222) to impart thermal energy to the pressurized fluid flowing along the intake line (b212) through the recuperator (b222).

4.  The system of claim 3, wherein the recuperator (b222) is positioned downstream of an outlet of the hot side heat exchanger (b118).

5.  The system of any preceding claim, wherein the hot side heat exchanger (b118) comprises a combustor (b132), and wherein the heating working fluid comprises combustion gases.

6.  The system of claim 5, comprising:
   a fuel preheater positioned downstream of a fuel source and upstream of the combustor (b132) along a fuel line and also along the heat recovery loop (b214) downstream of the outlet of the hot side heat exchanger (b118), and wherein combustion gases recovered from the hot side flowing through the fuel preheater are positioned in a heat exchange relationship with fuel flowing through the fuel preheater downstream to the combustor (b132), and wherein combustion gases flowing through the fuel preheater along the heat recovery loop (b214) impart thermal energy to the fuel flowing along the fuel line at the fuel preheater.

7.  The system of any preceding claim, comprising:
   a chiller loop positioned at least in part in a heat exchange relationship with the cold side of the closed cycle engine (b110) for removing heat therefrom.

8.  The system of claim 7, wherein the chiller loop is positioned at least in part in a heat exchange relationship with the heater loop (b210).

9.  The system of claim 7 or 8, wherein the chiller loop has a bottoming-cycle loop, and wherein the system comprises:

   a pump positioned along the bottoming-cycle loop, the pump operable to move a chiller working fluid through the bottoming-cycle loop;
   a cold side heat exchanger positioned along the bottoming-cycle loop downstream of the pump and in a heat exchange relationship with the cold side of the closed cycle engine (b110),
   wherein the chiller working fluid flowing through the cold side heat exchanger removes heat from the cold side of the closed cycle engine (b110); and

a second heat exchanger positioned along the bottoming-cycle loop downstream of the cold side heat exchanger, and further wherein the second heat exchanger is positioned along the heat recovery loop (b214).

10. The system of claim 9, wherein recovered heating working fluid from the hot side flowing through the second heat exchanger along the heat recovery loop (b214) is positioned in a heat exchange relationship with the chiller working fluid flowing through the second heat exchanger.

11. The system of claim 9 or 10, wherein recovered heating working fluid from the hot side flowing through the second heat exchanger impart thermal energy to the chiller working fluid flowing through the second heat exchanger.

12. The system of any one or more of claims 9-11, comprising:
an expansion device positioned along the bottoming-cycle loop downstream of the second heat exchanger and upstream of the pump, wherein the expansion device is operatively configured to expand and extract energy from the chiller working fluid to produce work.

13. The system of claim 12, wherein the second heat exchanger is positioned between the cold side heat exchanger and the expansion device along the bottoming-cycle loop.

14. The system of any one or more of claims 12-13, further comprising:
one or more electric machines operatively coupled with the expansion device for generating electrical power.

15. The system of any one or more of claims 12-14, wherein the chiller loop has a cooling loop, the system comprising:
a third heat exchanger positioned along the bottoming-cycle loop downstream of the expansion device and upstream of the pump, and wherein the third heat exchanger is positioned along the cooling loop, wherein the chiller working fluid flowing through the third heat exchanger along the bottoming-cycle loop is in a heat exchange relationship with the cooling fluid flowing through the third heat exchanger along the cooling loop, and wherein the chiller working fluid flowing along the bottoming-cycle loop imparts thermal energy to the cooling fluid flowing along the cooling loop at the third heat exchanger.

16. The system of any one or more of claims 9-15, wherein the chiller loop has a cooling loop, comprising:
a fourth heat exchanger positioned along the bottoming-cycle loop downstream of the pump and upstream of the cold side heat exchanger, wherein the fourth heat exchanger is positioned along the cooling loop, and wherein the chiller working fluid flowing through the fourth heat exchanger along the bottoming-cycle loop is in a heat exchange relationship with the cooling fluid flowing through the fourth heat exchanger along the cooling loop, and further wherein the chiller working fluid flowing along the bottoming-cycle loop imparts thermal energy to the cooling fluid flowing along the cooling loop at the fourth heat exchanger.

17. The system of any preceding claim, comprising:

a compressor (b220) positioned along the intake line (b212) of the heater loop (b210), the compressor (b220) operable to pressurize fluid flowing along the intake line (b212); and
a recuperator (b222) positioned downstream of the compressor (b220) and upstream of the combustor (b132) along the intake line (b212) and also positioned along the heat recovery loop (b214) of the heater loop (b210), the recuperator (b222) operable to preheat pressurized fluid flowing along the intake line (b212).

18. The system of any preceding claim, comprising:
one or more electric machines operatively coupled with one or more piston assemblies of the closed cycle engine (b110) for generating electrical power.

19. The system of any preceding claim, wherein the one or more piston assemblies of the closed cycle engine (b110) are each movable within piston chambers defined by respective piston bodies (b122), and wherein the piston assemblies are free pistons.

**Patentansprüche**

1. Ein System, bestehend aus:

einen Motor mit geschlossenem Zyklus (b110), der eine heiße Seite (b112) und eine kalte Seite (114) definiert; einem Heizkreis (b210), der zumindest teilweise in einem Wärmeaustauschverhältnis mit der heißen Seite (b112) des Motors mit geschlossenem Kreislauf (b110) angeordnet ist, um ihm Wärmeenergie zu verleihen; und einem Wärmetauscher (b118) entlang einer Ansaugleitung (b212) des Heizkreises (b210);

wobei der Heizkreis (b210) eine Wärmerückgewinnungsschleife (b214) aufweist, die zur Rückgewinnung von Wärme von der heißen Seite (b112) und zur Rückführung der zurückgewonnenen Wärme auf die heiße Seite (b112) bedienbar ist, und wobei der Wärmerückgewinnungskreis (b214) eine Umwälzschleife (b216) in Fluidkommunikation mit der Ansaugleitung (b212) zur Rückführung von Heizarbeitsflüssigkeit zum Wärmetauscher (b118) aufweist;

ferner umfassend:

eine Kühlerschleife (b240), die zumindest teilweise in einer Wärmeaustauschbeziehung mit der kalten Seite des Motors mit geschlossenem Kreislauf (b110) zum Ableiten von Wärme davon positioniert ist, **dadurch gekennzeichnet, dass** die Kühlerschleife (b240) eine Bottoming-Cycle-Schleife aufweist; und

eine Expansionsvorrichtung, die entlang der Bodenkreislaufschleife positioniert und bedienbar ist, um Energie aus der Kühler-Arbeitsflüssigkeit zu expandieren und zu extrahieren, die durch Wärme erhitzt wird, die von der kalten Seite des Close-Cycle-Motors zurückgewonnen wird (b110).

2. Das System nach Anspruch 1, bestehend aus:
einem Rekuperator (b222), der vor dem Wärmetauscher (b118) entlang der Ansaugleitung (b212) positioniert ist und bei dem der Rekuperator (b222) entlang der Wärmerückgewinnungsschleife (b214) der Heizschleife (b210) positioniert ist, wobei der Rekuperator (b222) bedienbar ist, um Druckflüssigkeit, die entlang der Ansaugleitung (b212) fließt, vorzuwärmen.

3. Das System nach Anspruch 2, wobei Heizarbeitsflüssigkeit, die vom Heißseitenwärmetauscher (b118) zurückgewonnen wird, durch den Rekuperator (b222) fließt, um der Druckflüssigkeit, die entlang der Ansaugleitung (b212) durch den Rekuperator (b222) fließt, Wärmeenergie zu verleihen.

4. Das System nach Anspruch 3, wobei der Rekuperator (b222) hinter einem Ausgang des Heißseitenwärmetauschers (b118) positioniert ist.

5. Das System nach einem der vorhergehenden Ansprüche, wobei der Heißseitenwärmetauscher (b118) einen Brenner (b132) umfasst und wobei das Heizarbeitsfluid Verbrennungsgase umfasst.

6. Das System nach Anspruch 5, bestehend aus:
ein Brennstoffvorwärmer, der hinter einer Brennstoffquelle und vor der Brennkammer (b132) entlang einer Brennstoffleitung und auch entlang des Wärmerückgewinnungskreislaufs (b214) hinter dem Ausgang des Wärmetauschers (b118) positioniert ist und bei dem die von der durch den Brennstoffvorwärmer fließenden heißen Seite zurückgewonnenen Verbrennungsgase in einem Wärmeaustauschverhältnis zu dem Kraftstoff stehen, der durch den Brennstoffvorwärmer nach der Brennkammer (b132) fließt, und bei dem die durch den Brennstoffvorwärmer fließenden Verbrennungsgase entlang des Wärmerückgewinnungskreislaufs (b214) dem Kraftstoff, der entlang der Brennstoffleitung am Brennstoffvorwärmer fließt, Wärmeenergie verleihen.

7. Das System nach einem der vorhergehenden Ansprüche, bestehend aus:
eine Kühlerschlaufe, die zumindest teilweise in einer Wärmeaustauschbeziehung mit der kalten Seite des Motors mit geschlossenem Kreislauf (b110) angeordnet ist, um Wärme daraus zu entfernen.

8. Das System nach Anspruch 7, wobei die Kühlerschleife zumindest teilweise in einer Wärmeaustauschbeziehung mit der Heizerschleife (b210) positioniert ist.

9. Das System nach Anspruch 7 oder 8, wobei die Kühlerschleife eine Bottoming-Cycle-Schleife aufweist und wobei das System umfasst:

eine Pumpe, die entlang der Bodenkreislauf-Schleife positioniert ist und die Pumpe bedienbar ist, um eine Kühlflüssigkeit durch die Bodenkreislauf-Schleife zu bewegen;
einem Kaltseiten-Wärmetauscher, der sich entlang der Bodenkreislaufschleife hinter der Pumpe in einem Wärmeaustauschverhältnis mit der Kaltseite des Motors mit geschlossenem Kreislauf (b110) befindet, wobei die durch den Kaltseiten-Wärmetauscher fließende Kühlflüssigkeit die Wärme von der Kaltseite des Motors mit geschlossenem Kreislauf (b110) ableitet; und

einen zweiten Wärmetauscher, der entlang der Bodenkreislaufschleife hinter dem kaltseitigen Wärmetauscher positioniert ist, und weiter, wobei der zweite Wärmetauscher entlang der Wärmerückgewinnungsschleife positioniert ist (b214).

10. Das System nach Anspruch 9, wobei rückgewonnene Heizarbeitsflüssigkeit von der heißen Seite, die durch den zweiten Wärmetauscher entlang der Wärmerückgewinnungsschleife (b214) fließt, in einer Wärmeaustauschbeziehung mit der Kühlerarbeitsflüssigkeit, die durch den zweiten Wärmetauscher fließt, positioniert ist.

11. Das System nach Anspruch 9 oder 10, wobei rückgewonnenes Heizarbeitsfluid von der heißen Seite, die durch den zweiten Wärmetauscher fließt, dem Kühlerarbeitsfluid, das durch den zweiten Wärmetauscher fließt, Wärmeenergie verleiht.

12. Das System nach einem oder mehreren der Ansprüche 9-11, umfassend:

eine Expansionsvorrichtung, die entlang der Bottoming-Cycle-Schleife nach dem zweiten Wärmetauscher und vor der Pumpe positioniert ist, wobei die Expansionsvorrichtung operativ so konfiguriert ist, dass sie Energie aus dem Kühler-Arbeitsfluid ausdehnt und extrahiert, um Arbeit zu erzeugen.

13. Das System nach Anspruch 12, wobei der zweite Wärmetauscher zwischen dem kaltseitigen Wärmetauscher und der Expansionsvorrichtung entlang der Boden-Zyklus-Schleife positioniert ist.

14. Das System nach einem oder mehreren der Ansprüche 12-13, ferner umfassend:

eine oder mehrere elektrische Maschinen, die mit der Erweiterungsvorrichtung zur Erzeugung elektrischer Energie operativ gekoppelt sind.

15. Das System nach einem oder mehreren der Ansprüche 12-14, wobei die Kühlschleife eine Kühlschleife aufweist, wobei das System umfasst:

ein dritter Wärmetauscher, der entlang der Bottoming-Zyklus-Schleife hinter der Expansionsvorrichtung und vor der Pumpe positioniert ist, und wobei der dritte Wärmetauscher entlang der Kühlschleife positioniert ist, wobei die Kühler-Arbeitsflüssigkeit, die durch den dritten Wärmetauscher entlang der Bottoming-Zyklus-Schleife fließt, in einem Wärmeaustauschverhältnis mit der Kühlflüssigkeit steht, die durch den dritten Wärmetauscher entlang der Kühlschleife fließt, und wobei die Kühler-Arbeitsflüssigkeit, die entlang der Bottoming-Zyklus-Schleife fließt, der Kühlflüssigkeit, die entlang der Kühlschleife am dritten Wärmetauscher fließt, Wärmeenergie verleiht.

16. Das System nach einem oder mehreren der Ansprüche 9-15, wobei die Kühlschleife eine Kühlschleife aufweist, umfassend:

ein vierter Wärmetauscher, der entlang der Bottoming-Zyklus-Schleife hinter der Pumpe und vor dem kalten Seitenwärmetauscher positioniert ist, wobei der vierte Wärmetauscher entlang der Kühlschleife positioniert ist und wobei das Kühler-Arbeitsmedium, das durch den vierten Wärmetauscher entlang der Bottoming-Zyklus-Schleife fließt, in einem Wärmeaustauschverhältnis mit dem Kühlmedium steht, das durch den vierten Wärmetauscher entlang der Kühlschleife fließt, und wobei das Kühler-Arbeitsmedium, das entlang der Bottoming-Zyklus-Schleife fließt, dem Kühlmedium, das entlang der Kühlschleife am vierten Wärmetauscher fließt, Wärmeenergie verleiht.

17. Das System nach einem der vorhergehenden Ansprüche, bestehend aus:

einem Kompressor (b220), der entlang der Ansaugleitung (b212) des Heizkreises (b210) positioniert ist, wobei der Kompressor (b220) bedienbar ist, um die entlang der Ansaugleitung fließende Flüssigkeit unter Druck zu setzen (b212); und

ein Rekuperator (b222), der hinter dem Kompressor (b220) und vor dem Brenner (b132) entlang der Ansaugleitung (b212) und auch entlang der Wärmerückgewinnungsschleife (b214) des Heizkreises (b210) positioniert ist, der Rekuperator (b222), der zum Vorwärmen von Druckflüssigkeit, die entlang der Ansaugleitung (b212) fließt, bedienbar ist.

18. Das System nach einem der vorhergehenden Ansprüche, bestehend aus:

eine oder mehrere elektrische Maschinen, die mit einer oder mehreren Kolbeneinheiten des Motors mit geschlossenem Kreislauf (b110) zur Erzeugung elektrischer Energie betriebsfähig gekoppelt sind.

19. Das System nach einem der vorhergehenden Ansprüche, wobei die eine oder mehrere Kolbenanordnungen des Motors mit geschlossenem Zyklus (b110) jeweils innerhalb von Kolbenkammern beweglich sind, die durch entsprechende Kolbenkörper (b122) definiert sind, und wobei die Kolbenanordnungen freie Kolben sind.

**Revendications**

1. Un système comprenant:

   un moteur à cycle fermé (b110) définissant un côté chaud (b112) et un côté froid (114);
   une boucle de chauffage (b210) placée au moins en partie dans une relation d'échange de chaleur avec le côté chaud (b112) du moteur à cycle fermé (b110) pour lui transmettre de l'énergie thermique; et
   un échangeur de chaleur côté chaud (b118) placé le long d'une ligne d'admission (b212) de la boucle du réchauffeur (b210);
   dans laquelle la boucle de chauffage (b210) a une boucle de récupération de chaleur (b214) utilisable pour récupérer la chaleur du côté chaud (b112) et restituer la chaleur récupérée au côté chaud (b112), et dans laquelle la boucle de récupération de chaleur (b214) a une boucle de recirculation (b216) en communication fluide avec la ligne d'admission (b212) pour recirculation du fluide de travail chauffant vers l'échangeur de chaleur du côté chaud (b118);
   comprenant en outre:

   une boucle du refroidisseur (b240) placée au moins en partie dans une relation d'échange de chaleur avec le côté froid du moteur à cycle fermé (b110) pour en retirer la chaleur, **caractérisée en ce que** la boucle du refroidisseur (b240) a une boucle du cycle de fond; et
   un dispositif de dilatation placé le long de la boucle du cycle de descente et utilisable pour dilater et extraire l'énergie du fluide de travail du refroidisseur chauffé par la chaleur récupérée du côté froid du moteur à cycle de fermeture (b110).

2. Le système de la revendication 1, qui comprend:
   un récupérateur (b222) placé en amont de l'échangeur de chaleur côté chaud (b118) le long de la ligne d'admission (b212), et dans lequel le récupérateur (b222) est placé le long de la boucle de récupération de chaleur (b214) de la boucle de chauffage (b210), dans lequel le récupérateur (b222) peut préchauffer le fluide sous pression circulant le long de la ligne d'admission (b212).

3. Le système de la revendication 2, dans lequel le fluide de travail de chauffage récupéré de l'échangeur de chaleur du côté chaud (b118) passe par le récupérateur (b222) pour transmettre de l'énergie thermique au fluide sous pression circulant le long de la ligne d'admission (b212) par le récupérateur (b222).

4. Le système de la revendication 3, dans lequel le récupérateur (b222) est placé en aval d'une sortie de l'échangeur de chaleur côté chaud (b118).

5. Le système de toute revendication précédente, dans lequel l'échangeur de chaleur côté chaud (b118) comprend une chambre de combustion (b132), et dans lequel le fluide de travail chauffant comprend des gaz de combustion.

6. Le système de la revendication 5, qui comprend:
   un préchauffeur de combustible placé en aval d'une source de combustible et en amont de la chambre de combustion (b132) le long d'une conduite de combustible et aussi le long de la boucle de récupération de chaleur (b214) en aval de la sortie de l'échangeur de chaleur côté chaud (b118), et dans lequel les gaz de combustion récupérés du côté chaud circulant à travers le préchauffeur de combustible sont positionnés dans une relation d'échange de chaleur avec le combustible circulant à travers le préchauffeur de combustible en aval de la chambre de combustion (b132), et dans lequel les gaz de combustion circulant à travers le préchauffeur de combustible le long de la boucle de récupération de chaleur (b214) transmettent de l'énergie thermique au combustible circulant le long de la conduite de combustible au préchauffeur de combustible.

7. Le système de toute revendication antérieure, comprenant:
   une boucle du refroidisseur placée au moins en partie dans une relation d'échange de chaleur avec le côté froid du moteur à cycle fermé (b110) pour en retirer la chaleur.

8. Le système de la revendication 7, dans lequel la boucle du refroidisseur est positionnée au moins en partie dans une relation d'échange de chaleur avec la boucle du réchauffeur (b210).

9. Le système de la revendication 7 ou 8, dans lequel la boucle du refroidisseur a une boucle du cycle de fond, et dans lequel le système comprend:

une pompe placée le long de la boucle du cycle de basculement, la pompe pouvant être utilisée pour déplacer un fluide de travail du refroidisseur à travers la boucle du cycle de basculement;
un échangeur de chaleur côté froid placé le long de la boucle du cycle de fond en aval de la pompe et dans une relation d'échange de chaleur avec le côté froid du moteur à cycle fermé (b110), dans lequel le fluide de travail du refroidisseur circulant à travers l'échangeur de chaleur côté froid élimine la chaleur du côté froid du moteur à cycle fermé (b110); et
un deuxième échangeur de chaleur placé le long de la boucle du cycle de basculement en aval de l'échangeur de chaleur côté froid, et plus loin dans lequel le deuxième échangeur de chaleur est positionné le long de la boucle de récupération de chaleur (b214).

10. Le système de la revendication 9, dans lequel le fluide de travail de chauffage récupéré du côté chaud circulant à travers le deuxième échangeur de chaleur le long de la boucle de récupération de chaleur (b214) est positionné dans une relation d'échange de chaleur avec le fluide de travail du refroidisseur circulant à travers le deuxième échangeur de chaleur.

11. Le système de revendication 9 ou 10, dans lequel le fluide de travail de chauffage récupéré du côté chaud passant par le deuxième échangeur de chaleur transmet de l'énergie thermique au fluide de travail du refroidisseur passant par le deuxième échangeur de chaleur.

12. Le système d'une ou de plusieurs revendications 9-11, comprenant:
un dispositif de dilatation placé le long de la boucle du cycle de fond en aval du deuxième échangeur de chaleur et en amont de la pompe, dans lequel le dispositif de dilatation est configuré de manière à se dilater et à extraire l'énergie du fluide de travail du refroidisseur pour produire du travail.

13. Le système de la revendication 12, dans lequel le deuxième échangeur de chaleur est placé entre l'échangeur de chaleur côté froid et le dispositif d'expansion le long de la boucle du cycle de fond.

14. Le système d'une ou de plusieurs revendications 12 à 13, comprenant en outre:
une ou plusieurs machines électriques couplées au dispositif d'expansion pour la production d'énergie électrique.

15. Le système de l'une ou plusieurs des revendications 12-14, dans lequel la boucle du refroidisseur a une boucle de refroidissement, le système comprenant:
un troisième échangeur de chaleur placé le long de la boucle du cycle de basculement en aval du dispositif de dilatation et en amont de la pompe, et dans lequel le troisième échangeur de chaleur est placé le long de la boucle de refroidissement, dans lequel le fluide de travail du refroidisseur circulant à travers le troisième échangeur de chaleur le long de la boucle du cycle de basculement est en relation d'échange de chaleur avec le fluide de refroidissement circulant à travers le troisième échangeur de chaleur le long de la boucle de refroidissement, et dans lequel le fluide de travail du refroidisseur circulant le long de la boucle du cycle de basculement transmet de l'énergie thermique au fluide de refroidissement circulant le long de la boucle de refroidissement au troisième échangeur de chaleur.

16. Le système de l'une ou de plusieurs des revendications 9 à 15, dans lequel la boucle du refroidisseur comporte une boucle de refroidissement comprenant:
un quatrième échangeur de chaleur placé le long de la boucle du cycle de basculement en aval de la pompe et en amont de l'échangeur de chaleur côté froid, dans lequel le quatrième échangeur de chaleur est positionné le long de la boucle de refroidissement, et dans lequel le fluide de travail du refroidisseur circulant à travers le quatrième échangeur de chaleur le long de la boucle du cycle de basculement est en relation d'échange de chaleur avec le fluide de refroidissement circulant à travers le quatrième échangeur de chaleur le long de la boucle de refroidissement, et dans lequel le fluide de travail du refroidisseur circulant le long de la boucle du cycle de basculement transmet de l'énergie thermique au fluide de refroidissement circulant le long de la boucle de refroidissement du quatrième échangeur de chaleur.

17. Le système de toute revendication antérieure, comprenant:

un compresseur (b220) placé le long de la conduite d'admission (b212) de la boucle du réchauffeur (b210), le compresseur (b220) pouvant pressuriser le fluide circulant le long de la conduite d'admission (b212); et

un récupérateur (b222) placé en aval du compresseur (b220) et en amont du brûleur (b132) le long de la conduite d'admission (b212) et également positionné le long de la boucle de récupération de chaleur (b214) de la boucle de chauffage (b210), le récupérateur (b222) pouvant préchauffer le fluide sous pression circulant le long de la conduite d'admission (b212).

18. Le système de toute revendication antérieure, comprenant:
une ou plusieurs machines électriques couplées en fonctionnement à un ou plusieurs ensembles de pistons du moteur à cycle fermé (b110) pour produire de l'énergie électrique.

19. Le système de toute revendication précédente, dans lequel un ou plusieurs assemblages de pistons du moteur à cycle fermé (b110) sont chacun mobiles dans des chambres de piston définies par les corps de piston respectifs (b122), et dans lequel les assemblages de pistons sont des pistons libres.

FIG. 1.1.2

FIG. 1.1.1

*FIG. 1.1.3*

**FIG. 1.1.4**

Table ES-1  Nominal Heat Balances of Prime-Movers as a Percentage of Fuel Input

| Engine Type | Work | Recoverable Heat | Rejected Heat |
|---|---|---|---|
| Diesel | 36 | 43 | 21 |
| Adiabatic Turbo-compound Diesel | 47 | 36 | 17 |
| Gas Turbine (Simple) | 25 | 43 | 30 |
| Gas Turbine (Regenerative) | 38 | 22 | 40 |
| Stirling (Current) | 34 | 54 | 12 |

# FIG. 1.1.5

EP 3 973 161 B1

SYSTEM A10

FUEL

SYSTEM LEVEL EFFICIENCY

ENGINE LEVEL EFFICIENCY

FUEL SOURCE

OXIDIZER SOURCE

OXIDIZER

HEATER BODY C100

HEATING WORKING FLUID

Hot Side Heat Exchanger C108

ENGINE A100

LOAD DEVICE C092

ENGINE WORKING FLUID

Cold Side Heat Exchanger A42

CHILLER WORKING FLUID

CHILLER ASSEMBLY A40

Compressor

Expander

COOLING WORKING FLUID

COOLING FLUID SOURCE

Heat Exchanger

# FIG. 1.2.1

*FIG. 1.3.1*

FIG. 1.3.2

FIG. 1.4.1

FIG. 1.4.2

FIG. 1.4.3

EP 3 973 161 B1

FIG. 1.4.4

*FIG. 1.4.5*

*FIG. 1.4.6*

FIG. 1.4.7

FIG. 1.4.8

EP 3 973 161 B1

FIG. 1.5.1

FIG. 1.7.1

FIG. 1.7.2

FIG. 1.7.3

EP 3 973 161 B1

FIG. 1.7.4

FIG. 1.7.5

FIG. 1.7.6

EP 3 973 161 B1

FIG. 1.7.7

EP 3 973 161 B1

FIG. 1.7.8

**FIG. 2.1.1**

**FIG. 2.1.2**

FIG. 2.1.3

**FIG. 2.1.4**

EP 3 973 161 B1

FIG. 2.1.5

FIG. 2.1.6

EP 3 973 161 B1

*FIG. 2.1.7*

**FIG. 2.1.8**

FIG. 2.1.9

FIG. 2.1.10

EP 3 973 161 B1

FIG. 2.1.11

EP 3 973 161 B1

FIG. 2.1.12

FIG. 2.1.13

EP 3 973 161 B1

FIG. 2.1.14

EP 3 973 161 B1

FIG. 2.1.15

*FIG. 2.1.16*

FIG. 2.1.17

EP 3 973 161 B1

FIG. 2.1.18

FIG. 2.1.19

EP 3 973 161 B1

**FIG. 2.1.20**

FIG. 2.1.21

FIG. 2.1.22

**FIG. 2.1.23**

EP 3 973 161 B1

104

**FIG. 2.1.24**

FIG. 2.1.25

FIG. 2.1.26

**FIG. 2.1.27**

b458

b400

b280

Air

b454

b456

b452

Preheated Air

b114

b110

b112

b412

Combustion Gases

b460

Combustion Gases

b450

Preheated Air

b408

b444

b446

b448

Heated Air

b442

b438

W

b436

E

b402

Synthesized Gas

b420

b422

b426

b424

Heated Air

Heated Air

b428

b434

b440

b432

F

b430

Exhausted Combustion Gases

COMPUTING SYSTEM b2000

COMPUTING DEVICE(S) b2002

PROCESSOR(S) b2004

MEMORY b2006

INSTRUCTIONS b2008

DATA b2010

COMMUNICATIONS INTERFACE b2012

## FIG. 5.1.28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015034544 A
- JP H07145755 A
- US 2013269334 A1
- JP 2009115065 A